# EUROPEAN PATENT APPLICATION

(11) **EP 1 862 328 A1**
(43) Date of publication of application: **05.12.2007**
(21) Application number: 06729799.4
(22) Date of filing: 23.03.2006
(51) Int. Cl.: B41M 5/26

(54) **OPTICAL INFORMATION RECORDING MEDIUM**

(30) Priority: 24.03.2005 JP 2005086593
(71) Applicant: FUJIFILM CORPORATION, Minato-ku Tokyo 106-8620 (JP)
(72) Inventor: WATANABE, Kousuke c/o FUJIFILM Corporation, Kanagawa (JP); WATANABE, Tetsuya c/o FUJIFILM Corporation, Kanagawa (JP); TAKAHASHI, Keita c/o FUJIFILM Corporation, Kanagawa (JP); KATAYAMA, Kazutoshi c/o FUJIFILM Corporation, Kanagawa (JP); OBARA, Chisato c/o FUJIFILM Corporation, Kanagawa (JP)
(74) Representative: HOFFMANN EITLE
(86) International application number: PCT/JP2006/305851
(87) International publication number: WO 2006/101177

(57) **Abstract**

The invention provides an optical information recording medium having a recording layer capable of recording information by irradiating the recording layer with a laser beam of 440 nm or less.

In the optical information recording medium, the recording layer contains an oxonol dye represented by formula (1), and a counter cation (Y^{t+}) of this dye is a cationic dye having an absorption maximum in a range of longer wavelengths than an absorption maximum of an anionic part of the oxonol dye.

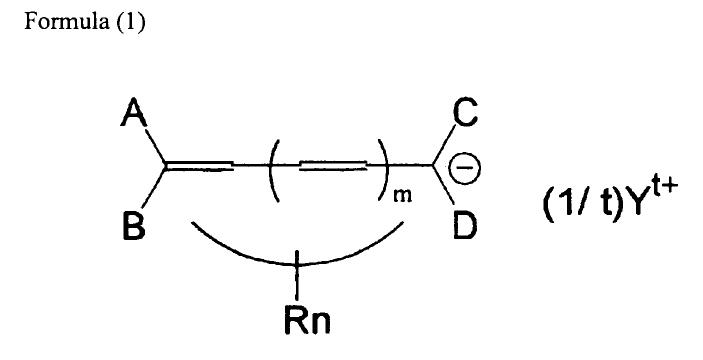

In the formula, A, B, C and D each represents an electron-withdrawing group. A and B or C and D may be combined with each other to form a ring. If these are not combined with each other, these are electron-withdrawing groups in which the sum of Hammett's σp values of A and B and the sum of Hammett's σp values of C and D are each greater than 0.6. R represents a substituent group on methine carbon, and m represents an integer of 0 to 1. n represents an integer of 0 to 2m+1. If n is 2 or greater, a plurality of R's may be different from each other, and R and R may be combined together to form a ring. Y^{t+} represents a t-valent cation, and t represents an integer of 1 to 4.

## Description

### TECHNICAL FIELD

The present invention relates to an optical information recording medium capable of recording and reproducing information with laser beams, relates to an optical information recording method, and relates to new compounds suitable therefor. In particular, the present invention relates to a heat-mode type optical information recording medium suitable to record information by use of short-wavelength laser beams having wavelengths shorter than 440 nanometers.

### BACKGROUND ART

An optical information recording medium (i.e., optical disk) capable of recording information only once by use of laser beams is conventionally known. This optical disk is also called a write-once read-many CD (so-called CD-R). A typical structure of the CD-R is formed of a transparent disk-like substrate, a recording layer containing a methine dye disposed on the substrate, a light-reflecting layer made of metal, such as gold, and a protective layer made of resin, which are laminated in this order. Recording of information on the CD-R is performed by irradiating the CD-R with near infrared laser beams (in general, laser beams having wavelengths near 780 nm). The temperature of the irradiated part of the recording layer is locally increased by absorbing the laser beams, and physical or chemical changes are caused (e.g., formation of pits) to alter the optical characteristics of the recording layer, thus recording information. On the other hand, readout (reproduction) of information is also performed by the irradiation of laser beams of the same wavelength as used for recording. Information is reproduced by detecting a difference in the reflectance between the part (recorded part) where the optical characteristics of the recording layer have been altered and the part (non-recorded part) where the optical characteristics thereof have not been altered.

In recent years, networks, such as Internet, and high vision TV have spread rapidly. Further, broadcasting of HDTV (High Definition Television) is near at hand, so that the demands for recording media of high capacity for inexpensively and simply recording image information are increasing. Although the above-mentioned CD-R and a DVD-R, which enables high-density recording by use of visible laser beams (630 nm to 680 nm) as laser beams for recording, have secured their positions as high capacity recording media to some degree, it cannot be said that the CD-R and the DVD-R have sufficiently great recording capacity capable of coping with the demands in the future. Accordingly, the development of optical disks having higher recording capacity has been advanced by the improvement of recording density with laser beams of shorter wavelengths than the DVD-R. For example, an optical recording disk called a "Blue-ray" disk using a blue laser beam of 405 nm has been put on the market.

Japanese Published Unexamined Patent Application No. 2002-52825 (Patent Document 1) can be mentioned as a related conventional technique. This document describes an embodiment in which an indoaniline chelate-metal complex and an oxonol dye are mixed together and used in a weight-to-weight ratio of 1:10.

### DISCLOSURE OF INVENTION

### PROBLEMS TO BE SOLVED BY THE INVENTION

In Patent Document 1 mentioned above, the indoaniline chelate-metal complex functions as an anti-fading agent (i.e., discoloration inhibitor). In general, an anti-fading agent used for a dye-containing recording layer is small in quantity as in Patent Document 1.

For an experiment, many kinds of dye compounds and anti-fading agents have been combined together. However, an optical information recording medium having adequate recording characteristics, light resistance, and reproduction durability has not yet been achieved.

It is an object of the present invention to provide an information recording medium for blue laser beams that has light resistance, reproduction durability, and solubility improved without impairing recording/reproducing characteristics, and provide an information recording method using this.

### MEANS FOR SOLVING THE PROBLEMS

The present inventor has diligently continued research, and, contrary to the conventional technical wisdom, has attempted to increase the anti-fading-agent content of a recording layer. As a result, the present inventor has employed the structure of the present invention described later so as to solve the problems.

The object of the present invention is advantageously achieved by employing the following structures.
[1] An optical information recording medium having a recording layer capable of recording information by irradiating the recording layer disposed on a substrate with a laser beam of 440 nm or less,
   wherein the recording layer comprises an oxonol dye represented by the following formula (1) and a dye other than the oxonol dye represented by formula (1), and a content of the oxonol dye represented by formula (I) is 30% or more by mass based on the total mass of the recording layer: 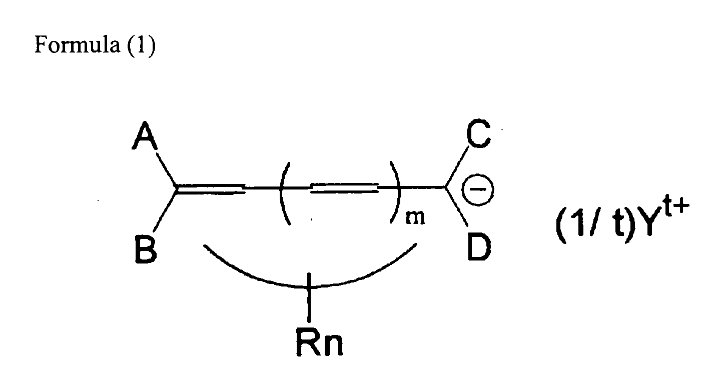 wherein Y^{t+} represents a t-valent cationic dye having an absorption maximum in a range of longer wavelengths than an absorption maximum of an anionic part of the oxonol dye;
   t represents an integer of 1 to 4;
   A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
   R represents a substituent group on a methine carbon;
   m represents an integer of 0 to 1; and
   n represents an integer of 0 to 2m+1, when n is 2 or greater, a plurality of R's may be the same or different from each other, and the plurality of R's may be combined together to form a ring.
[2] The optical information recording medium as described in [1],
   wherein the content of the oxonol dye represented by formula (1) is 70% or more by mass based on the total mass of the recording layer.
[3] The optical information recording medium as described in [1] or [2],
   wherein the dye other than the oxonol dye represented by formula (1) is an oxonol dye.
   The content of the oxonol dye is based on the total mass of the recording layer that is 100% by mass. In most cases, to set the mixture amount of the oxonol dye represented by formula (1) at 30% by mass, it is recommended to mix the oxonol dye represented by formula (1) and a dye other than the oxonol dye represented by formula (1) in the mass ratio of 30:70 so as to prepare a dye application liquid.
[4] An optical information recording medium having a recording layer capable of recording information by irradiating the recording layer disposed on a substrate with a laser beam of 440 nm or less,
   wherein the recording layer is substantially made of an oxonol dye represented by formula (1'): 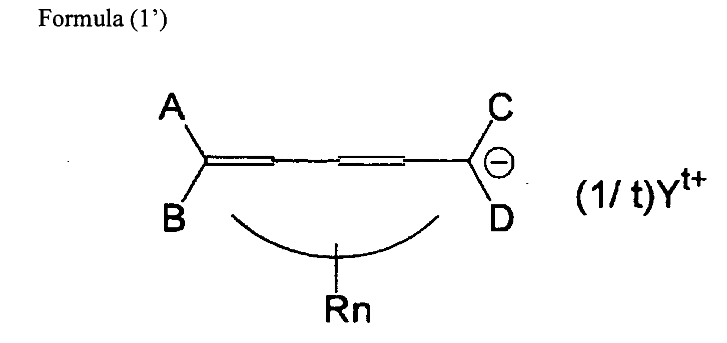 wherein Y^{t+} represents a t-valent cationic dye having an absorption maximum in a range of longer wavelengths than an absorption maximum of an anionic part of the oxonol dye;
   t represents an integer of 1 to 4;
   A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
   R represents a substituent group on a methine carbon; and
   n represents an integer of 0 to 3, when n is 2 or greater, a plurality of R's may be the same or different from each other, and the plurality of R's may be combined together to form a ring.
[5] An optical information recording medium having a recording layer capable of recording information by irradiating the recording layer disposed on a substrate with a laser beam of 440 nm or less,
   wherein the recording layer comprises an oxonol dye represented by formula (1): 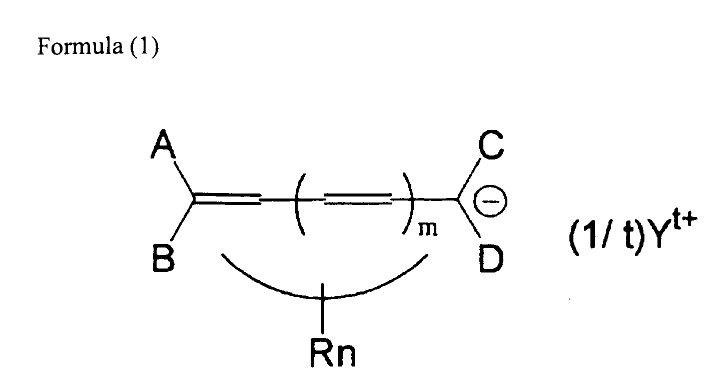 wherein Y^{t+} represents a t-valent cationic dye having an absorption maximum in a range of longer wavelengths than an absorption maximum of an anionic part of the oxonol dye;
   t represents an integer of 1 to 4;
   A, B, C, and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
   R represents a substituent group on a methine carbon;
   m represents an integer of 0 to 1; and
   n represents an integer of 0 to 2m+1, when n is 2 or greater, a plurality of R's may be the same or different from each other, and the plurality of R's may be combined with each other to form a ring.
[6] An optical information recording medium having a recording layer capable of recording information by irradiating the recording layer disposed on a substrate with a laser beam of 440 nm or less,
   wherein the recording layer comprises an oxonol dye represented by formula (1), provided that an oxonol dye outside the scope of formula (1) does not coexist in the recording layer: 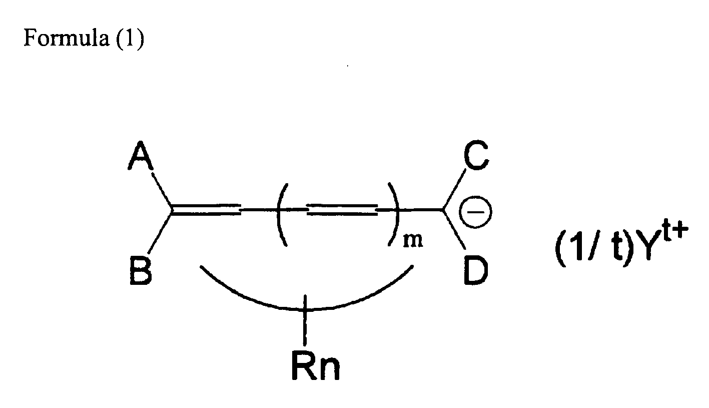 wherein Y^{t+} represents a t-valent cationic dye having an absorption maximum in a range of longer wavelengths than an absorption maximum of an anionic part of the oxonol dye;
   t represents an integer of 1 to 4;
   A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
   R represents a substituent group on a methine carbon;
   m represents an integer of 0 to 1; and
   n represents an integer of 0 to 2m+1, when n is 2 or greater, a plurality of R's may be the same or different from each other, and the plurality of R's may be combined together to form a ring.
[7] The optical information recording medium as described in any of [1] to [6],
   wherein at least one ring is formed by A and B and by C and D in formula (1) or (1'), and the ring formed by combining A and B together and the ring formed by combining C and D together do not simultaneously have the following partial structures (Z-1) and (Z-2). 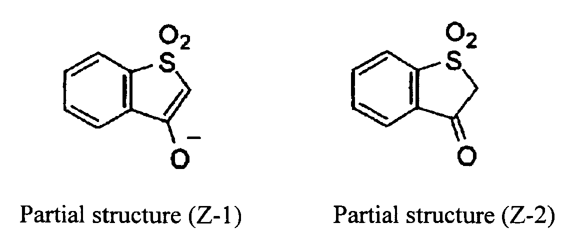
[8] The optical information recording medium as described in any of [1] to [3],
   wherein in formula (1) or (1'), a ring formed by combining A and B together is represented by any of the following partial structures (Z-3) to (Z-8), or a ring formed by combining C and D together is represented by any of the following partial structures (Z-9) to (Z-14): 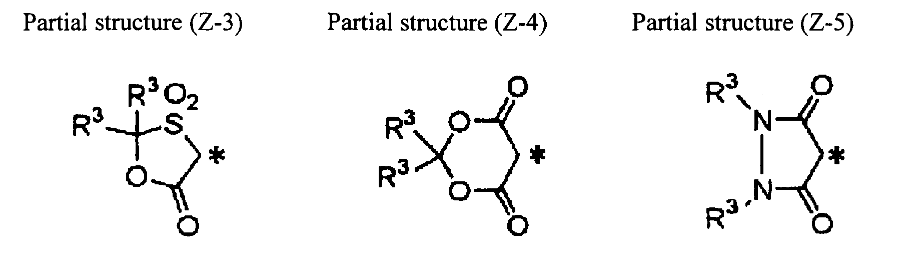 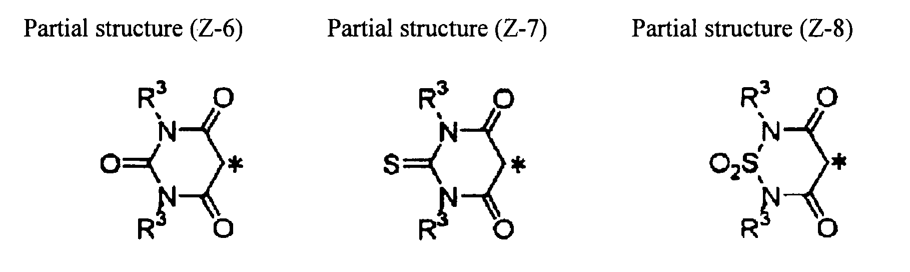 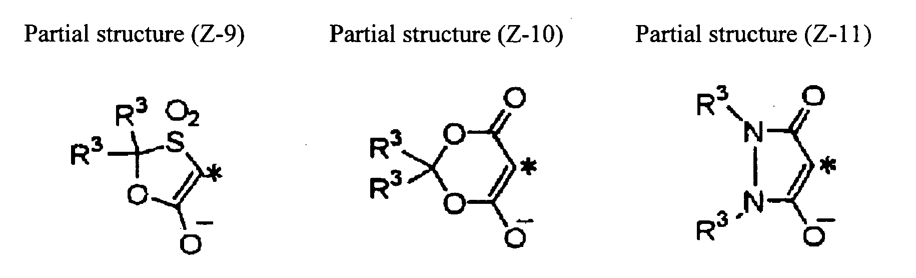 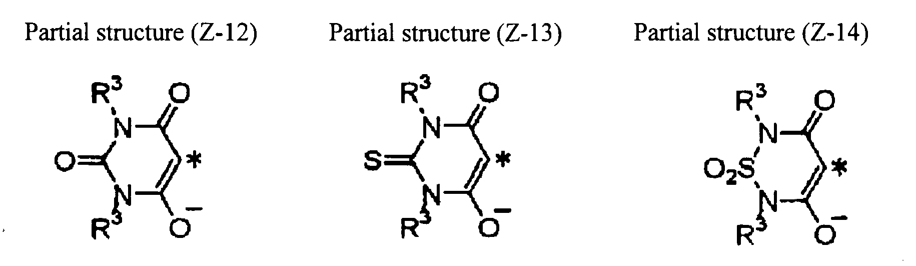 wherein in the partial structures, * represents a combined position; and
   R³ represents a hydrogen atom or a substituent group, and a plurality of R³'s may be the same or different from each other, and the plurality of R³'s may be linked together through a linking group.
[9] The optical information recording medium as described in any of [1] to [3] and [5] to [8],
   wherein m of the oxonol dye is 1.
[10] The optical information recording medium as described in any of [1] to [9],
   wherein the absorption maximum of the anionic part of the oxonol dye is longer in wavelength than a laser beam used for recording.
[11] The optical information recording medium as described in any of [1] to [10],
   wherein the absorption maximum of the anionic part of the oxonol dye ranges from 415 nm to 500 nm.
[12] The optical information recording medium as described in any of [1] to [11],
   wherein the counter cation Y^{t+} is a metal complex cation.
[13] The optical information recording medium as described in any of [1] to [12],
   wherein the counter cation Y^{t+} is a cation of a metal complex represented by any of formula (2) to formula (5): 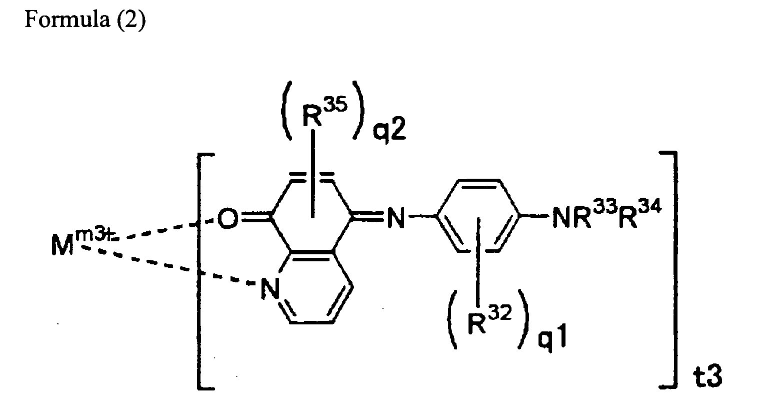 wherein M^{m3+} represents an m3-valent metal cation that is combined with a nitrogen atom and an oxygen atom;
   R³² and R³⁵ each independently represents a substituent group;
   R³³ and R³⁴ each independently represents a hydrogen atom, a substituted or unsubstituted alkyl group, a substituted or unsubstituted aryl group, or a substituted or unsubstituted heterocyclic group;
   m3 represents an integer of 1 to 3;
   q 1 represents an integer of 0 to 4;
   q2 represents an integer of 0 to 2; and
   t3 represents an integer of 1 to 3,
   when q1 is 2 or greater, two or more R³²'s may be the same or different from each other, and R³² and R³², or R³³ and R³⁴, or R³² and R³³, or R³² and R³⁴ may be combined with each other to form a ring, and
   when q2 is 2, R³⁵ and R³⁵ may be the same or different from each other, and may be combined with each other to form a ring: 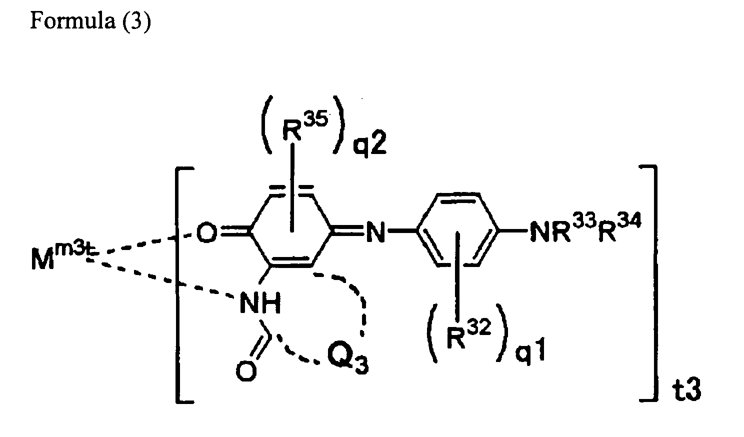 wherein M^{m3+} represents an m3-valent metal cation that is combined with a nitrogen atom and/or an oxygen atom;
   R³² and R³⁵ each independently represents a substituent group;
   R³³ and R³⁴ each independently represents a hydrogen atom, a substituted or unsubstituted alkyl group, a substituted or unsubstituted aryl group, or a substituted or unsubstituted heterocyclic group;
   Q₃ represents a group that forms a nitrogen-containing heterocyclic ring;
   m3 represents an integer of 1 to 3;
   q1 represents an integer of 0 to 4;
   q2 represents an integer of 0 to 2; and
   t3 represents an integer of 1 to 3,
   when q 1 is 2 or greater, two or more R³²'s may be the same or different from each other, and R³² and R³², or R³³ and R³⁴, or R³² and R³³, or R³² and R³⁴ may be combined with each other to form a ring, and
   when q2 is 2, R³⁵ and R³⁵ may be the same or different from each other, and may be combined with each other to form a ring: 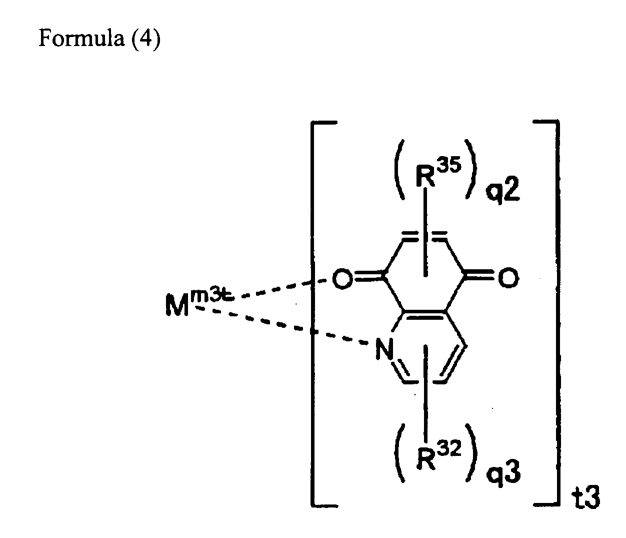
   wherein M^{m3+} represents an m3-valent metal cation that is combined with a nitrogen atom and an oxygen atom;
   R³² and R³⁵ each independently represents a substituent group;
   m3 represents an integer of 1 to 3;
   q2 represents an integer of 0 to 2;
   q3 represents an integer of 0 to 3; and
   t3 represents an integer of 1 to 3,
   when q2 is 2, R³⁵ and R³⁵ may be the same or different from each other, and may be combined with each other to form a ring, and
   when q3 is 2 or greater, two or more R³²'s may be the same or different from each other, and R³² and R³² may be combined together to form a ring: 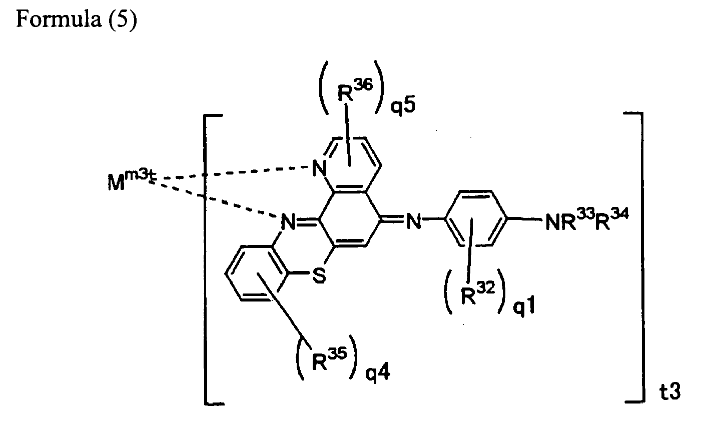
   wherein M^{m3+} represents an m3-valent metal cation that is combined with a nitrogen atom;
   R³², R³⁵, and R³⁶ each independently represents a substituent group;
   m3 represents an integer of 1 to 3;
   q 1 represents an integer of 0 to 4;
   q4 represents an integer of 0 to 4;
   q5 represents an integer of 0 to 3; and
   t3 represents an integer of 1 to 3,
   when q1 is 2 or greater, two or more R³²'s may be the same or different from each other, and R³² and R³² may be combined together to form a ring,
   when q4 is 2 or greater, two or more R³⁵'s may be the same or different from each other, and R³⁵ and R³⁵ may be combined together to form a ring, and
   when q5 is 2 or greater, two or more R³⁶'s may be the same or different from each other, and R³⁶ and R³⁶ may be combined together to form a ring.
[14] The optical information recording medium as described in [13],
   wherein the counter cation Y^{t+} is a metal complex cation represented by formula (2) of [13].
[15] The optical information recording medium as described in [13],
   wherein the counter cation Y^{t+} is a metal complex cation represented by formula (3) of [13].
[16] The optical information recording medium as described in [13],
   wherein the counter cation Y^{t+} is a metal complex cation represented by either formula (4) or formula (5) of [13].
[17] The optical information recording medium as described in [13],
   wherein the counter cation Y^{t+} is a metal complex cation represented by formula (4) of [13].
[18] The optical information recording medium as described in [13],
   wherein the counter cation Y^{t+} is a metal complex cation represented by formula (5) of [13].
[19] The optical information recording medium as described in any of [12] to [18],
   wherein the counter cation Y^{t+} is a metal complex cation, and the metal in the metal complex cation is any of Cu, Ni, Fe, Co, and Mn.
[20] The optical information recording medium as described in any of [1] to [19],
   wherein a maximum absorption peak λmax of the cationic dye having a film absorption maximum wavelength in a range of longer wavelengths than a film absorption maximum wavelength of the anionic part of the oxonol dye is expressed as 500nm ≤ λmax.
[21] An optical information recording medium having a recording layer capable of recording information by irradiating the recording layer disposed on a substrate with a laser beam of 440 nm or less,
   wherein the recording layer comprises an oxonol dye represented by the following formula (8), provided that an oxonol dye outside the scope of formula (8) does not coexist in the recording layer: 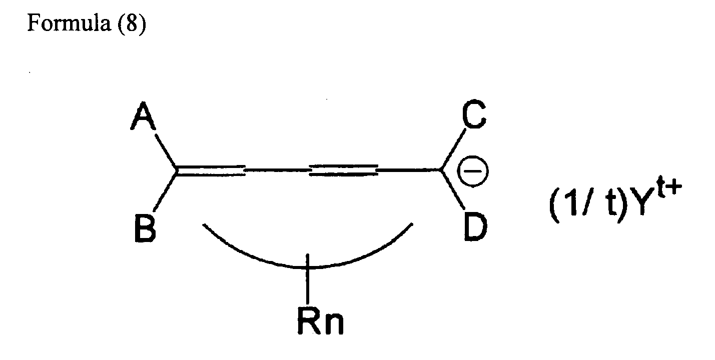 wherein an absorption maximum of an anionic part ranges from 415 nm to 500 nm;
   Y^{t+} is a t-valent metal complex cation of any of metals Cu, Ni, Fe, Co, and Mn, and a maximum absorption peak λmax of Y^{t+} is expressed as 500nm ≤ λmax;
   t represents an integer of 1 to 4;
   A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
   R represents a substituent group on a methine carbon; and
   n represents an integer of 0 to 3, when n is 2 or greater, a plurality of R's may be the same or different from each other, and the plurality of R's may be combined together to form a ring; and
   t is an integer of 1 to 4.
[22] An optical information recording medium having a recording layer capable of recording information by irradiating the recording layer disposed on a substrate with a laser beam of 440 nm or less,
   wherein the recording layer comprises an oxonol dye represented by the following formula (9), provided that an oxonol dye outside the scope of formula (9) does not coexist in the recording layer: 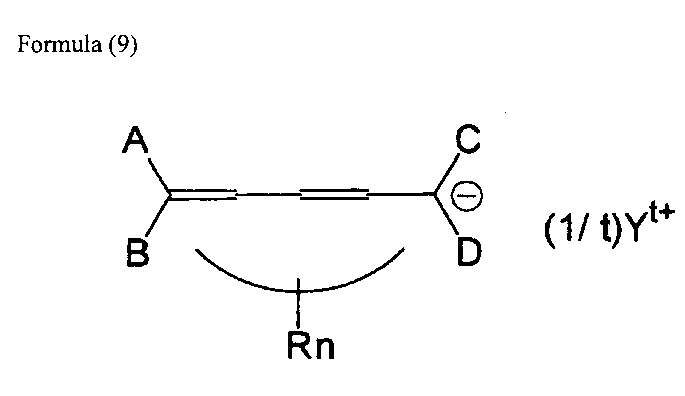 wherein an absorption maximum of an anionic part ranges from 415 nm to 500 nm;
   Y^{t+} is a t-valent metal complex cation of any of metals Cu, Ni, Fe, Co, and Mn, and a maximum absorption peak λmax of Y^{t+} is expressed as 500nm ≤λmax;
   t represents an integer of 1 to 4;
   A, B, C and D each represents an electron-withdrawing group, provided that A and B and/or C and D may be combined with each other to form a ring, and have at least one ring, and when A and B and C and D are not combined with each other, A and B and C and D are electron-withdrawing groups in which the sum of Hammett's σp values of A and B and the sum of Hammett's σp values of C and D are each greater than 0.6, and the ring formed by combining A and B together is represented by any of the following partial structures (Z-3) to (Z-8), or the ring formed by combining C and D together is represented by any of the following partial structures (Z-9) to (Z-14);
   R represents a substituent group on a methine carbon; and
   n represents an integer of 0 to 3, when n is 2 or greater, a plurality of R's may be the same or different from each other, and the plurality of R's may be combined with each other to form a ring: 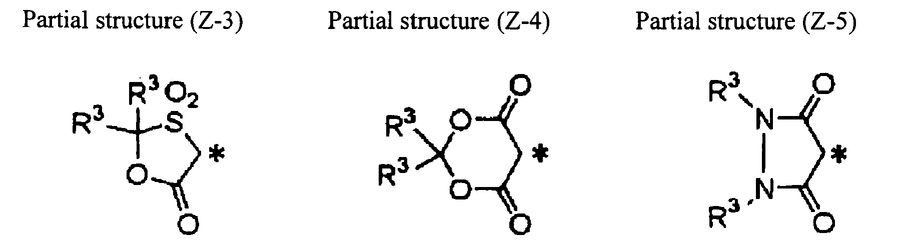 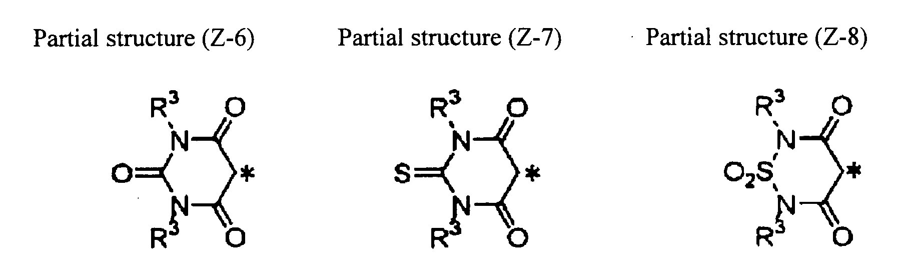 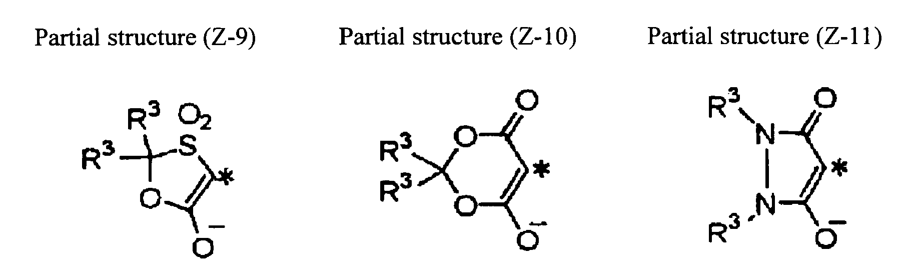 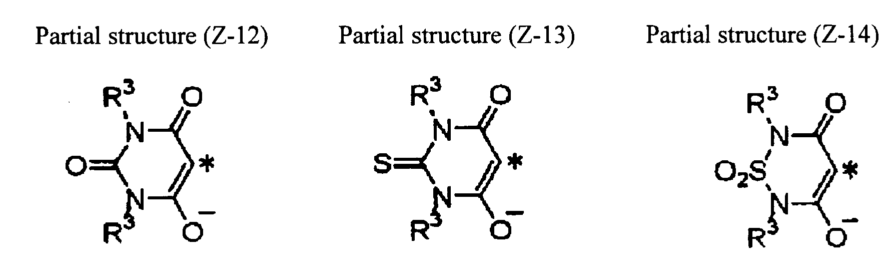
   wherein R³ represents a hydrogen atom or a substituent group, and a plurality of R³'s may be the same or different from each other, and the plurality of R³'s may be linked together through a linking group.
[23] An optical information recording medium having a recording layer capable of recording information by irradiating the recording layer disposed on a substrate with a laser beam of 440 nm or less,
   wherein the recording layer comprises a metal complex comprising a metal complex cation represented by either formula (10) or formula (11), provided that an anion serving as a pair to the metal complex is not necessarily required to be an oxonol dye anion: 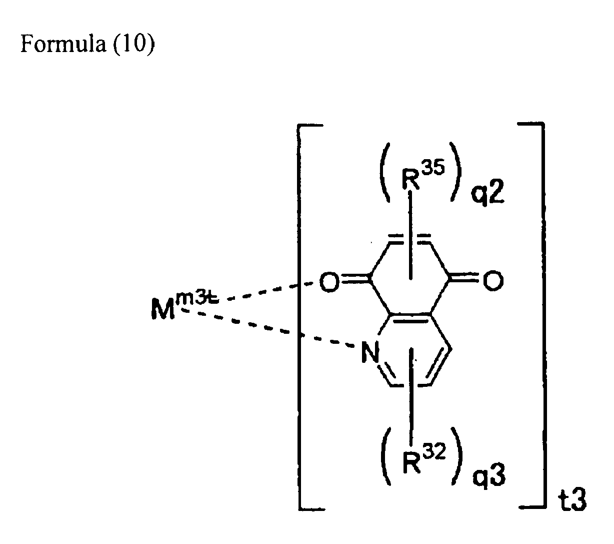 wherein M^{m3+} represents an m3-valent metal cation that is combined with a nitrogen atom and an oxygen atom;
   R³² and R³⁵ each independently represents a substituent group;
   m3 represents an integer of 1 to 3;
   q2 represents an integer of 0 to 2;
   q3 represents an integer of 0 to 3; and
   t3 represents an integer of 1 to 3,
   when q2 is 2, two or more R³⁵'s may be the same or different from each other, and R³⁵ and R³⁵ may be combined together to form a ring, and
   when q3 is 2 or greater, two or more R³²'s may be the same or different from each other, and R³² and R³² may be combined together to form a ring: 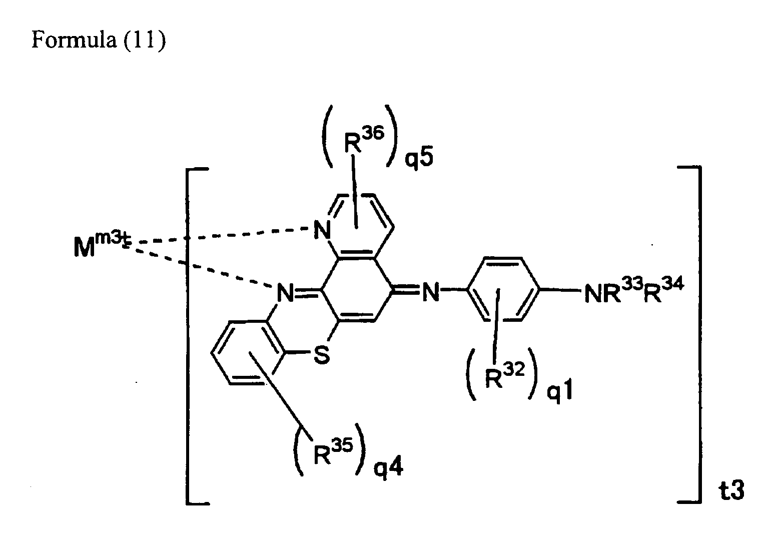
   wherein M^{m3+} represents an m3-valent metal cation that is combined with a nitrogen atom;
   R³², R³⁵ and R³⁶ each independently represents a substituent group;
   m3 represents an integer of 1 to 3;
   q 1 represents an integer of 0 to 4;
   q4 represents an integer of 0 to 4;
   q5 represents an integer of 0 to 3; and
   t3 represents an integer of 1 to 3,
   when q 1 is 2 or greater, two or more R³²'s may be the same or different from each other, and R³² and R³² may be combined together to form a ring,
   when q4 is 2 or greater, two or more R³⁵'s may be the same or different from each other, and R³⁵ and R³⁵ may be combined together to form a ring, and
   when q5 is 2 or greater, two or more R³⁶'s may be the same or different from each other, and R³⁶ and R³⁶ may be combined together to form a ring.
[24] The optical information recording medium as described in any of [1] to [23], which comprises a dye having an absorption maximum in a range of longer wavelengths than an absorption maximum of the anionic part of the oxonol dye, besides the counter cation Y^{t+}.
[25] The optical information recording medium as described in any of [1] to [23], which comprises a metal complex, besides the counter cation Y^{t+}.
[26] The optical information recording medium as described in [25],
   wherein a metal complex differing from the counter cation Y^{t+} is a metal complex having a molar extinction coefficient (ε) of 1,000dm³mol⁻¹cm⁻¹ or less in a wavelength range of 350 nm to 1300 nm.
[27] The optical information recording medium as described in any of [1] to [25], which comprises a metal complex dye having an absorption maximum in a range of longer wavelengths than an absorption maximum of the anionic part of the oxonol dye, besides the counter cation Y^{t+}.
[28] The optical information recording medium as described in [27],
   wherein the metal complex dye differing from the counter cation Y^{t+} is any of a formazan complex, a salicylaldehyde complex, an azo complex, and the one having the metal complex cation represented by formula (2) to formula (5).
[29] The optical information recording medium as described in any of [1] to [28],
   wherein the anionic part of the oxonol dye represented by formula (1) is represented by formula (6): 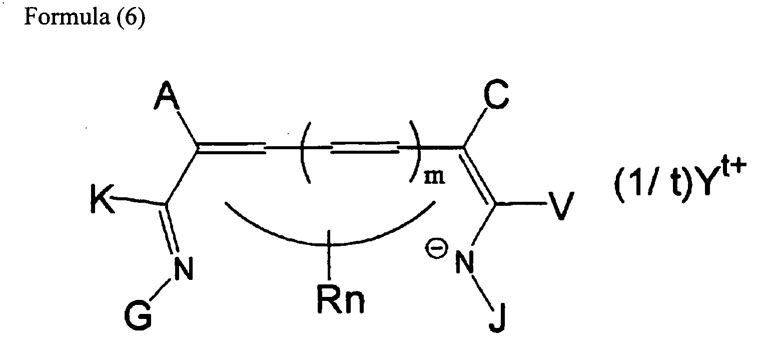 wherein A and C each represents an electron-withdrawing group;
   G, J, K, and V each represents a substituent group, provided that A, G, and K and/or C, J, and V may be combined together to form a condensed ring;
   R represents a substituent group on a methine carbon;
   m represents an integer of 0 to 1;
   n represents an integer of 0 to 2m+1, when n is 2 or greater, a plurality of R's may be the same or different from each other, and R and R may be combined together to form a ring;
   Y^{t+} represents a t-valent cation; and
   t represents an integer of 1 to 4.
[30] The optical information recording medium as described in any of [1] to [29], which has a light-reflecting layer made of metal, besides the recording layer.
[31] The optical information recording medium as described in any of [1] to [30], which has a protective layer, besides the recording layer.
[32] The optical information recording medium as described in any of [1] to [31],
   wherein the substrate is a transparent, disk-like substrate having a surface provided with a pre-groove having a track pitch of 0.2 µm to 0.5 µm, and the recording layer is provided on the surface of a side on which the pre-groove is formed.

### EFFECTS OF THE INVENTION

Since specific compounds of the present invention are used for a recording layer, it is possible to obtain an information recording medium that is capable of recording information by irradiating the recording layer disposed on a substrate with a laser beam of 440 nm or less and that is capable of maintaining high light resistance and high reproduction durability even after having finished recording without impairing recording/reproducing characteristics. Additionally, since a counter cation having a photofading-prevention effect is a counter ion of an oxonol dye in specific compounds of the present invention, recyclability and production advantages are achieved.

According to [4] mentioned above, the dye can be used singly, and hence excellent recyclability can be achieved. In more detail, generally, a dye-containing recording layer is formed by using an application liquid in an optical-disk production process. If compounds dispersed from a substrate outwardly are repeatedly re-collected and re-applied onto the substrate, a change will occur in the mass ratio between an oxonol dye and a metal complex. Therefore, disadvantageously, there is a fear that the change will affect recording characteristics and light resistance, thus causing a production disadvantage (problem of recyclability). However, according to the structure of [4], advantageously, such a problem does not arise.

### BEST MODE FOR CARRYING OUT THE INVENTION

The present invention is an optical information recording medium having a recording layer capable of recording information by irradiating the recording layer disposed on a substrate with a laser beam of 440 nm or less.

In the present invention, the term "absorption maximum" denotes a maximum wavelength in a film absorption spectrum of a compound. In the present invention, 2,2,3,3-tetrafluoro-1-propanol was used as a solvent. A dye-containing liquid obtained by dissolution was applied to a substrate, and was dried. Thereafter, a film-absorption spectrum of a film formed by applying and drying the liquid was measured with UV-3100PC (manufactured by Shimadzu Corporation). The absorption maximum of an anionic part of an oxonol dye is the same as the absorption maximum of an oxonol dye allowed to have a cation (e.g., Et₃N⁺H) having no absorption as a counter cation. In other words, a cationic dye having an absorption maximum in a range of longer wavelengths than an absorption maximum of an anionic part of an oxonol dye denotes a cationic dye having an absorption maximum on the side of longer wavelengths than an absorption-maximum wavelength of an oxonol dye (e.g., compound (23) mentioned below) allowed to have a cation (e.g., Et₃N⁺H) having no absorption as a counter cation.

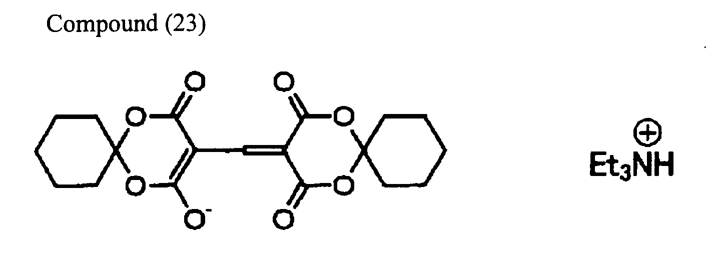

In [1], which is a first aspect of the present invention and states "the optical information recording medium characterized in that the recording layer contains an oxonol dye represented by the following formula (1) and a dye other than the oxonol dye represented by formula (1), and a content of the oxonol dye represented by formula (1) is 30% or more by mass based on the total mass of the recording layer," the content of the oxonol dye represented by formula (1) is preferably 70% or more, more preferably 90% or more, and most preferably 100% by mass based on the total mass of the recording layer.

Preferably, the dye other than the oxonol dye represented by formula (1) is an oxonol dye.

The content of the oxonol dye is calculated on the condition that the total mass of the recording layer is 100% by mass. For example, normally, to set the mixture amount of the oxonol dye represented by formula (1) at 30% by mass, it is recommended to mix the oxonol dye represented by formula (1) and a dye other than the oxonol dye represented by formula (1) in the mass ratio of 30:70 so as to prepare a dye application liquid.

In [4], which is a fourth aspect of the present invention and states "the optical information recording medium characterized in that the recording layer is substantially made of an oxonol dye represented by formula (1')," the content of the oxonol dye represented by formula (1') is preferably 70% or more, more preferably 90% or more, even more preferably 95% or more, most preferably 100% by mass. In this case, preferably, the dye other than the oxonol dye represented by formula (1') is an oxonol dye.

The oxonol dye will be described. In the present invention, the oxonol dye is defined as a polymethine dye having an anionic chromogenic group. This is represented by the following formula (1), being superior in recording characteristics.

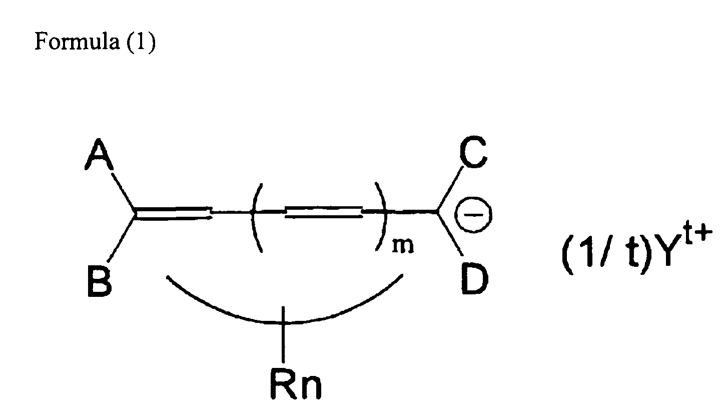

[In the formula, A, B, C, and D each represents an electron-withdrawing group. A and B and/or C and D may be combined with each other to form a ring. If these are not combined with each other, these are electron-withdrawing groups in which the sum of Hammett's σp values of A and B and the sum of Hammett's σp values of C and D are each greater than 0.6. R represents a substituent group on methine carbon. m represents an integer of 0 to 1. n represents an integer of 0 to 2m+1. If n is 2 or greater, a plurality of Rs may be the same as each other or may be different from each other, and may be combined with each other to form a ring. Y^{t+} represents a t-valent cation. t represents an integer of 1 to 4.]

Formula (1) includes a plurality of tautomers by a notational difference in the localized position of an anion. In particular, if any one of A, B, C, and D is "-CO-E" (where E is a substituent group), it is common to represent this in such a way as to localize a negative charge on an oxygen atom. For example, if D is "-CO-E," formula (7) mentioned below is a common representation, which is included in formula (1).

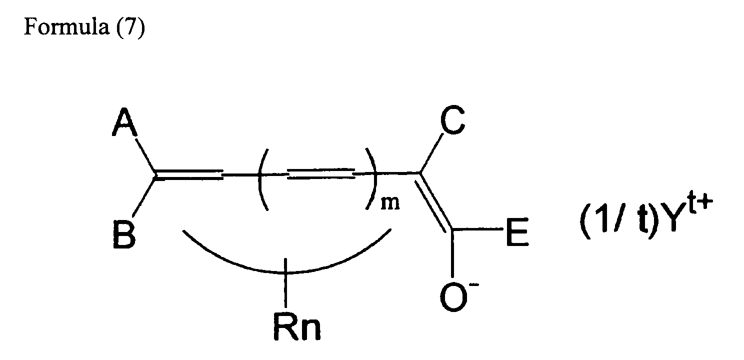

A, B, C, R, m, n, Y^{t+}, and t in formula (7) are defined in the same way as in formula (1).

The oxonol dye represented by formula (1) will be hereinafter described. In formula (1), A, B, C, and D each represents an electron-withdrawing group. A and B and/or C and D may be combined with each other to form a ring. If these are not combined with each other, these are electron-withdrawing groups in which the sum of Hammett's σp values of A and B and the sum of Hammett's σp values of C and D are each greater than 0.6. A, B, C, and D may be the same as each other or different from each other. If these are not combined with each other, the Hammett's substituent constant σp values of the electron-withdrawing groups represented by A, B, C, and D each independently fall within a range of preferably from 0.30 to 0.85, and more preferably from 0.35 to 0.80.

The Hammett's substituent constant σp values (hereinafter, referred to simply as "σp values") are mentioned in, for example, Chem. Rev. 91, 165 (1991) and in reference documents cited thereby. Values not mentioned here can be obtained according to the method described in this publication.

Preferable concrete examples of the electron-withdrawing groups represented by A, B, C, and D include a cyano group, a nitro group, an acyl group having 1 to 10 carbon atoms (for example, acetyl, propionyl, butyryl, pivaloyl, and benzoyl), an alkoxycarbonyl group having 2 to 12 carbon atoms (for example, methoxycarbonyl, ethoxycarbonyl, isopropoxycarbonyl, butoxycarbonyl, and decyloxycarbonyl), an aryloxycarbonyl group having 7 to 11 carbon atoms (for example, phenoxycarbonyl), a carbamoyl group having 1 to 10 carbon atoms (for example, methylcarbamoyl, ethylcarbamoyl, phenylcarbamoyl), an alkylsulfonyl group having 1 to 10 carbon atoms (for example, methanesulfonyl), an arylsulfonyl group having 6 to 10 carbon atoms (for example, benzenesulfonyl), an alkoxysulfonyl group having 1 to 10 carbon atoms (for example, methoxysulfonyl), a sulfamoyl group having 1 to 10 carbon atoms (for example, ethylsulfamoyl, phenylsulfamoyl), an alkylsulfinyl group having 1 to 10 carbon atoms (for example, methanesulfinyl and ethanesulfinyl), an arylsulfinyl group having six to 10 carbon atoms (for example, benzenesulfinyl), an alkylsulfenyl group having 1 to 10 carbon atoms (for example, methanesulfenyl and ethanesulfenyl), an arylsulfenyl group having 6 to 10 carbon atoms (for example, benzenesulfenyl), a halogen atom, an alkynyl group having 2 to 10 carbon atoms (for example, ethinyl), a diacylamino group having 2 to 10 carbon atoms (for example, diacetylamino), a phosphoryl group, a carboxyl group, and a 5-membered or 6-membered heterocyclic group (for example, 2-benzothiazolyl, 2-benzoxazolyl, 3-pyridyl, 5-(1H)-tetrazolyl, and 4-pyrimidyl).

Each of A, B, C, D, and R may further have a substituent group. The same substituent group as the above-mentioned one that has been taken as an example of a monovalent substituent group represented by R in formula (1) can be mentioned as an example of the substituent group.

Preferably, for a dye used for an optical disk, A and B or C and D are combined together to form a ring from the viewpoint of thermal decomposition.

Preferably, the ring formed by combining A and B together has any one of the following partial structures (Z-3) to (Z-8), or, alternatively, the ring formed by combining C and D together has any one of the following partial structures (Z-9) to (Z-14). More preferably, the ring formed by combining A and B together has any one of the following partial structures (Z-3) to (Z-8), and, at the same time, the ring formed by combining C and D together has any one of the following partial structures (Z-9) to (Z-14).

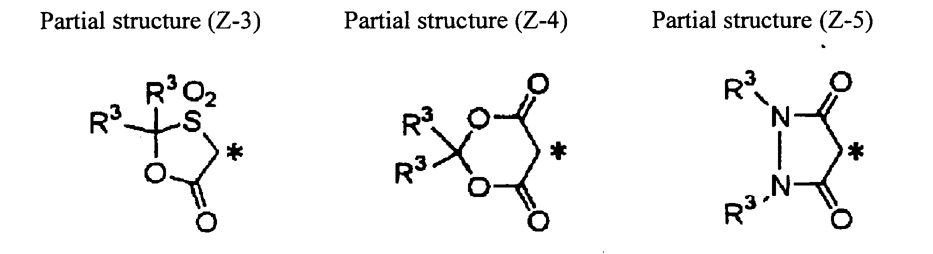

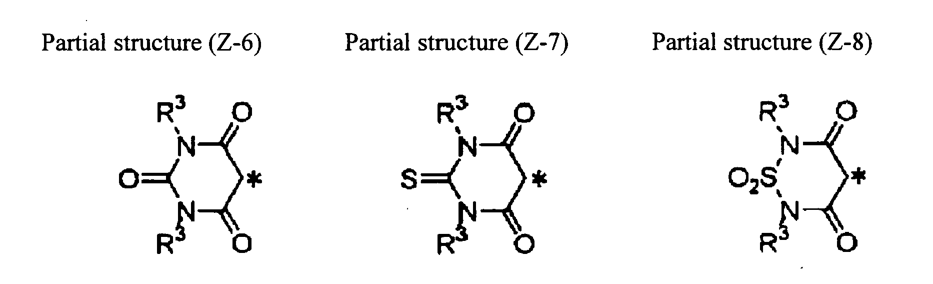

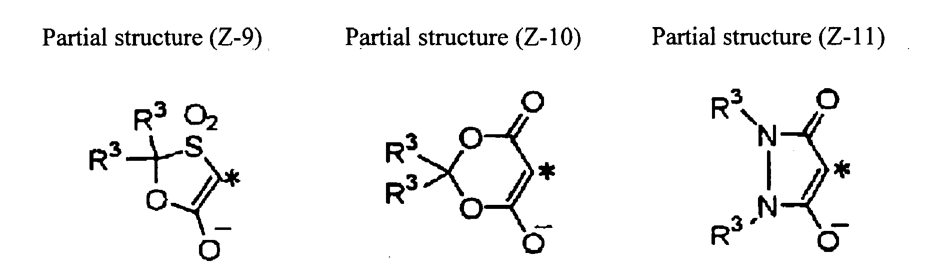

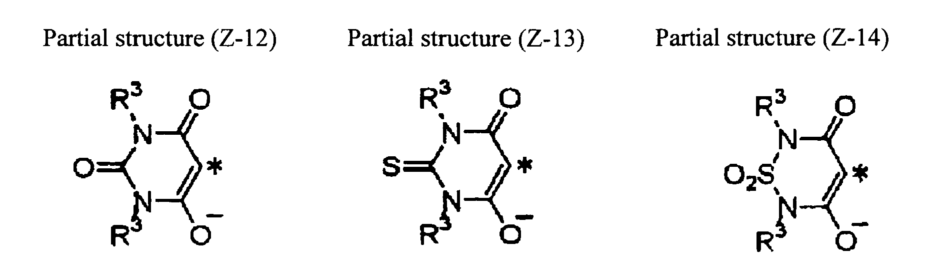

[In the partial structures, R³ represents a hydrogen atom or a substituent group. A plurality of R³s may be the same as each other or different from each other. R³ and R³ may be linked together by means of a linking group.]

The same group as the above-mentioned groups represented by A, B, C, and D can be mentioned as the substituent group represented by E of formula (7). The same applies to its preferable range.

Examples of the substituent group on methine carbon represented by R in formula (1) include a chain or cyclic alkyl group having 1 to 20 carbon atoms (for example, methyl, ethyl, n-propyl, isopropyl, and n-butyl), a substituted or unsubstituted aryl group having 6 to 18 carbon atoms (for example, phenyl, chlorophenyl, anisyl, toluyl, 2,4-di-t-amyl, 1-naphthyl), an alkenyl group (for example, vinyl and 2-methylvinyl), an alkynyl group (for example, ethinyl, 2-methylethinyl, and 2-phenylethinyl), a halogen atom (for example, F, Cl, Br, and I), a cyano group, a hydroxyl group, a carboxyl group, an acyl group (for example, acetyl, benzoyl, salicyloyl, and pivaloyl), an alkoxy group (for example, methoxy, butoxy, and cyclohexyloxy), an aryloxy group (for example, phenoxy and α-naphthoxy), an alkylthio group (for example, methylthio, butylthio, benzylthio, 3-methoxypropylthio), an arylthio group (for example, phenylthio and 4-chlorophenylthio), an alkylsulfonyl group (for example, methanesulfonyl and butanesulfonyl), an arylsulfonyl group (for example, benzenesulfonyl and para-toluenesulfonyl), a carbamoyl group having 1 to 10 carbon atoms, an amide group having 1 to 10 carbon atoms, an imide group having 2 to 12 carbon atoms, an acyloxy group having 2 to 10 carbon atoms, an alkoxycarbonyl group having 2 to 10 carbon atoms, and a heterocyclic group (for example, aromatic heterocyclic rings such as pyridyl, thienyl, furyl, thiazolyl, imidazolyl, and pyrazolyl, and aliphatic heterocyclic rings such as pyrrolidine ring, piperidine ring, morpholine ring, pyran ring, thiopyran ring, dioxane ring, and dithiolan ring).

Preferable examples of R include a halogen atom, a chain or cyclic alkyl group having 1 to 8 carbon atoms, an aryl group having 6 to 10 carbon atoms, an alkoxy group having 1 to 8 carbon atoms, an aryloxy group having 6 to 10 carbon atoms, and a heterocyclic group having 3 to 10 carbon atoms. In particular, preferable examples thereof include a chlorine atom, an alkyl group having 1 to 4 carbon atoms (for example, methyl, ethyl, and isopropyl), phenyl, an alkoxy group having 1 to 4 carbon atoms (for example, methoxy and ethoxy), phenoxy, a nitrogen-containing heterocyclic group having 4 to 8 carbon atoms (for example, 4-pyridyl, benzoxazole-2-yl, and benzothiazole-2-yl).

m represents an integer of 0 to 1. Preferably, m is 1.

Preferably, when m=1, the ring formed by combining A and B together and the ring formed by combining C and D together do not have the following partial structures (Z-1) and (Z-2) at the same time. The reason is that an absorption wavelength becomes extremely longer than the recording-laser-beam wavelength of 440 nm or less. Such a longer absorption wavelength is unsuitable for recording.

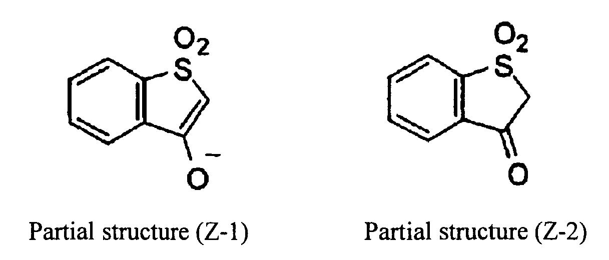

n represents an integer of 0 to 2m+1. If n is 2 or greater, a plurality of Rs may be the same as each other or different from each other. R and R may be combined together to form a ring. At this time, the number of ring members is preferably 4 to 8, and in particular, preferably 5 or 6. The ring-forming atom is preferably a carbon atom, an oxygen atom, or a nitrogen atom, and in particular, preferably a carbon atom.

Y^{t+} represents a t-valent cation. t represents an integer of 1 to 4. t is preferably any one of 1, 2, and 3, more preferably 2 or 3, and even more preferably 2.

An anionic part of an oxonol dye disclosed by Japanese Published Unexamined Patent Application No. H 10-297103 can be mentioned as a concrete example of the anionic part of the oxonol dye represented by formula (1) used in the present invention. The following compounds can also be mentioned as concrete examples thereof although the present invention is not limited to these.

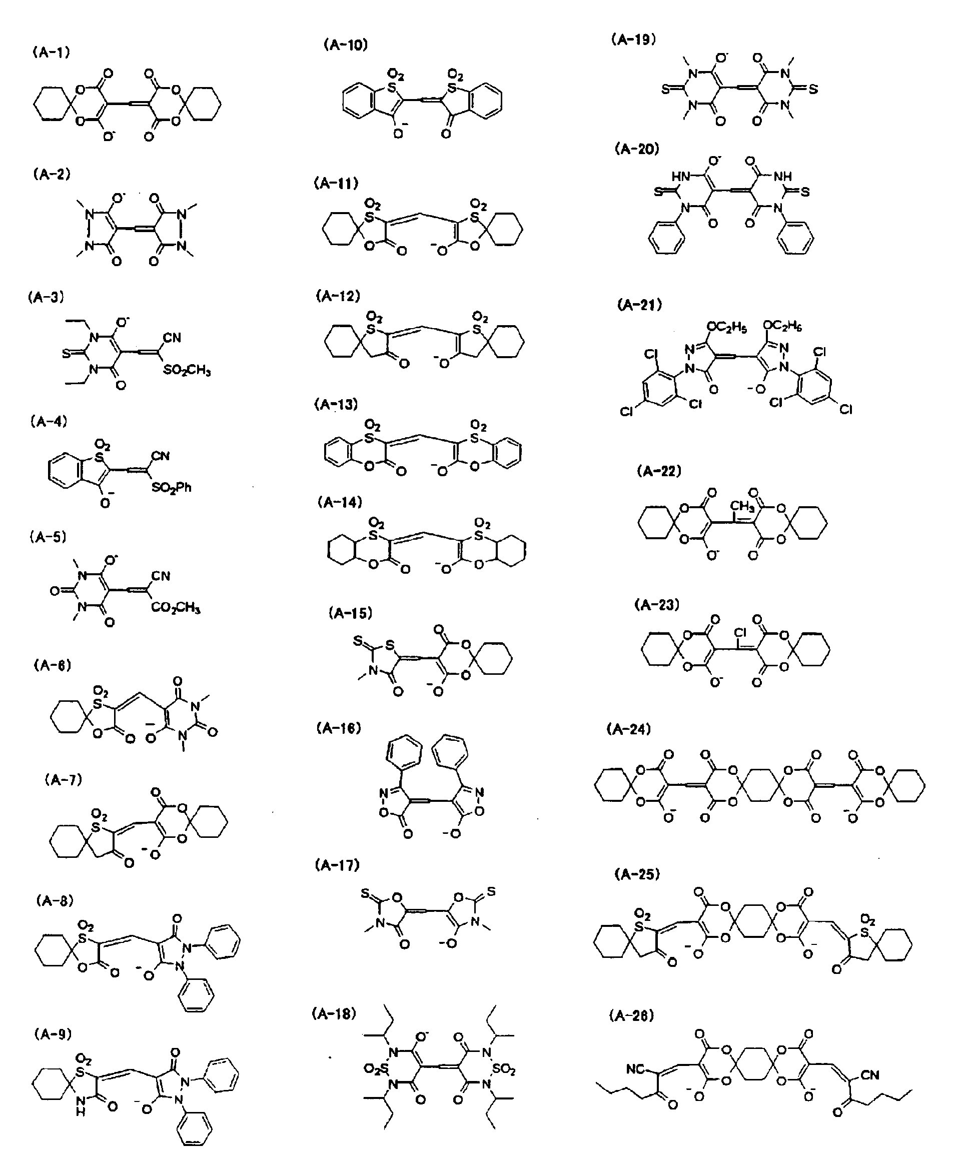

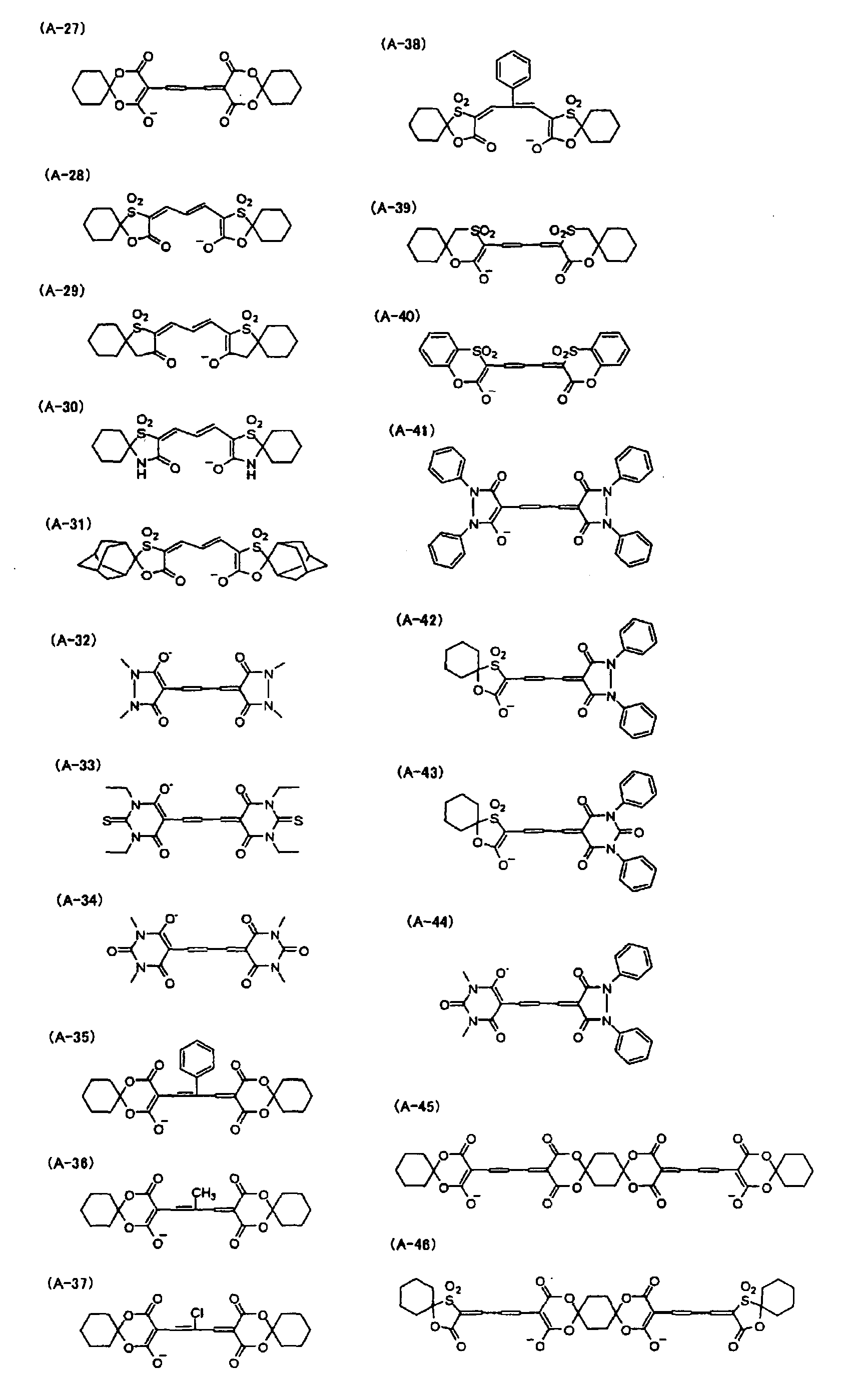

If two oxonol-dye anionic parts each of which is represented by formula (1) are combined as in (A-24), (A-25), (A-26), (A-45), and (A-46), the number of Y^{t+} comes to 2/t with respect to the two oxonol-dye anionic parts combined in such a way.

A, B, C, R, m, n, Y^{t+}, and t in formulas (8) and (9) are defined in the same way as in formula (1). The same applies to its preferable range.

A description will be given of a cationic dye having an absorption maximum in a range of longer wavelengths than an absorption maximum of the oxonol-dye anionic part. A cationic dye having an absorption maximum in a range of longer wavelengths than an absorption maximum of the oxonol-dye anionic part is preferably 400 nm or more, more preferably 450 nm or more, and even more preferably 500 nm or more, depending on the absorption maximum wavelength of the oxonol dye. The reason is that a cationic dye in a preferable range can easily devitalize the excitation state of the oxonol-dye anionic part with high efficiency, and, as a result, a great improvement in light resistance can be expected, or the reason is that singlet oxygen is devitalized with high efficiency.

Examples of the cationic dye having an absorption maximum in a range of longer wavelengths than an absorption maximum of the oxonol-dye anionic part include diimmonium, cyanine, and a metal complex cation (for example, metal complex cation having an azo-compound, formazan, dipyrromethene, porphyrin, phthalocyanine, indoaniline, isoindoline, quinolinequinone, or phenylenediamine in a ligand).

Compounds having the structures disclosed by Japanese Published Unexamined Patent Application No. 2002-240433 can be mentioned as "diimmonium" mentioned above. Concrete examples of preferable diimmonium include the following cations. These are each suitable also as a dye having an absorption maximum in a range of longer wavelengths than an absorption maximum of an oxonol-dye anionic part differing from Y^{t+}.

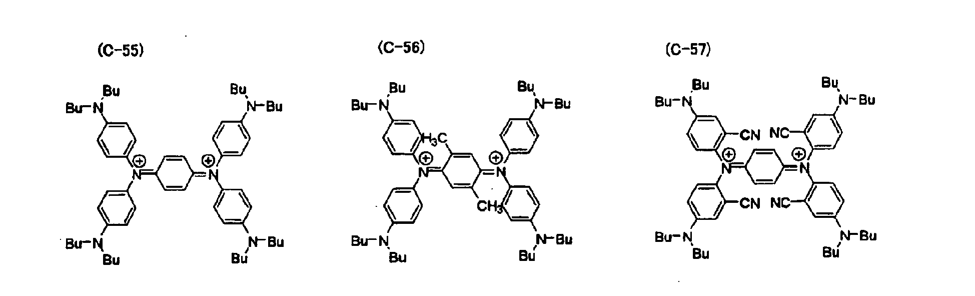

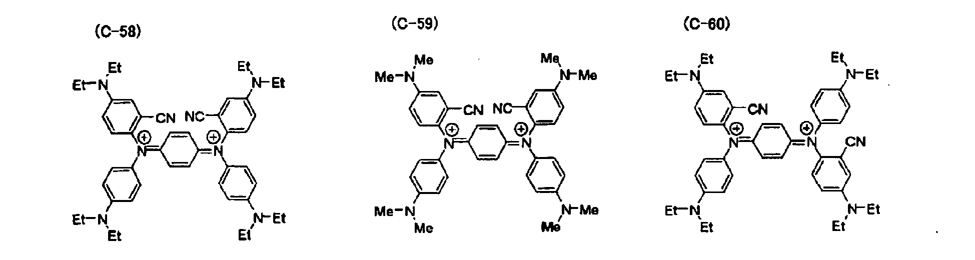

Cyanine will be described. Compounds described in "Cyanine Dyes and Related Compounds (John Wjley & Sons, New York, London, published in 1964)," which is included in the "Chemistry of Heterocyclic Compound" series, can be mentioned as cyanine. Cationic parts of cyanine disclosed by Japanese Published Unexamined Patent Application Nos. 4-201482 and 5-217219, Japanese Patent No. 2811442, Japanese Published Unexamined Patent Application No. 2001-232945, and Japanese Patent Application No. 2000-103547 can be mentioned as concrete preferable examples of cyanine in the present invention.

Preferably, a cationic dye having an absorption maximum in a range of longer wavelengths than an absorption maximum of an oxonol-dye anionic part is that of a metal complex cation. A metal complex will be described. The metal complex in the present invention denotes a compound in which a metal and ligands are combined together. Examples of metal atoms of the metal include Mg, Al, Si, Ca, Sc, Ti, V, Cr, Mn, Fe, Co, Ni, Cu, Zn, Ga, Ge, As, Sr, Y, Zr, Nb, Mo, Tc, Ru, Rh, Pd, Ag, Cd, In, Sn, Sb, Ba, Pr, Eu, Yb, Hf, Ta, W, Re, Os, Ir, Pt, Au, Hg, Tl, Pb, Bi, and Th.

Preferably, the metal complex is a transition metal complex. The transition metal complex in the present invention denotes a compound in which a transition metal and ligands are combined together. The transition metals lie in any one of from IIIa to VIII and in Ib of the periodic table, and are elements each of which has an incomplete d-electron shell. Although specific limitations are not imposed, the transition metals are preferably Mn, Fe, Co, Ni, Cu, Zn, Ru, Rh, Pd, Ir, Pt, Re, and Pt, more preferably Mn, Fe, Co, Ni, Cu, and Zn, even more preferably Mn, Fe, Co, Ni, and Cu, and in particular, preferably Co, Ni, and Cu.

Concerning the ligand, preferably, the absorption maximum wavelength of the ligand is longer than the absorption maximum wavelength of the oxonol-dye anionic part. Examples of such ligands include an azo-compound, formazan, dipyrromethene, porphyrin, phthalocyanine, indoaniline, and quinolinequinone.

Even if the absorption maximum wavelength of the ligand is not longer than the absorption maximum wavelength of the oxonol-dye anionic part, there will be a case in which a new transition state appears by being coordinated with a metal, so that the absorption maximum wavelength of the resulting metal complex becomes longer than the absorption maximum wavelength of the oxonol-dye anionic part. This case is also preferable. Examples of such ligands include a nitrogen-containing heterocyclic ligand (for example, bipyridyl ligand, phenanthroline ligand, phenylpyridine ligand, pyrazolylpyridine ligand, benzimidazolylpyridine ligand, picolinic acid ligand, thienylpyridine ligand, pyrazolylpyridine ligand, imidazolylpyridine ligand, triazolylpyridine ligand, pyrazolylbenzoxazole ligand, and condensed rings thereof (for example, phenylquinoline ligand, benzothienylpyridine ligand, and biquinoline ligand)).

For example, ligands described in "Photochemistry and Photophysics of Coordination Compounds" published by Springer-Verlag, written by H. Yersin in 1987 or ligands described in "Organometallic Chemistry -Base and its Application-" published by Shokabo, written by Akio Yamamoto in 1982 can be mentioned as ligands other than the above-mentioned ones used in the present invention. Concrete examples of the ligands include a halogen ligand (for example, chlorine ligand and fluorine ligand), a diketone ligand (for example, acetylacetone ligand), a nitrile ligand (for example, acetonitrile ligand), a CO ligand, an isonitrile ligand (for example, t-butylisonitrile ligand), a phosphorus ligand (for example, phosphine derivative, phosphite derivative, and phosphinine derivative), and a carboxylic acid ligand (for example, acetic acid ligand).

Partial structures (Z-3) to (Z-14) will be described. R³ represents a hydrogen atom or a substituent group. A plurality of R³s may be the same as each other or different from each other. R³ and R³ may be linked together by means of a linking group. Preferably, R³ is a substituent group. Although specific limitations are not imposed, the same substituent group as the above-mentioned one represented by R can be mentioned as the substituent group.

Formula (2) will be described. Examples of M^{m3+} include Mg²⁺, Al³⁺, Mn²⁺, Fe²⁺, Fe³⁺, Ni²⁺, Ni3⁺, Cu²⁺, Zn²⁺, Ga³⁺, R²⁺ Rh³⁺, Pd²⁺, Os²⁺ Ir³⁺, and Pt²⁺. Preferably, examples of M^{m3+} include Mg²⁺, Al³⁺, Mn²⁺, Fe²⁺, Fe³⁺, Co²⁺, Co³⁺, Ni²⁺, Ni³⁺, Cu²⁺, Zn²⁺, and Ru²⁺. More preferably, examples thereof include Mn²⁺, Fe²⁺, Fe³⁺, Co²⁺, Co³⁺, Ni²⁺, Ni³⁺, Cu²⁺, and Zn²⁺. Even more preferably, examples thereof include Mn²⁺, Fe²⁺, Fe³⁺, Co²⁺, Co³⁺, Ni²⁺, Ni³⁺, and Cu²⁺. In particular, preferably, examples thereof include Co²⁺, Co³⁺, Ni²⁺, Ni³⁺, and Cu²⁺.

Preferable examples of the substituent groups represented by R³² and R³⁵ in formula (2) include an alkyl group having 1 to 20 carbon atoms, an aryl group having 6 to 14 carbon atoms, a heterocyclic group having 1 to 10 carbon atoms, an alkoxy group having 1 to 20 carbon atoms, an aryloxy group having 6 to 14 carbon atoms, an alkylsulfenyl group having 1 to 20 carbon atoms, an arylsulfenyl group having 6 to 14 carbon atoms, an alkylsulfonyl group having 1 to 20 carbon atoms, an arylsulfonyl group having 6 to 14 carbon atoms, an acyl group having 2 to 21 carbon atoms, a carbamoyl group having 1 to 25 carbon atoms, a sulfamoyl group having 0 to 32 carbon atoms, an alkoxycarbonyl group having 1 to 20 carbon atoms, an aryloxycarbonyl group having 7 to 15 carbon atoms, an acylamino group having 2 to 21 carbon atoms, a sulfonylamino group having 1 to 20 carbon atoms, an amino group having 0 to 32 carbon atoms, a cyano group, a nitro group, a hydroxy group, a carboxy group, a sulfo group, and a halogen atom. More preferable examples thereof include an alkyl group having 1 to 16 carbon atoms, an aryl group having 6 to 10 carbon atoms, a heterocyclic group having 1 to 7 carbon atoms, an alkoxy group having 1 to 16 carbon atoms, an aryloxy group having 6 to 10 carbon atoms, an alkylsulfonyl group having 1 to 16 carbon atoms, an arylsulfonyl group having 6 to 10 carbon atoms, an acyl group having 2 to 17 carbon atoms, a carbamoyl group having 1 to 19 carbon atoms, a sulfamoyl group having 0 to 20 carbon atoms, an alkoxycarbonyl group having 1 to 17 carbon atoms, an aryloxycarbonyl group having 7 to 11 carbon atoms, an acylamino group having 2 to 17 carbon atoms, a sulfonylamino group having 1 to 16 carbon atoms, an amino group having 0 to 16 carbon atoms, a cyano group, a carboxy group, a sulfo group, and a halogen atom. In particular, preferable examples thereof include an alkyl group having 1 to 12 carbon atoms, a nitrogen-containing heterocyclic group having 1 to 5 carbon atoms, an alkoxy group having 1 to 12 carbon atoms, a carbamoyl group having 1 to 15 carbon atoms, an alkoxycarbonyl group having 1 to 13 carbon atoms, an acylamino group having 2 to 13 carbon atoms, and a halogen atom. If q is 2 or an integer greater than 2, R² and R² may be combined together to form a ring. R³² may be further substituted by a substituent group.

In formula (2), the alkyl group represented by R³³ or R³⁴ is preferably an alkyl group having 1 to 20 carbon atoms, more preferably an alkyl group having 1 to 16 carbon atoms, and in particular, preferably an alkyl group having 1 to 12 carbon atoms. In formula (3), the aryl group represented by R³³ or R³⁴ is preferably an aryl group having 6 to 14 carbon atoms, more preferably an aryl group having 6 to 10 carbon atoms, and in particular, preferably phenyl. In formula (3), the heterocyclic group represented by R³³ or R³⁴ is preferably a heterocyclic group having 1 to 10 carbon atoms, more preferably a heterocyclic group having 1 to 7 carbon atoms, and in particular, preferably a nitrogen-containing heterocyclic group having 1 to 5 carbon atoms. R³³ and R³⁴ may be further substituted by a substituent group.

Most preferably, in formula (2), R³³ and R³⁴ are each an alkyl group having 1 to 5 carbon atoms. If R³³ and R³⁴, or R³² and R³³, or R³² and R³⁴ are combined together to form a ring, the number of its ring members is preferably 5 or 6.

In formula (2), q1 is preferably 0 to 2, and more preferably 0 to 1. q2 is preferably 0 or 1, and more preferably 1. t3 is preferably 1 to 3, and more preferably 2 or 3.

In formula (2), the substituent group represented by R³² may further have a substituent group. The following can be mentioned as the substituent group. Examples of the substituent group include a chain or cyclic alkyl group having 1 to 20 carbon atoms (for example, methyl, ethyl, isopropyl, and cyclohexyl), an aryl group having 6 to 18 carbon atoms (for example, phenyl, chlorophenyl, 2,4-di-t-amylphenyl, and 1-naphthyl), an aralkyl group having 7 to 18 carbon atoms (for example, benzyl and anisyl), an alkenyl group having 2 to 20 carbon atoms (for example, vinyl and 2-methylvinyl), an alkynyl group having 2 to 20 carbon atoms (for example, ethinyl, 2-methylethinyl, and 2-phenylethinyl), a halogen atom (for example, F, Cl, Br, and I), a cyano group, a hydroxyl group, a carboxyl group, an acyl group having 2 to 20 carbon atoms (for example, acetyl, benzoyl, salicyloyl, and pivaloyl), an alkoxy group having 1 to 20 carbon atoms (for example, methoxy, butoxy, and cyclohexyloxy), an aryloxy group having 6 to 20 carbon atoms (for example, phenoxy, 1-naphthoxy, and toluoyl), an alkylthio group having 1 to 20 carbon atoms (for example, methylthio, butylthio, benzylthio, and 3-methoxypropylthio), an arylthio group having 6 to 20 carbon atoms (for example, phenylthio and 4-chlorophenylthio), an alkylsulfonyl group having 1 to 20 carbon atoms (for example, methanesulfonyl and butanesulfonyl), an arylsulfonyl group having 6 to 20 carbon atoms (for example, benzenesulfonyl and para-toluenesulfonyl), a carbamoyl group having 1 to 17 carbon atoms (for example, unsubstituted carbamoyl, methylcarbamoyl, ethylcarbamoyl, n-butylcarbamoyl, and dimethylcarbamoyl), an amide group having 1 to 16 carbon atoms (for example, acetamide and benzamide), an acyloxy group having 2 to 10 carbon atoms (for example, acetoxy and benzoyloxy), an alkoxycarbonyl group having 2 to 10 carbon atoms (for example, methoxycarbonyl and ethoxycarbonyl), and a 5- or 6-membered heterocyclic group (for example, an aromatic heterocyclic ring such as pyridyl, thienyl, furyl, thiazolyl, imidazolyl, or pyrazolyl, and a heterocyclic ring such as pyrrolidine ring, piperidine ring, morpholine ring, pyran ring, thiopyran ring, dioxane ring, or dithiolan ring).

More preferable examples of the substituent group of the substituent group represented by R³² in formula (2) include a chain or cyclic alkyl group having 1 to 16 carbon atoms, an aryl group having 6 to 14 carbon atoms, an alkoxy group having 1 to 16 carbon atoms, an aryloxy group having 6 to 14 carbon atoms, a halogen atom, an alkoxycarbonyl group having 2 to 17 carbon atoms, a carbamoyl group having 1 to 10 carbon atoms, an amide group having 1 to 10 carbon atoms, an alkylsulfonyl group having 1 to 16 carbon atoms, and an arylsulfonyl group having 6 to 10 carbon atoms. Even more preferable examples thereof include a chain or cyclic alkyl group having 1 to 10 carbon atoms, an aralkyl group having 7 to 13 carbon atoms, an aryl group having 6 to 10 carbon atoms, an alkoxy group having 1 to 10 carbon atoms, an aryloxy group having 6 to 10 carbon atoms, a chlorine atom, an alkoxycarbonyl group having 2 to 11 carbon atoms, a carbamoyl group having 1 to 7 carbon atoms, an amide group having 1 to 8 carbon atoms, an alkylsulfonyl group having 1 to 12 carbon atoms, and a phenylsulfonyl group. In particular, preferable examples thereof include a chain-branched or cyclic alkyl group having 3 to 10 carbon atoms, an alkoxy group having 1 to 8 carbon atoms, an alkoxycarbonyl group having 3 to 9 carbon atoms, a phenyl group, and an alkylsulfonyl group having 1 to 8 carbon atoms.

The following concrete examples can be mentioned as examples of the metal complex cation represented by formula (2) used in the present invention. However, the present invention is not limited to these.

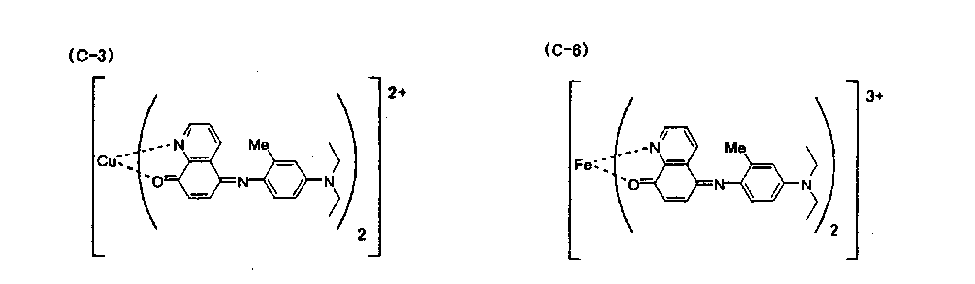

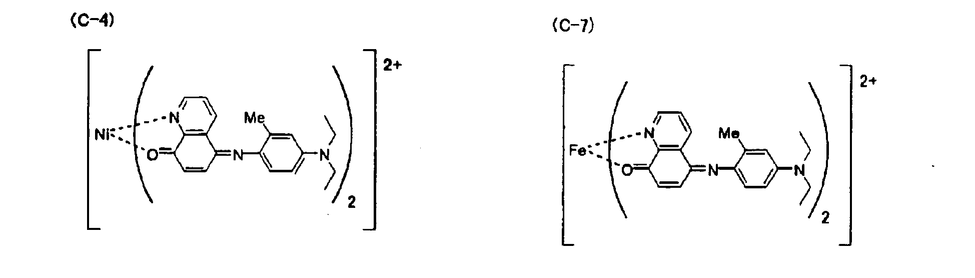

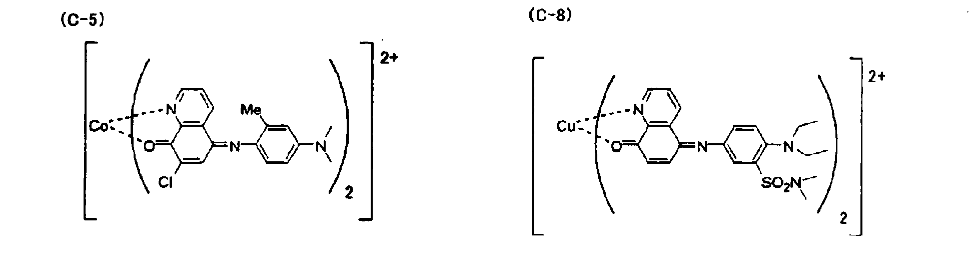

Formula (3) will be described. M^{m3+} of formula (3) is defined in the same way as M^{m3+} of formula (2), and the same applies to its preferable range.

R³² and R³⁵ of formula (3) are defined in the same way as R³² and R³⁵ of formula (2), and the same applies to its preferable range.

R³³ and R³⁴ of formula (3) are defined in the same way as R³³ and R³⁴ of formula (2), and the same applies to its preferable range.

Q₃ represents a group that forms a nitrogen-containing heterocyclic ring. Although no specific limitations are imposed on Q₃, it is preferable to form a 5- to 7-membered ring by Q₃, more preferable to form a 5- or 6-membered ring, and even more preferable to form a 6-membered ring. Preferably, substituted or unsubstituted alkylene or substituted or unsubstituted alkenylene is used as the linking group, although no specific limitations are imposed thereon.

q1 and q2 of formula (3) are defined in the same way as q1 and q2 of formula (2), and the same applies to its preferable range.

t3 of formula (3) is defined in the same way as t3 of formula (2), and the same applies to its preferable range.

The following concrete examples, in addition to cation constituents of compounds cited and described as concrete examples in Japanese Published Unexamined Patent Application No. 2004-90564, can be mentioned as concrete examples of the metal complex cation represented by formula (3) used in the present invention. However, the present invention is not limited to these.

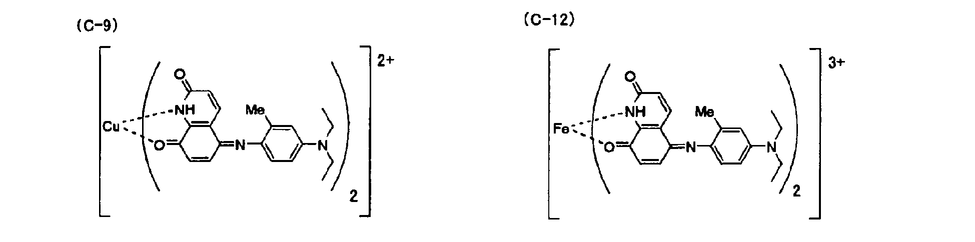

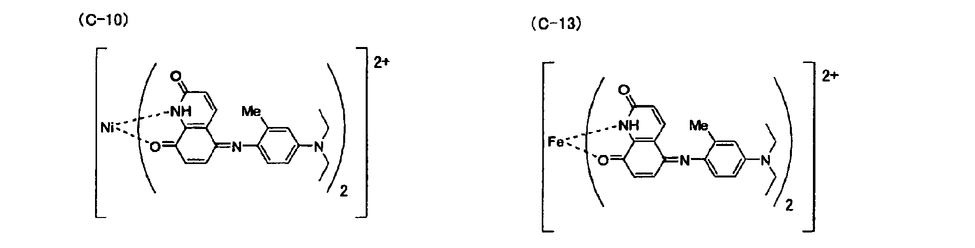

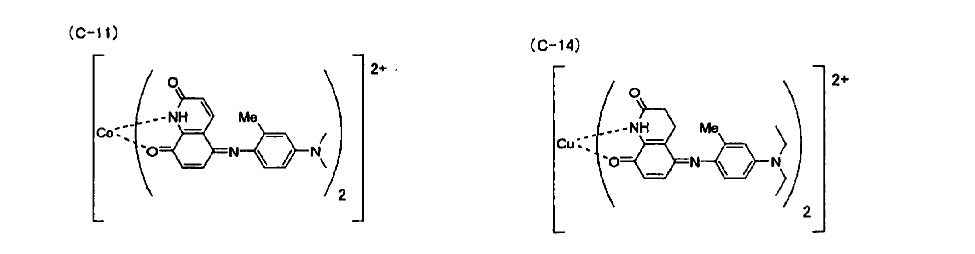

Formula (4) and formula (10) will be described. M^{m3+} of formulas (4) and (10) is defined in the same way as M^{m3+} of formula (2), and the same applies to its preferable range.

R³² and R³⁵ of formulas (4) and (10) are defined in the same way as R³² and R³⁵ of formula (2), and the same applies to its preferable range.

q2 of formulas (4) and (10) is defined in the same way as q2 of formula (2), and the same applies to its preferable range.

q3 of formulas (4) and (10) represents an integer of 0 to 3, and is preferably 0 to 2, more preferably 1 to 2, and even more preferably 1.

t3 of formulas (4) and (10) is defined in the same way as t3 of formula (2), and the same applies to its preferable range.

The following metal complex cations can be mentioned as concrete examples of formulas (4) and (10). However, the present invention is not limited to these.

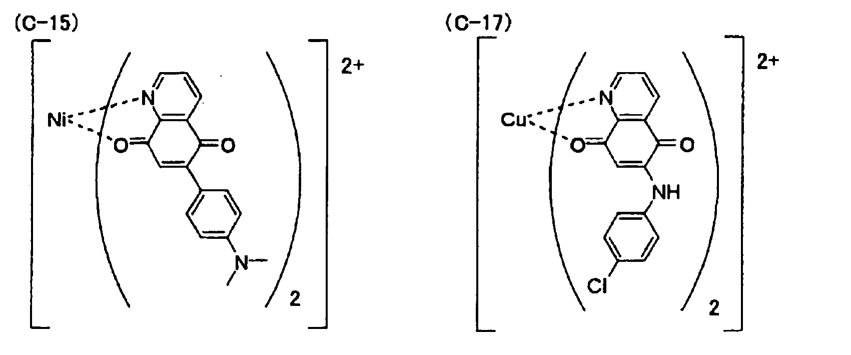

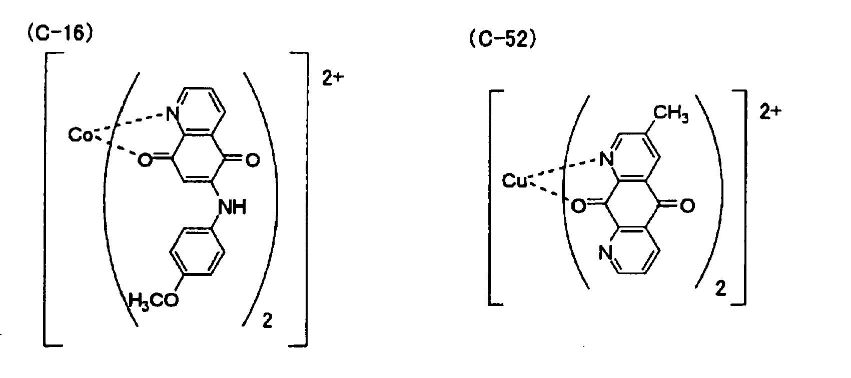

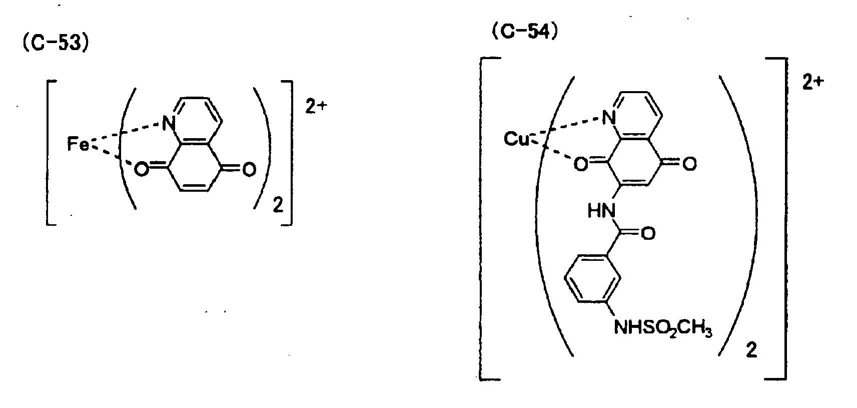

Formulas (5) and (11) will be described. M^{m3+} of formulas (5) and (11) is defined in the same way as M^{m3+} of formula (2), and the same applies to its preferable range.

R³², R³⁵, and R³⁶ of formulas (5) and (11) are defined in the same way as R³² and R³⁵ of formula (2), and the same applies to its preferable range.

R³³ and R³⁴ of formulas (5) and (11) are defined in the same way as R³³ and R³⁴ of formula (2), and the same applies to its preferable range.

q1 of formulas (5) and (11) is defined in the same way as q1 of formula (2), and the same applies to its preferable range.

q4 of formulas (5) and (11) represents an integer of 0 to 4, and is preferably any one of 0 to 3, more preferably any one of 0 to 2, more preferably 0 or 1, and in particular, preferably 0.

q5 of formulas (5) and (11) represents an integer of 0 to 3, and is preferably any one of 0 to 2, more preferably 0 or 1, and even more preferably 0.

t3 of formulas (5) and (11) is defined in the same way as t3 of formula (2), and the same applies to its preferable range.

The following metal complex cations can be mentioned as concrete examples of formulas (5) and (11). However, the present invention is not limited to these.

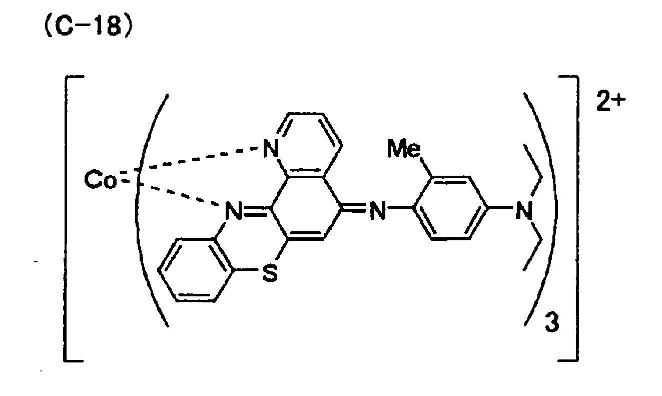

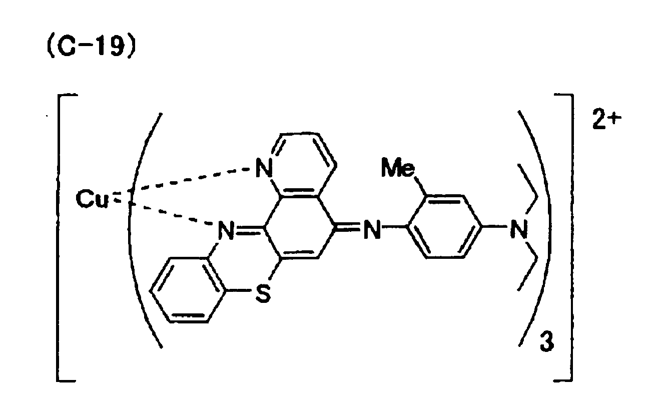

Advantageously, a metal complex cation in which the S atom of formulas (5) and (11) has been replaced with an O atom is also expected to exhibit the same performance as that of formulas (5) and (11).

Besides the metal complex cation mentioned above, the following phenylenediamine complexes can be mentioned as the counter cation Y^{t+}.

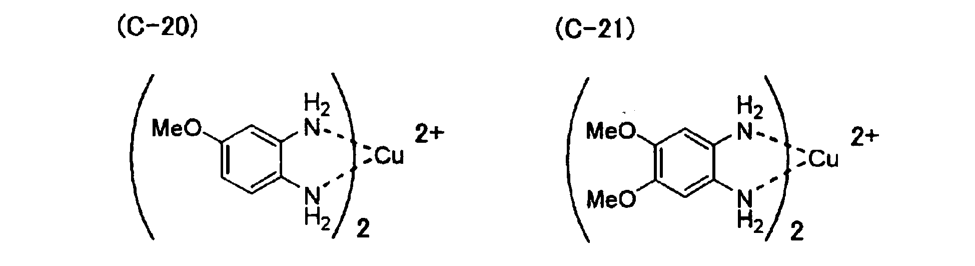

Preferably, the anionic part of the oxonol dye of formula (1) is defined by the fact that m=1. More preferably, the anionic part of the oxonol dye of formula (1) is defined by the fact that m=1, the fact that the ring formed by combining A and B together is any one of partial structures (Z-3) to (Z-8), and the fact that the ring formed by combining C and D together is any one of partial structures (Z-9) to (Z-14). Even more preferably, the anionic part of the oxonol dye of formula (1) is defined by the fact that m=1, the fact that the ring formed by combining A and B together is any one of partial structures (Z-3) to (Z-8), the fact that the ring formed by combining C and D together is any one of partial structures (Z-9) to (Z-14), and the fact that the absorption maximum ranges from 415 nm to 500 nm.

Preferably, Y^{t+} is a metal complex cation. More preferably, Y^{t+} is a metal complex cation represented by formulas (2), (3), (4), (5), (10), and (11). Even more preferably, Y^{t+} is a metal complex cation represented by formulas (2), (3), (4), (5), (10), and (11), and M^{m3+} is Co²⁺, Co³⁺, Ni²⁺, Ni³⁺, or Cu²⁺.

Preferably, m=1 in formula (1), and Y^{t+} is a metal complex cation. More preferably, m=1 in formula (1), and the ring formed by combining A and B together is any one of the following partial structures (Z-3) to (Z-8), and the ring formed by combining C and D together is any one of the following partial structures (Z-9) to (Z-14), and Y^{t+} is a metal complex cation represented by formulas (2), (3), (4), (5), (10), and (11). Even more preferably, m=1 in formula (1), and the ring formed by combining A and B together is any one of the following partial structures (Z-3) to (Z-8), and the ring formed by combining C and D together is any one of the following partial structures (Z-9) to (Z-14), and the absorption maximum ranges from 415 nm to 500 nm, and Y^{t+} is a metal complex cation represented by formulas (2), (3), (4), (5), (10), and (11), and M^{m3+} is Co²⁺, Co³⁺, Ni²⁺, Ni³⁺, or Cu²⁺.

It is also preferable to contain a dye having an absorption maximum in a range of longer wavelengths than the absorption maximum of the oxonol-dye anionic part, besides the counter cation Y^{t+}. More preferably, such a dye is a dye containing the above-mentioned diimmonium or the above-mentioned metal complex cation. Even more preferably, such a dye is a dye containing the above-mentioned metal complex cation.

If a metal complex is contained besides the counter cation Y^{t+}, the metal complex differing from the counter cation may be a metal complex having a molar extinction coefficient (ε) of 1,000dm³mol⁻¹cm⁻¹ or less in a wavelength range of 350 nm to 1300 nm, or may contain a metal complex dye having an absorption maximum in a range of longer wavelengths than the absorption maximum of the oxonol-dye anionic part.

The following compounds can be mentioned as preferable concrete examples of the metal complex having a molar extinction coefficient (ε) of 10,000dm³mol⁻¹cm⁻¹ or less in a wavelength range of 350 nm to 1300 nm. However, the present invention is not limited to these.

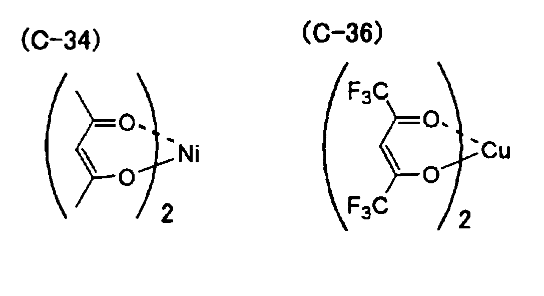

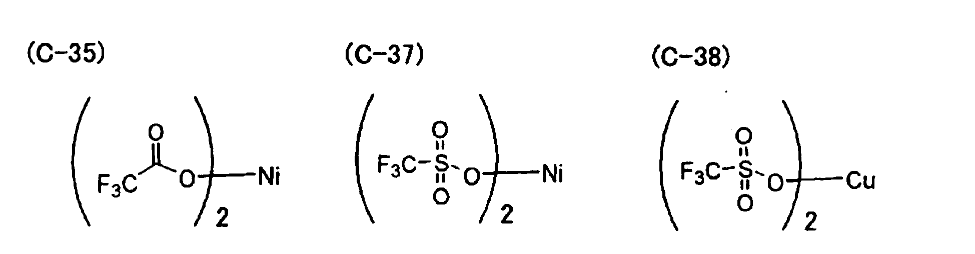

If a metal complex is contained besides the counter cation Y^{t+}, it is preferable to contain a metal complex dye having an absorption maximum in a range of longer wavelengths than the absorption maximum of the oxonol-dye anionic part.

Preferably, if a metal complex is contained besides the counter cation, the metal complex dye having an absorption maximum in a range of longer wavelengths than the absorption maximum of the oxonol-dye anionic part is that of any one of a formazan complex, a salicylaldehyde complex, an azo complex, and a metal complex represented by formulas (2), (3), (4), (5), (10), and (11). More preferably, the metal complex dye is that of any one of a salicylaldehyde complex, an azo complex, and a metal complex represented by formulas (2), (3), (4), (5), (10), and (11). Even more preferably, the metal complex dye is that of an azo complex or that of a metal complex represented by formulas (2), (3), (4), (5), (10), and (11). In particular, preferably, the metal complex dye is that of an azo complex.

The following compounds can be mentioned as preferable concrete examples of the azo metal complex. However, the present invention is not limited to these.

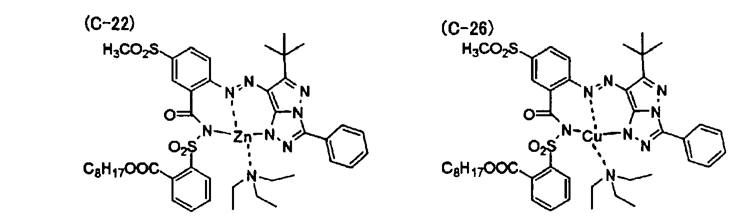

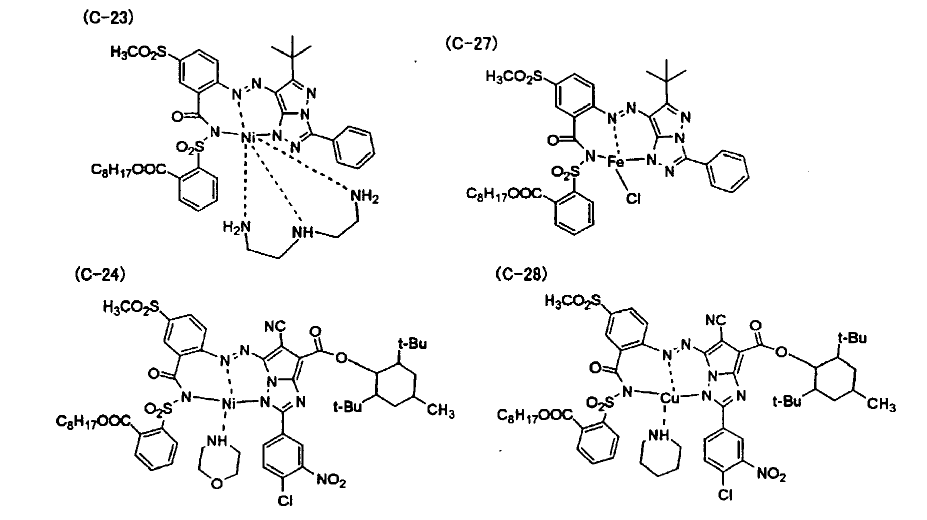

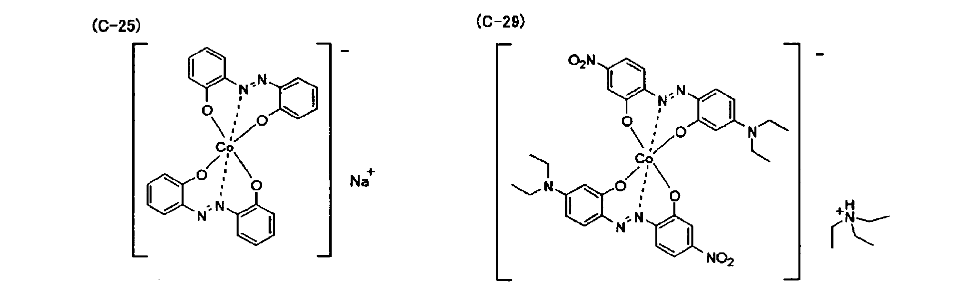

The following compounds can be mentioned as preferable concrete examples of the metal complex having a salicylaldehyde ligand. However, the present invention is not limited to these.

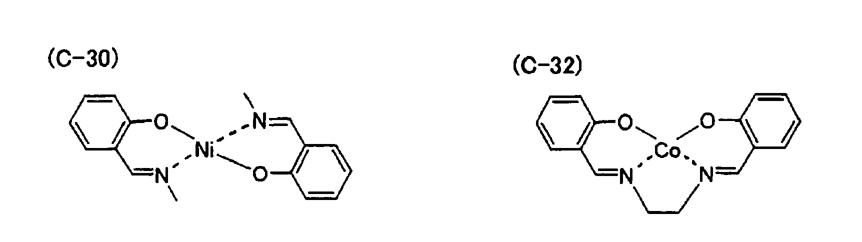

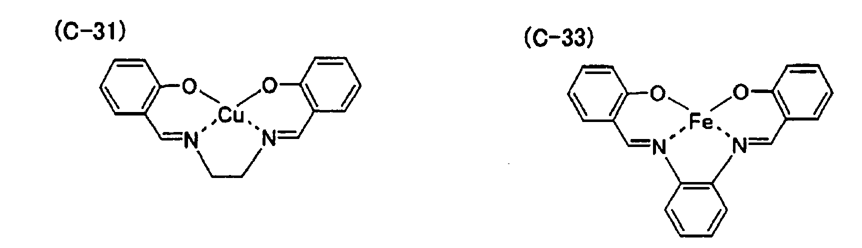

The following compound can be mentioned as a preferable concrete example of the formazan complex.

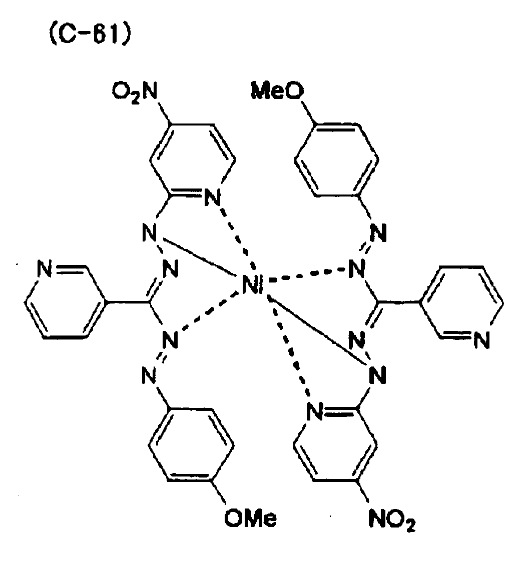

Concerning the metal complex differing from the counter cation, the following compounds can be mentioned as metal complexes not mentioned above. However, the present invention is not limited to these metal complexes.

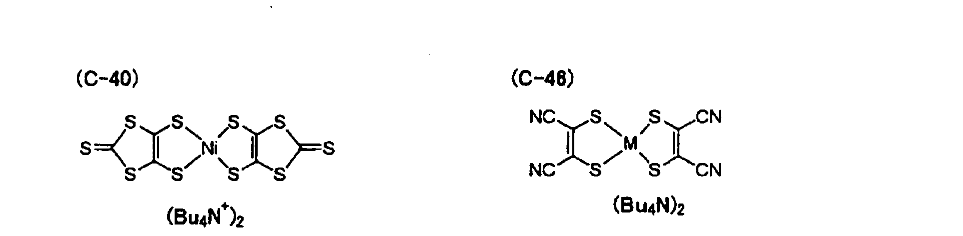

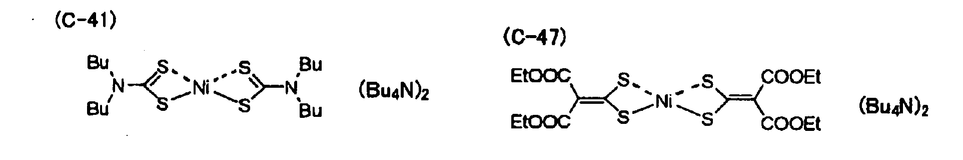

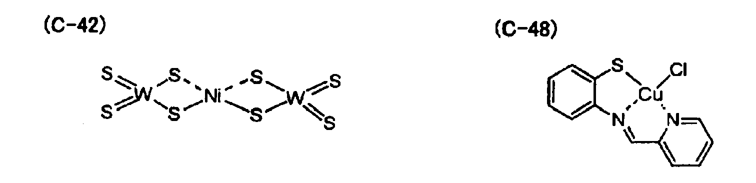

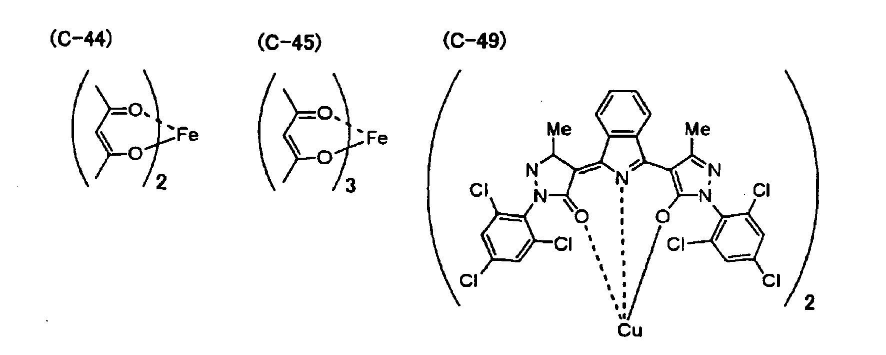

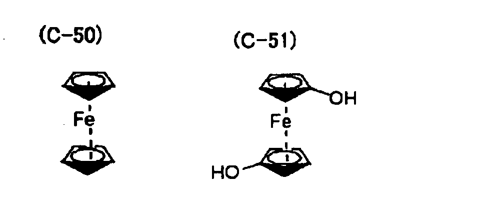

Preferably, the oxonol-dye anionic part of formula (1) is also represented by formula (6). Formula (6) will be described. A and C of formula (6) are defined in the same way as A and C of formula (1).

G, J, K, and V each represents a substituent group. No specific limitations are imposed on the substituent group, and, preferably, a condensed-ring structure is formed by means of A or C and a linking group. No specific limitations are imposed on the condensed-ring structure. The condensed-ring structure is preferably a (5-membered ring + 5-membered ring) structure or a (5-membered ring + 6-membered ring) structure, and more preferably a (5-membered ring + 5-membered ring) structure. Preferably, the ring structure to be formed is an aromatic ring.

R, n, Y^{t+}, and t of formula (6) are defined in the same way as R, n, Y^{t+}, and t of formula (1), and the same applies to its preferable range.

m of formula (6) represents an integer of 0 to 1, and is preferably 0.

Preferably, formula (6) represents an oxonol-dye anion represented by the following structures (Z-13) and (Z-14).

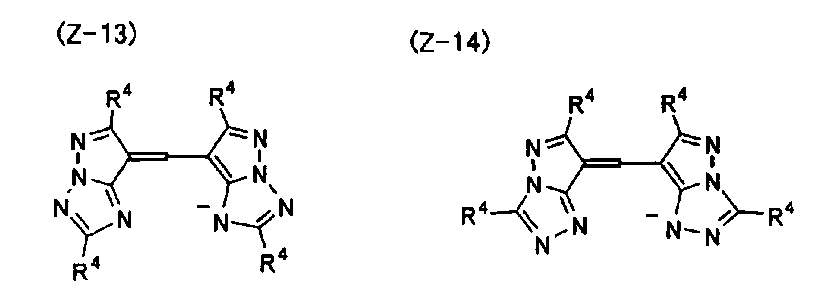

[In the formula, R⁴ represents a hydrogen atom or a substituent group, and is preferably a substituent group. A plurality of R⁴s may be the same as each other or different from each other.]

The substituent group of R mentioned above can be mentioned as the substituent group represented by R⁴.

The following compounds can be mentioned as concrete examples of the oxonol-dye anionic part represented by formula (6). However, the present invention is not limited to these.

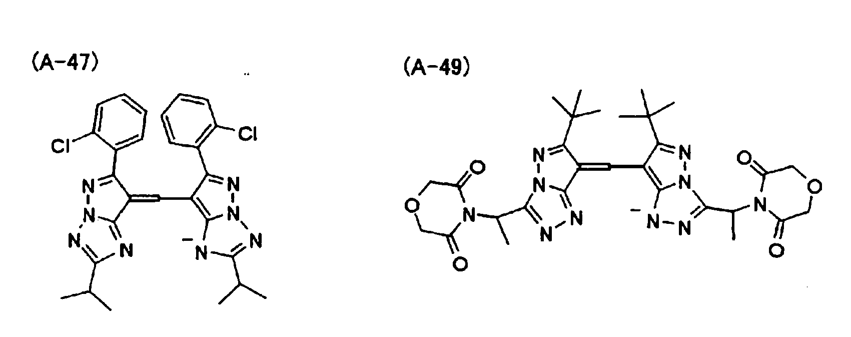

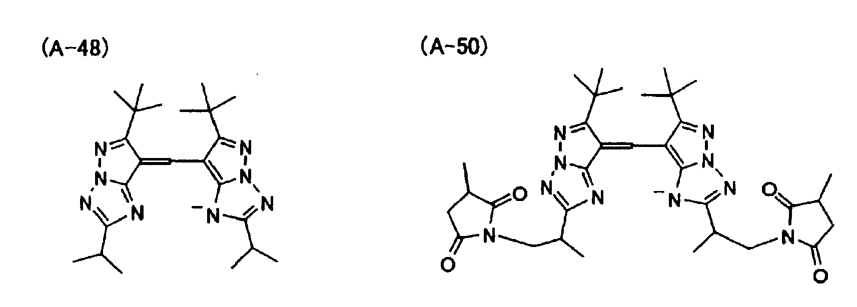

The following compounds and the compounds of Table 1 can be mentioned as concrete examples of formula (1). However, the present invention is not limited to these.

### Compound (1)

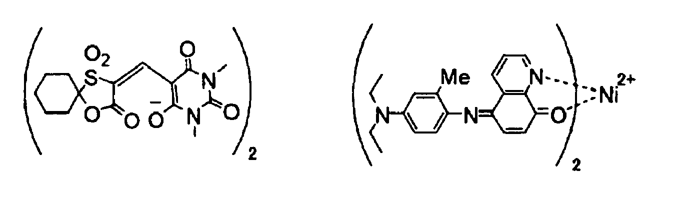

### Compound (2)

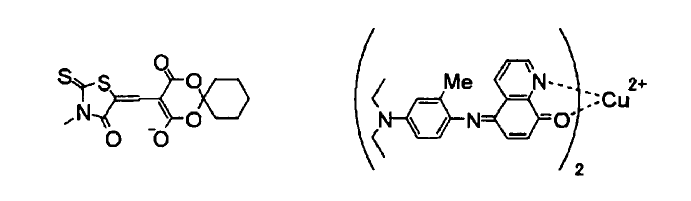

### Compound (3)

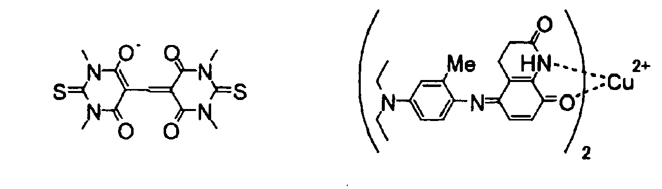

### Compound (4)

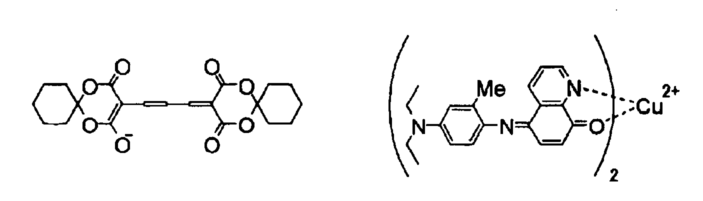

### Compound (5)

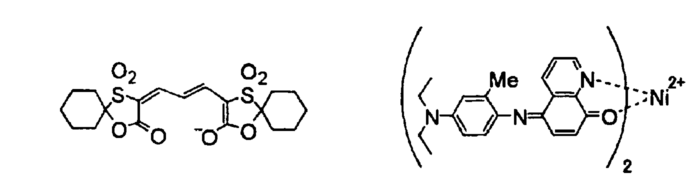

### Compound (19)

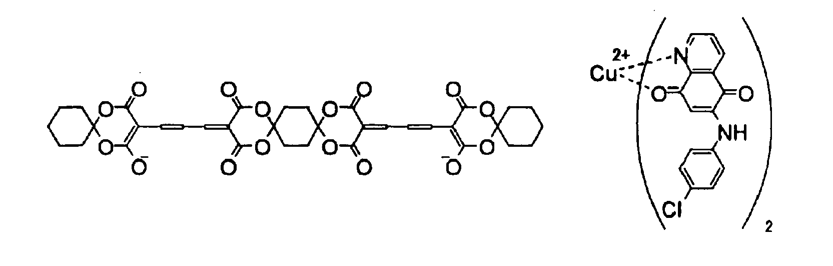

### Compound (20)

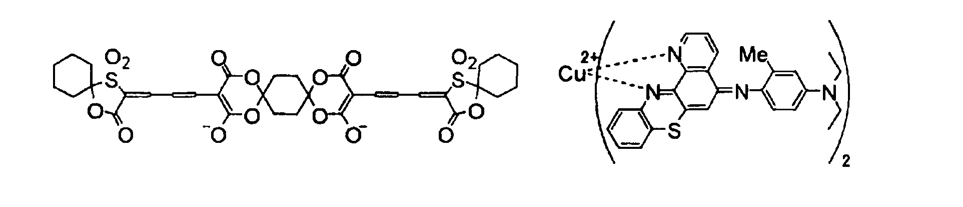

**Table 1**

| Compound | Oxonol-dye anionic part | t | Cationic dye |
|---|---|---|---|
| Compound (6) | (A-10) | 2 | (C-9) |
| Compound (7) | (A-17) | 2 | (C-15) |
| Compound (8) | (A-28) | 2 | (C-11) |
| Compound (9) | (A-29) | 2 | (C-16) |
| Compound (10) | (A-18) | 2 | (C-16) |
| Compound (11) | (A-19) | 2 | (C-17) |
| Compound (12) | (A-28) | 2 | (C-18) |
| Compound (13) | (A-21) | 2 | (C-19) |
| Compound (14) | (A-28) | 2 | (C-3) |
| Compound (15) | (A-41) | 2 | (C-9) |
| Compound (16) | (A-42) | 2 | (C-14) |
| Compound (17) | (A-43) | 2 | (C-3) |
| Compound (18) | (A-44) | 2 | (C-13) |
| Compound (21) | (A-31) | 2 | (C-18) |
| Compound (22) | (A-48) | 2 | (C-8) |

Preferably, the dye that is used together with the oxonol dye represented by formula (1) mentioned above and that is the one other than the oxonol dye represented by formula (1) is an oxonol dye. A description will be given of an oxonol dye used together with the oxonol dye represented by formula (1). In the present invention, the oxonol dye is defined as a polymethine dye having an anionic chromogenic group. An oxonol dye represented by formula (I) mentioned below is, in particular, suitably used, because this is excellent in recording characteristics.

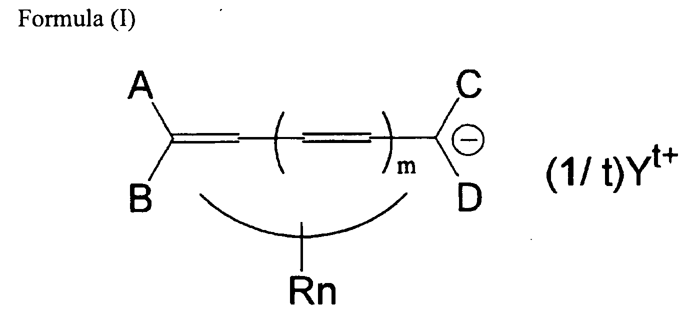

In the formula, A, B, C, and D each represents an electron-withdrawing group, and the sum of Hammett's σp values of A and B and the sum of Hammett's σp values of C and D are each greater than 0.6. A and B, or, alternatively, C and D may be combined together to form a ring. R represents a substituent group on methine carbon. m represents an integer of 0 to 3. n represents an integer of 0 to 2m+1. When n is 2 or greater, a plurality of Rs may be the same as each other or different from each other. R and R may be combined together to form a ring. Y^{t+} represents a t-valent cation. t represents an integer of 1 to 10.

Formula (I) includes a plurality of tautomers by a notational difference in the localized position of an anion. In particular, if any one of A, B, C, and D is "-CO-E" (where E is a substituent group), it is common to represent this in such a way as to localize a negative charge on an oxygen atom. For example, if D is "-CO-E," formula (II) mentioned below is a common representation, which is included in formula (I).

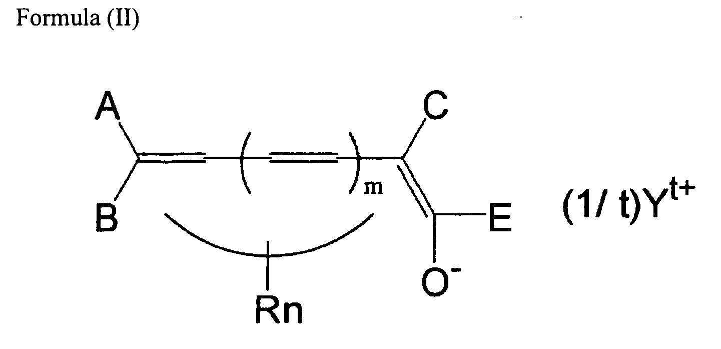

A, B, C, R, m, n, Y^{t+}, and t of formula (II) are defined in the same way as those of formula (I).

A description will be given of an oxonol dye represented by formula (I) mentioned above. In the formula (II), A, B, C, and D each represents an electron-withdrawing group, and the sum of Hammett's substituent constant σp values of A and B and the sum of Hammett's substituent constant σp values of C and D are each greater than 0.6. A, B, C, and D may be the same as each other or different from each other. A and B, or, alternatively, C and D may be combined together to form a ring. The Hammett's substituent constant σp value of the electron-withdrawing group represented by A, B, C, and D each independently ranges preferably from 0.30 to 0.85, and more preferably from 0.35 to 0.80.

The Hammett's substituent constant σp values (hereinafter, referred to simply as "σp values") are mentioned in, for example, Chem. Rev. 91, 165 (1991) and in reference documents cited thereby. Values not mentioned here can be obtained according to the method described in this publication. When A and B (C and D) form a ring by being combined together, the σp value of A(C) denotes the σp value of a -A-B-H(-C-10D-H) group, whereas the σp value of B(D) denotes the σp value of -B-A-H(-D-C-H) group. In this case, the σp values are different from each other, because the groups are different in the combined direction from each other.

Preferable concrete examples of the electron-withdrawing group represented by A, B, C, and D include a cyano group, a nitro group, an acyl group having 1 to 10 carbon atoms (for example, acetyl, propionyl, butyryl, pivaloyl, and benzoyl), an alkoxycarbonyl group having 2 to 12 carbon atoms (for example, methoxycarbonyl, ethoxycarbonyl, isopropoxycarbonyl, butoxycarbonyl, and decyloxycarbonyl), an aryloxycarbonyl group having 7 to 11 carbon atoms (for example, phenoxycarbonyl), a carbamoyl group having 1 to 10 carbon atoms (for example, methylcarbamoyl, ethylcarbamoyl, and phenylcarbamoyl), an alkylsulfonyl group having 1 to 10 carbon atoms (for example, methanesulfonyl), an arylsulfonyl group having 6 to 10 carbon atoms (for example, benzenesulfonyl), an alkoxysulfonyl group having 1 to 10 carbon atoms (for example, methoxysulfonyl), a sulfamoyl group having 1 to 10 carbon atoms (for example, ethylsulfamoyl and phenylsulfamoyl), an alkylsulfinyl group having 1 to 10 carbon atoms (for example, methanesulfinyl and ethanesulfinyl), an arylsulfinyl group having 6 to 10 carbon atoms (for example, benzenesulfinyl), an alkylsulfenyl group having 1 to 10 carbon atoms (for example, methanesulfenyl and ethanesulfenyl), an arylsulfenyl group having 6 to 10 carbon atoms (for example, benzenesulfenyl), a halogen atom, an alkynyl group having 2 to 10 carbon atoms (for example, ethinyl), a diacylamino group having 2 to 10 carbon atoms (for example, diacetylamino), a phosphoryl group, a carboxyl group, and a 5- or 640-membered heterocyclic group (for example, 2-benzothiazolyl, 2-benzoxazolyl, 3-pyridyl, 5-(1H)-tetrazolyl, and 4-pyrimidyl).

In formula (I), examples of the substituent group on methine carbon, which is represented by R, include a chain or cyclic alkyl group having 1 to 20 carbon atoms (for example, methyl, ethyl, n-propyl, isopropyl, and n-butyl), a substituted or unsubstituted aryl group having 6 to 18 carbon atoms (for example, phenyl, chlorophenyl, anisyl, toluyl, 2,4-di-t-amyl, and 1-naphthyl), an alkenyl group (for example, vinyl and 2-methylvinyl), an alkynyl group (for example, ethinyl, 2-methylethinyl, and 2-phenylethinyl), a halogen atom (for example, F, Cl, Br, and I), a cyano group, a hydroxyl group, a carboxyl group, an acyl group (for example, acetyl, benzoyl, salicyloyl, and pivaloyl), an alkoxy group (for example, methoxy, butoxy, and cyclohexyloxy), an aryloxy group (for example, phenoxy and 1-naphthoxy), an alkylthio group (for example, methylthio, butylthio, benzylthio, and 3-methoxypropylthio), and an arylthio group (for example, phenylthio and 4-chlorophenylthio).

Examples of the substituent group on methine carbon, which is represented by R, further include an alkylsulfonyl group (for example, methanesulfonyl and butanesulfonyl), an arylsulfonyl group (for example, benzenesulfonyl and para-toluenesulfonyl), a carbamoyl group having 1 to 10 carbon atoms, an amide group having 1 to 10 carbon atoms, an imide group having 2 to 12 carbon atoms, an acyloxy group having 2 to 10 carbon atoms, an alkoxycarbonyl group having 2 to 10 carbon atoms, and a heterocyclic group (for example, aromatic heterocyclic rings such as pyridyl, thienyl, furyl, thiazolyl, imidazolyl, and pyrazolyl, and aliphatic heterocyclic rings such as pyrrolidine ring, piperidine ring, morpholine ring, pyran ring, thiopyran ring, dioxane ring, and dithiolan ring).

Preferable examples of R include a halogen atom, a chain or cyclic alkyl group having 1 to 8 carbon atoms, an aryl group having 6 to 10 carbon atoms, an alkoxy group having 1 to 8 carbon atoms, an aryloxy group having 6 to 10 carbon atoms, and a heterocyclic group having 3 to 10 carbon atoms. In particular, preferable examples of R include a chlorine atom, an alkyl group having 1 to 4 carbon atoms (for example, methyl, ethyl, and isopropyl), phenyl, an alkoxy group having 1 to 4 carbon atoms (for example, methoxy and ethoxy), phenoxy, and a nitrogen-containing heterocyclic group having 4 to 8 carbon atoms (for example, 4-pyridyl, benzoxazole-2-yl, and benzothiazole-2-yl).

n represents an integer of 0 to 2m+1. If n is 2 or greater, a plurality of Rs may be the same as each other or different from each other. R and R may be combined together to form a ring. At this time, the number of ring members is preferably 4 to 8, and in particular, preferably 5 or 6. The ring-forming atom is preferably a carbon atom, an oxygen atom, or a nitrogen atom, and in particular, preferably a carbon atom.

A, B, C, D, and R may further have a substituent group. The same substituent group as the monovalent substituent group represented by R in formula (I) can be mentioned as an example of this substituent group.

Concerning an oxonol dye that is used together for an optical disk, preferably, A and B, or C and D are combined together to form a ring, from the viewpoint of thermal decomposition. The following examples can be mentioned as examples of such a ring. In these examples, Ra, Rb, and Rc each independently represents a hydrogen atom or a substituent group.

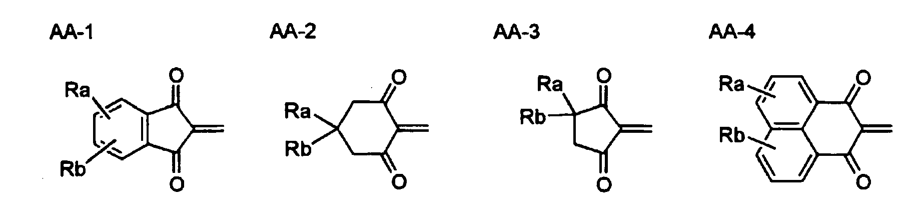

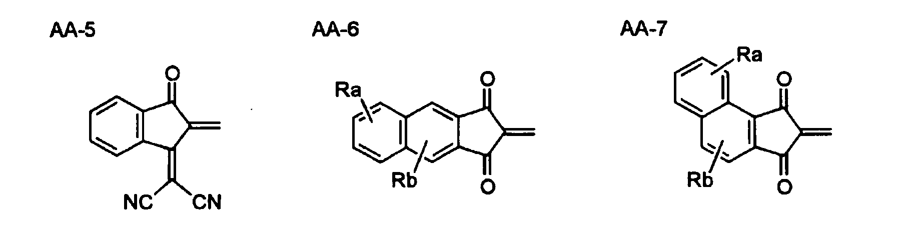

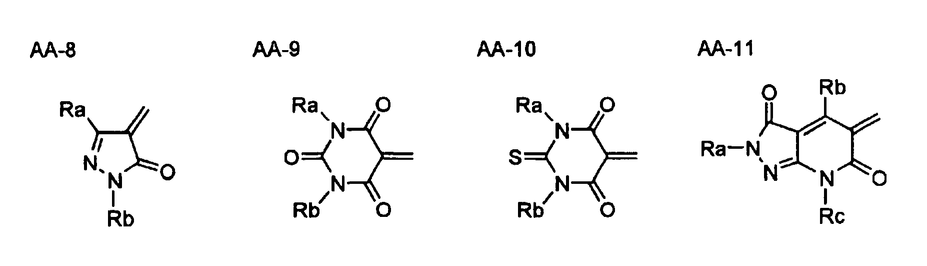

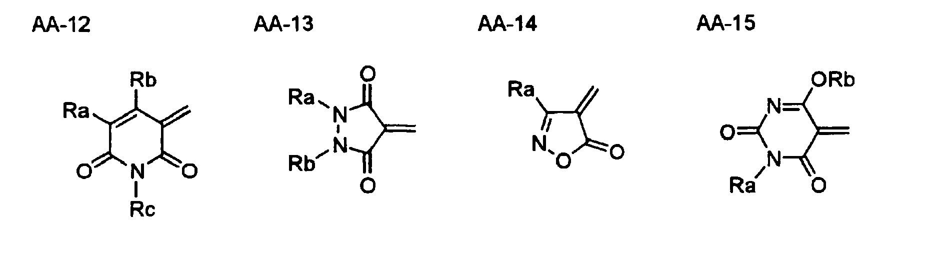

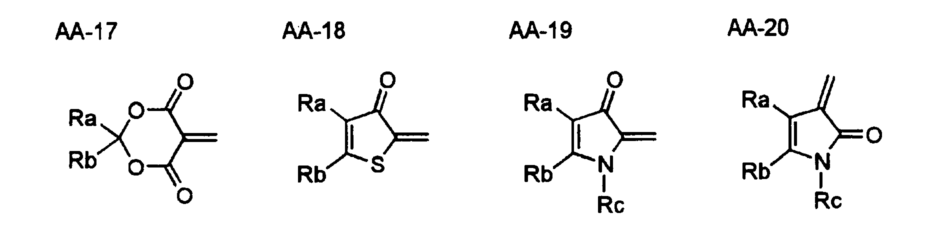

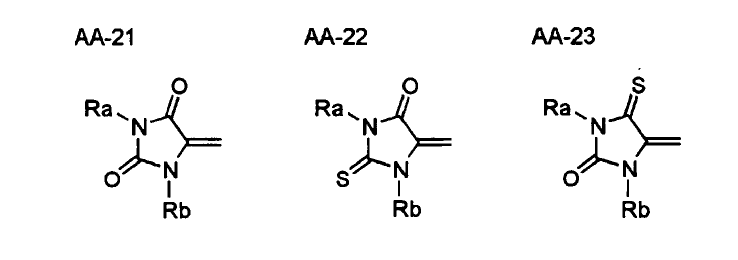

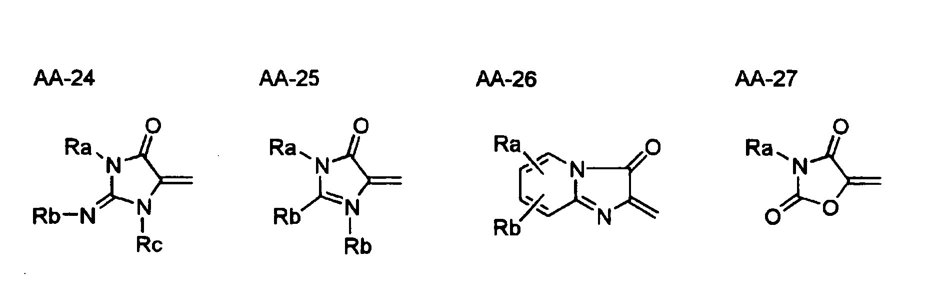

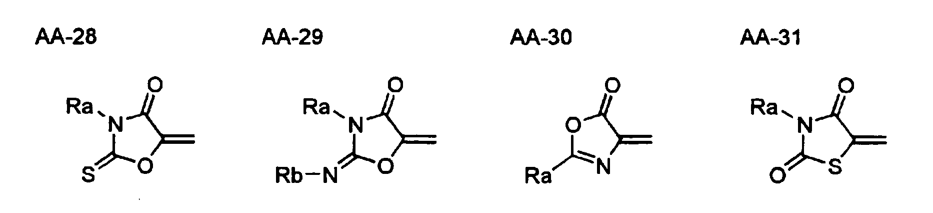

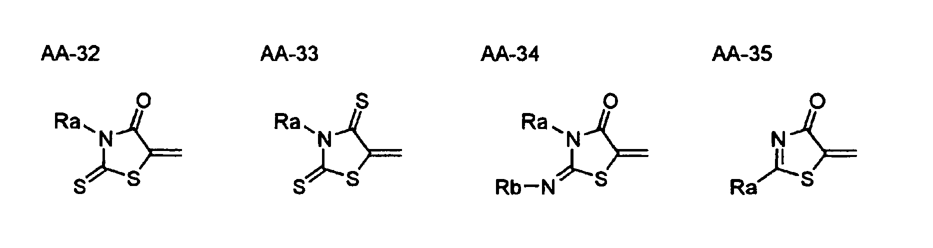

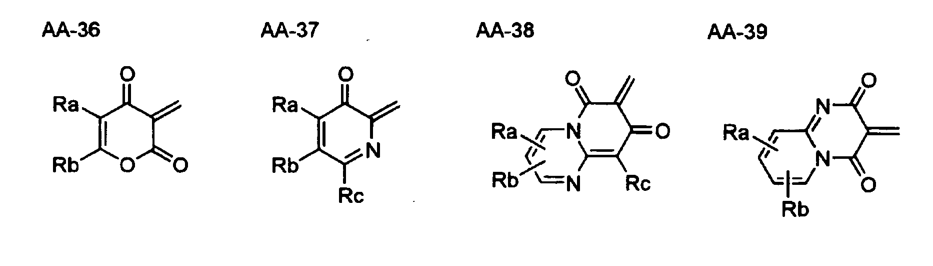

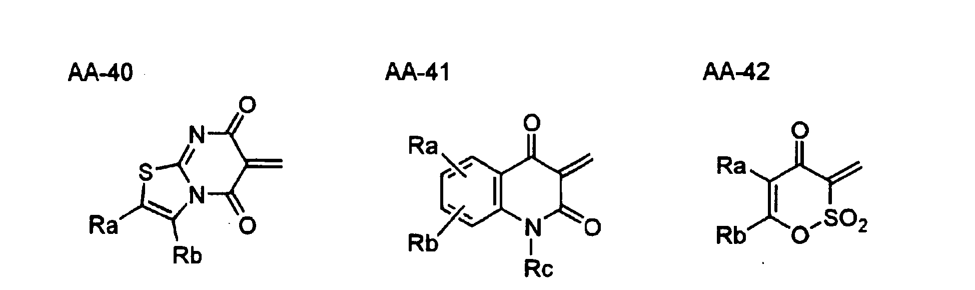

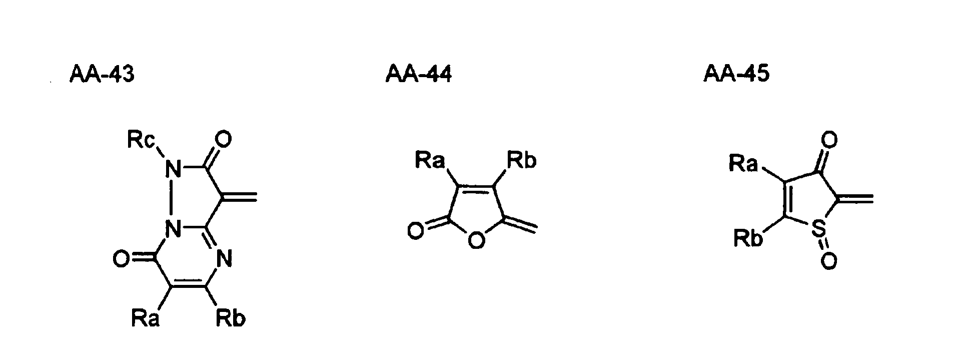

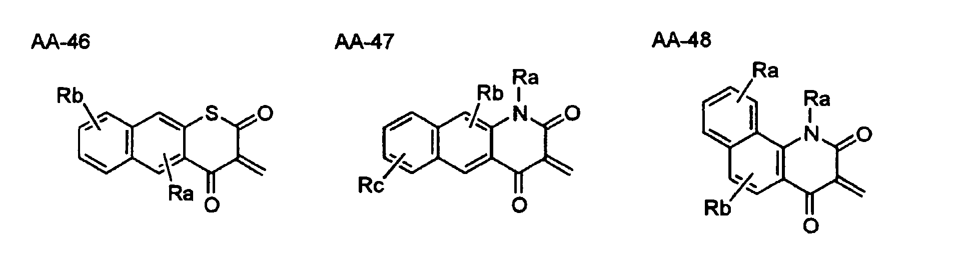

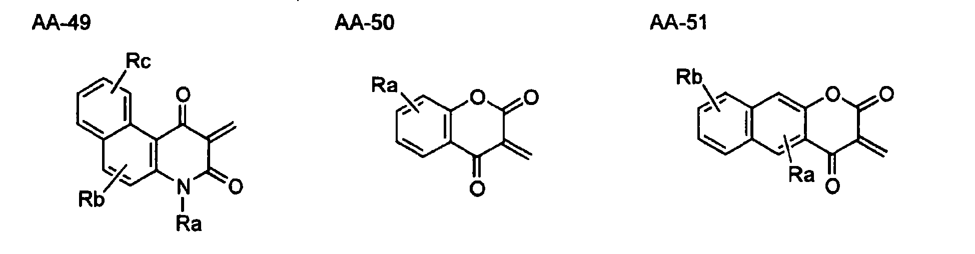

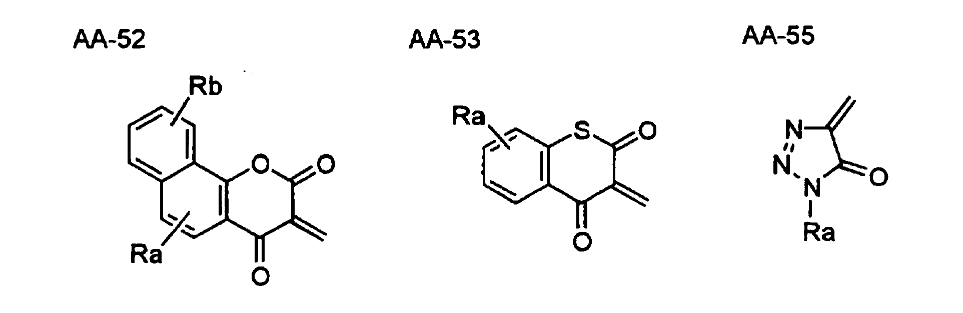

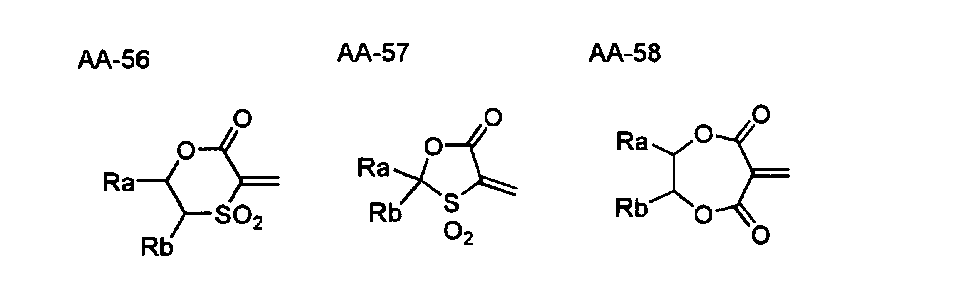

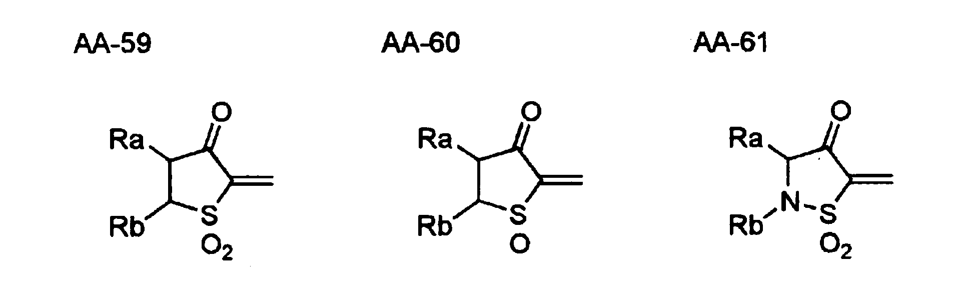

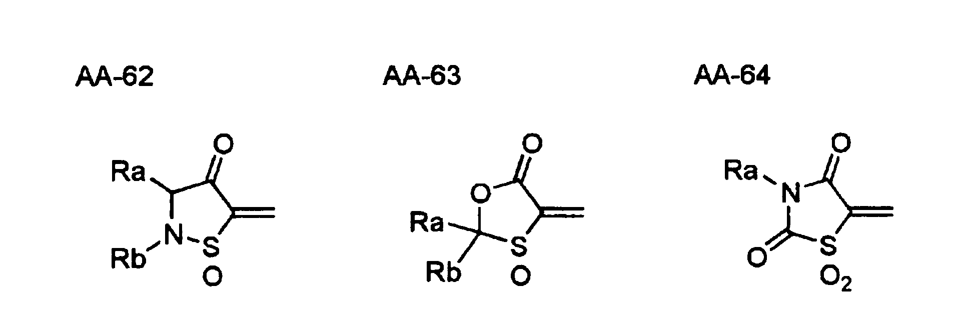

Preferable rings are those represented by AA-8, AA-9, AA-10, AA-11, AA-12, AA-13, AA-14, AA-17, AA-36, AA-39, AA-41, and AA-57. More preferable rings are those represented by AA-8, AA-9, AA-10, AA-13, AA-14, AA-17, and AA-57. Most preferable rings are those represented by AA-9, AA-10, AA-13, AA-17, and AA-57.

Substituent groups represented by Ra, Rb, and Rc are defined in the same way as those represented by R mentioned above. Ra, Rb, and Rc may be combined together to form a carbon ring or a heterocyclic ring. Examples of the carbon ring include saturated or unsaturated 4- to 7-membered carbon rings such as cyclohexyl ring, cyclopentyl ring, cyclohexane ring, and benzene ring. Examples of the heterocyclic ring include saturated or unsaturated 4- to 7-membered heterocyclic rings such as piperidine ring, piperazine ring, morpholine ring, tetrahydrofuran ring, furan ring, thiophene ring, pyridine ring, and pyrazine ring. These carbon rings or heterocyclic rings may be further substituted. Groups capable of being further substituted are defined in the same way as the substituent groups represented by R mentioned above.

In the formula (I), m represents an integer of 0 to 3. The absorption wavelength of the oxonol dye is greatly changed by the value of m. There is a need to design a dye having an optimal absorption wavelength according to the oscillation wavelength of a laser used for recording and reproducing. In this respect, it is important to select any one of the values of m. If the central oscillation wavelength of a laser used for recording and reproducing is 780 nm (i.e., in a semiconductor laser for CD-R recording), m is preferably 2 or 3 in formula (I). If the central oscillation wavelength is 635 nm or 650 nm (in a semiconductor laser for DVD-R recording), m is preferably 1 or 2. If the central oscillation wavelength is 550 nm or less (for example, in a blue-violet semiconductor laser having a central oscillation wavelength of 405 nm), m is preferably 0 or 1.

Preferably, the optical information recording medium of the present invention has the following modes.

Mode (1): Optical information recording medium having a write-once type recording layer containing dyes and a cover layer having a thickness of 0.01 mm to 0.5 mm on a substrate having a thickness of 0.7 mm to 2 mm in this order from the substrate side

Mode (2): Optical information recording medium having a write-once type recording layer containing dyes and a protective plate having a thickness of 0.1 mm to 1.0 mm on a substrate having a thickness of 0.1 mm to 1.0 mm in this order from the substrate side

Preferably, in mode (1), the track pitch of a pre-groove formed in the substrate is 200 nm to 500 nm, the groove width is 25 nm to 250 nm, and the groove depth is 5 nm to 150 nm. Preferably, in mode (2), the track pitch of a pre-groove formed in the substrate is 200 nm to 600 nm, the groove width is 50 nm to 300 nm, the groove depth is 30 nm to 150 nm, and the wobble amplitude is 5 nm to 50 nm.

The optical information recording medium of mode (1) at least has a substrate, a write-once type recording layer, and a cover layer. Materials forming these elements will be described one by one.

### [Substrate of mode (1)]

It is absolutely necessary for the substrate of mode (1) to have a pre-groove (i.e., guide groove) having a shape in the following ranges within which each of the track pitch, the groove width (i.e., half-value width), the groove depth, and the wobble amplitude falls. This pre-groove is formed to achieve a higher recording density than CD-R or DVD-R. This is advantageous, for example, when the optical information recording medium of the present invention is used as a medium compatible with a blue-violet laser.

It is absolutely necessary for the track pitch of the pre-groove to fall within the range of 200 nm to 500 nm. Its upper limit value is preferably 420 nm or less, more preferably 370 nm or less, and even more preferably 330 nm or less. Its lower limit value is preferably 260 nm or more. If the track pitch is less than 200 nm, it will become difficult to accurately form the pre-groove, and there is a case in which the problem of crosstalk arises. If the track pitch exceeds 500 nm, the recording density will be disadvantageously lowered in some cases.

It is absolutely necessary for the groove width (half-value width) of the pre-groove to fall within the range of 25 nm to 250 nm. Its upper limit value is preferably 240 nm or less, more preferably 230 nm or less, and even more preferably 220 nm or less. Its lower limit value is preferably 50 nm or more, more preferably 80 nm or more, and even more preferably 100 nm or more. If the groove width of the pre-groove is less than 25 nm, the groove will not be sufficiently transferred when molded, or the error rate in recording will be increased in some cases. If the groove width exceeds 250 nm, the groove will not be sufficiently transferred in the same way when molded, and the pit formed in recording will be extended, thus causing crosstalk.

It is absolutely necessary for the groove depth of the pre-groove to fall within the range of 5 nm to 150 nm. Its upper limit value is preferably 85 nm or less, more preferably 80 nm or less, and even more preferably 75 nm or less. Its lower limit value is preferably 10 nm or more, more preferably 20 nm or more, and even more preferably 28 nm or more. If the groove depth of the pre-groove is less than 5 nm, a sufficient record-modulation degree cannot be obtained in some cases. If the groove depth exceeds 150 nm, the reflectance ratio will be greatly lowered in some cases.

The groove inclination angle of the pre-groove has an upper limit value of preferably 80° or less, more preferably 75° or less, even more preferably 70° or less, and in particular, preferably 65° or less. Its lower limit value is preferably 20° or more, more preferably 30° or more, and even more preferably 40° or more.

If the groove inclination angle of the pre-groove is less than 20°, a sufficient tracking-error signal amplitude cannot be obtained in some cases. If the groove inclination angle thereof exceeds 80°, molding cannot be satisfactorily performed.

Various materials used as substrate materials for conventional optical information recording mediums can be arbitrarily selected and used for the substrate used in the present invention.

Concrete examples of the materials include glass; acrylic resin such as polycarbonate and polymethyl methacrylate; vinyl chloride-based resin such as polyvinyl chloride and vinyl chloride copolymer; epoxy resin; amorphous polyolefin; polyester; and metal such as aluminum. If necessary, these may be used together.

Thermoplastic resin, such as amorphous polyolefin or polycarbonate, is preferable among these materials, from the viewpoint of moisture resistance, dimensional stability, and low cost. Thereamong, polycarbonate is in particular preferable. If these resins are used, substrates can be manufactured by use of an injection mold.

It is necessary for the thickness of the substrate to fall within the range of 0.7 mm to 2 mm. The thickness of the substrate is preferably 0.9 mm to 1.6 mm, and more preferably 1.0 mm to 1.3 mm.

Preferably, an undercoating layer is formed on the surface of the substrate on the side on which a light-reflecting layer described later is provided, in order to improve flatness and heighten an adhesive force.

Examples of the material of the undercoating layer include high-molecular material, such as polymethyl methacrylate, acrylate-methacrylate copolymer, styrene-maleic anhydride copolymer, polyvinyl alcohol, N-methylolacrylamide, styrene-vinyltoluene copolymer, chlorsulfonated polyethylene, nitrocellulose, polyvinyl chloride, chlorinated polyolefin, polyester, polyimide, vinyl acetate-vinyl chloride copolymer, ethylene-vinyl acetate copolymer, polyethylene, polypropylene, or polycarbonate; and a surface modifier such as a silane coupling agent.

The undercoating layer can be formed in such a way that the material mentioned above is first dissolved or dispersed into a suitable solvent so as to prepare an application liquid, and then the resulting application liquid is applied onto the surface of the substrate according to a coating method such as a spin coating method, a dip coating method, or an extrusion coating method.

The thickness of the undercoating layer is generally 0.005 µm to 20 µm, and preferably 0.01 µm to 10 µm.

### [Write-once type recording layer of mode (1)]

The write-once type recording layer of mode (1) is formed in such a way that a dye is dissolved into a suitable solvent together with, for example, a binder so as to prepare an application liquid, thereafter the resulting application liquid is applied onto a substrate or onto a light-reflecting layer described later so as to form a coating film, and is dried. Herein, the write-once type recording layer may be formed either as a single-layer structure or as a multi-layer structure. If the write-once type recording layer is formed as a multi-layer structure, a step of applying the application liquid thereonto is performed a plurality of times.

The concentration of the dye in the application liquid falls within the range of generally 0.01% to 15% by mass, preferably 0.1% to 10% by mass, more preferably 0.5% to 5% by mass, and most preferably 0.5% to 3% by mass.

Examples of the solvent used to prepare an application liquid include ester such as butyl acetate, ethyl lactate, or cellosolve acetate; ketone such as methyl ethyl ketone, cyclohexanone, or methyl isobutyl ketone; chlorinated hydrocarbon such as dichloromethane, 1,2-dichloroethane, or chloroform; amide such as dimethylformamide; hydrocarbon such as methylcyclohexane; ether such as tetrahydrofuran, ethyl ether, or dioxane; alcohol such as ethanol, n-propanol, isopropanol, or n-butanol diacetone alcohol; fluorine-based solvent such as 2,2,3,3-tetrafluoro-1-propanol; and glycol ether such as ethylene glycol monomethyl ether, ethylene glycol monoethyl ether, or propylene glycol monomethyl ether.

The solvent can be used by a single substance or by combining two or more kinds of substances together in consideration of the solubility of a dye to be used. Various additives, such as antioxidant, UV absorbent, plasticizer, and lubricant, can be further added into the application liquid in accordance with the intended use.

Examples of the liquid applying method include a spray method, a spin coating method, a dip method, a roll coating method, a blade coating method, a doctor roll method, and a screen printing method.

When applied, the temperature of the application liquid falls within the range of preferably 23°C to 50°C, more preferably 24°C to 40°C, and in particular, preferably 24°C to 37°C.

The thickness of the write-once type recording layer falls within the range of, at a land (i.e., a convex part of the substrate), preferably 300 nm or less, more preferably 250 nm or less, even more preferably 200 nm or less, and in particular, preferably 180 nm or less. The lower limit value thereof is preferably 1 nm or more, more preferably 3 nm or more, even more preferably 5 nm or more, and in particular, preferably 7 nm or more.

The thickness of the write-once type recording layer falls within the range of, at a groove (i.e., a concave part of the substrate), preferably 400 nm or less, more preferably 300 nm or less, and even more preferably 250 nm or less. The lower limit value thereof is preferably 10 nm or more, more preferably 20 nm or more, and even more preferably 25 nm or more.

The ratio of the thickness of the write-once type recording layer at the land to the thickness of the write-once type recording layer at the groove is preferably 0.1 or more, more preferably 0.13 or more, even more preferably 0.15 or more, and in particular, preferably 0.17 or more. The upper limit value thereof preferably is less than 1, more preferably 0.9 or less, even more preferably 0.85 or less, and in particular, preferably 0.8 or less.

If the application liquid contains a binder, examples of the binder include natural organic high-molecular substances such as gelatin, cellulose derivative, dextran, rosin, and rubber; and synthetic organic polymers including hydrocarbon-based resin such as polyethylene, polypropylene, polystyrene, and polyisobutylene, vinyl-based resin such as polyvinyl chloride, polyvinylidene chloride, and polyvinyl chloride-polyvinyl acetate copolymer, acrylic resin such as polymethyl acrylate and polymethyl methacrylate, and precondensates of thermosetting resin such as polyvinyl alcohol, chlorinated polyethylene, epoxy resin, butyral resin, rubber derivative, and phenol-formaldehyde resin. If such a binder is used together as a material for the write-once type recording layer, the amount of the binder used falls within the range of generally 0.01 times to 50 times (by mass) with respect to a dye, and preferably 0.1 times to 5 times (by mass).

To further improve the light resistance of the write-once type recording layer, the write-once type recording layer can contain various discoloration inhibitors. Generally, a singlet oxygen quencher is used as the discoloration inhibitor. In the present invention, the light resistance can be expected to be further improved by mixing this singlet oxygen quencher therewith. A substance disclosed by Patent Document 1 mentioned above can be used as the singlet oxygen quencher.

The amount of discoloration inhibitors, such as singlet oxygen quenchers, to be used falls within the range of normally 0.1% to 50% by mass with respect to the amount of dyes, preferably 0.5% to 45% by mass, more preferably 3% to 40% by mass, and in particular, preferably 5% to 25% by mass.

### [Cover layer of mode (1)]

The cover layer of mode (1) is bonded onto the write-once type recording layer or onto a barrier layer described later with an adhesive or a bonding material therebetween.

No specific limitations are imposed on the cover layer as long as the cover layer is a film made of a transparent material. Preferable examples of the material for the cover layer include acrylic resin such as polycarbonate and polymethyl methacrylate; vinyl chloride-based resin such as polyvinyl chloride and vinyl chloride copolymer; epoxy resin; amorphous polyolefin; polyester; and cellulose triacetate. Among these materials, polycarbonate or cellulose triacetate is more preferably used.

The term "transparent" used here denotes that transmittance with respect to light used for recording and reproducing information is 80% or more.

The cover layer may contain various additives as long as effects of the present invention are not lessened. For example, it is permissible to contain a UV absorber to cut light having wavelengths of 400 nm or less and/or dyes to cut light having wavelengths of 500 nm or more.

Concerning surface physical properties of the cover layer, preferably, the surface roughness has a two-dimensional roughness parameter of 5 nm or less and a three-dimensional roughness parameter of 5 nm or less.

From the viewpoint of the condensing degree of light used for recording and reproducing information, the birefringence of the cover film is preferably 10 nm or less.

The thickness of the cover layer is appropriately set depending upon the wavelength of a laser beam emitted for recording and reproducing information and upon "NA." In the present invention, the thickness of the cover layer is preferably 0.01 mm to 0.5 mm, and more preferably 0.05 mm to 0.12 mm.

The total thickness consisting of the thickness of the cover layer and that of the adhesive or that of the bonding material is preferably 0.09 mm to 0.11 mm, and more preferably 0.095 mm to 0.105 mm.

When the optical information recording medium is produced, a light incidence surface of the cover layer may be provided with a protective layer (hard coat layer) by which the light incidence surface is prevented from being damaged.

Preferably, a UV-curable resin, an EB-curable resin, a heat-curable resin, or the like, is used for the adhesive with which the cover layer is bonded to the recording layer or the barrier layer. In particular, preferably, a UV-curable resin is used therefor.

If a UV-curable resin is used as the adhesive, the UV-curable resin can be directly applied onto the surface of the barrier layer from a dispenser, or alternatively, can be dissolved into a suitable solvent, such as methyl ethyl ketone or ethyl acetate, so as to prepare an application liquid, and the resulting application liquid can be applied thereonto. In order to prevent a produced optical information recording medium from being warped, it is preferable to use a UV-curable resin having a small shrinkage factor, of which the adhesive layer is made. For example, "SD-640 (trade name)" manufactured by Dainippon Ink and Chemicals, Inc. can be mentioned as the UV-curable resin.

Preferably, for example, the adhesive is applied by a predetermined amount onto the surface of the barrier layer to be bonded to the cover layer, thereafter the cover layer is placed thereon, thereafter the adhesive is expanded so as to become uniform between the to-be-bonded surface and the cover layer according to a spin coating method, and the adhesive is hardened.

The thickness of an adhesive layer made of the adhesive is preferably 0.1 µm to 100 µm, more preferably 0.5 µm to 50 µm, and even more preferably 10 µm to 30 µm.

An acrylic-based, rubber-based, or silicon-based bonding material can be used to bond the cover layer. From the viewpoint of transparency and durability, it is preferable to use an acrylic-based bonding material. A preferable example of the acrylic-based bonding material is a compound that is composed mainly of 2-ethylhexyl acrylate or n-butyl acrylate and that is obtained by copolymerizing short-chain alkyl acrylate or methacrylate, such as methyl acrylate, ethyl acrylate, or methyl methacrylate, with acrylic acid, methacrylic acid, acrylamide derivative, maleic acid, hydroxyl ethyl acrylate, or glycidyl acrylate, which can serve as a crosslinking site with a crosslinking agent, so as to heighten a cohesive force. The mixing ratio and the kinds among the principal component, the short-chain component, and the component to add the crosslinking site are appropriately adjusted, thus making it possible to change a glass-transition temperature (Tg) and a crosslink density.

For example, an isocyanate-based crosslinking agent can be mentioned as a crosslinking agent used together with the bonding material mentioned above. Examples of the isocyanate-based crosslinking agent include isocyanates such as tolylene diisocyanate, 4,4'-diphenylmethane diisocyanate, hexamethylene diisocyanate, xylylene diisocyanate, naphthylene-1,5-diisocyanate, o-toluidine isocyanate, isophorone diisocyanate, and triphenylmethane triisocyanate; products obtained from any one of these isocyanates and a polyalcohol; and polyisocyanates produced by condensing these isocyanates. Examples of commercially available products of these isocyanates include Colonate L, Colonate HL, Colonate 2030, Colonate 2031, Milionate MR, and Milionate HTL, each of which is manufactured by Nippon Polyurethane Industry Co., Ltd.; Takenate D-102, Takenate D-110N, Takenate D-200, and Takenate D-202, each of which is manufactured by Takeda Pharmaceutical Company Limited; and Desmodule L, Desmodule IL, Desmodule N, and Desmodule HL, each of which is manufactured by Sumitomo Bayer Urethane Co., Ltd.

It is possible that the bonding material is uniformly applied by a predetermined amount onto a to-be-bonded surface of a barrier layer, thereafter a cover layer is placed thereon, and the bonding material is hardened. Alternatively, it is possible that the bonding material is uniformly pre-applied by a predetermined amount onto the one side of a cover layer so as to form a coating film of the bonding material, thereafter the resulting coating film is bonded to a to-be-bonded surface, and the bonding material is hardened.

Alternatively, a commercially available adhesive film pre-provided with an adhesive layer may be used for a cover layer. The thickness of an adhesive layer made of such a bonding material is preferably 0.1 µm to 100 µm, more preferably 0.5 µm to 50 µm, and even more preferably 10 µm to 30 µm.

### [Other layers in mode (1)]

The optical information recording medium of mode (1) may have other arbitrary layers in addition to the indispensable layers mentioned above as long as effects of the present invention are not lessened. Examples of the other arbitrary layers include a label layer that has a desired image and that is formed on the back surface of the substrate (i.e., on the side of a non-formation surface opposite to the side on which the write-once type recording layer is formed), a light-reflecting layer provided between the substrate and the write-once type recording layer (described later), a barrier layer provided between the write-once type recording layer and the cover layer (described later), and an interface layer provided between the light-reflecting layer and the write-once type recording layer. The label layer can be made of, for example, ultraviolet-curable resin, heat-curable resin, or heat-dried resin.

These indispensable and arbitrary layers may each have a single-layer structure or a multi-layer structure.

### [Light-reflecting layer in mode (1)]

In the optical information recording medium of mode (1), it is preferable to form a light-reflecting layer between the substrate and the write-once type recording layer, in order to heighten the reflectance ratio with respect to a laser beam or to provide a function to improve recording and reproducing characteristics.

The light-reflecting layer can be formed on the substrate by subjecting a light reflective material having a high reflectance ratio with respect to a laser to a vacuum deposition process, a sputtering process, or an ion plating process.

The thickness of the light-reflecting layer is generally 10 nm to 300 nm, and preferably 50 nm to 200 nm.

Preferably, the reflectance ratio is 70% or more.

Examples of the light reflective material with a high reflectance ratio include stainless steels, semimetals, and metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi. These light reflective materials may be used individually, or may be used in the form of a combination consisting of two or more thereof, or may be used in the form of an alloy. Preferably, Cr, Ni, Pt, Cu, Ag, Au, Al, and stainless steels are used thereamong. In particular, preferably, Au, Ag, Al, or an alloy thereof is used. Most preferably, Au, Ag, or an alloy thereof is used.

### [Barrier layer (intermediate layer) in mode (1)]

In the optical information recording medium of mode (1), preferably, a barrier layer is formed between the write-once type recording layer and the cover layer. The barrier layer is provided to improve preservability of the write-once type recording layer, to improve adhesiveness between the write-once type recording layer and the cover layer, to adjust the reflectance ratio, and to adjust the thermal conductivity. No specific limitations are imposed on materials used for the barrier layer as long as the material can transmit light used for recording and reproducing information and as long as the functions mentioned above can be fulfilled. For example, the material used for the barrier layer generally has a low permeability with respect to gas and water, and is preferably a dielectric material.

Preferably, concrete examples of the material include a nitride, an oxide, a carbide, and a sulfide of Zn, Si, Ti, Te, Sn, Mo, Ge, etc., more preferably ZnS, MoO₂, GeO₂, TeO, SiO₂, TiO₂, ZuO, ZnS-SiO₂, SnO₂, and ZnO-Ga₂O₃, and even more preferably ZnS-SiO₂, SnO₂, ZnO-Ga₂O₃, and SiO₂.

The barrier layer can be formed according to a vacuum film formation method, such as vacuum deposition, DC sputtering, RF sputtering, or ion plating. In particular, preferably, the sputtering method is used.

The thickness of the barrier layer is preferably 1 nm to 200 nm, more preferably 2 nm to 100 nm, and even more preferably 3 nm to 50 nm.

Next, the optical information recording medium of mode (2) will be described.

The optical information recording medium of mode (2) is an optical information recording medium having a bonded-together type layer structure. The typical layer structure thereof is as follows.
(1) A first layer structure is characterized in that a write-once type recording layer, a light-reflecting layer, and an adhesive layer are formed on a substrate in this order, and a protective plate is provided on the adhesive layer.
(2) A second layer structure is characterized in that a write-once type recording layer, a light-reflecting layer, a protective layer, and an adhesive layer are formed on a substrate in this order, and a protective plate is provided on the adhesive layer.
(3) A third layer structure is characterized in that a write-once type recording layer, a light-reflecting layer, a protective layer, an adhesive layer, and a protective layer are formed on a substrate in this order, and a protective plate is provided on the protective layer.
(4) A fourth layer structure is characterized in that a write-once type recording layer, a light-reflecting layer, a protective layer, an adhesive layer, a protective layer, and a light-reflecting layer are formed on a substrate in this order, and a protective plate is provided on the light-reflecting layer.
(5) A fifth layer structure is characterized in that a write-once type recording layer, a light-reflecting layer, an adhesive layer, and a light-reflecting layer are formed on a substrate in this order, and a protective plate is provided on the light-reflecting layer.

These layer structures (1) to (5) are only a few of the examples, and hence, without being limited to the orders mentioned above, a replacement may be made thereamong, or some of the structure elements may be removed. Additionally, the write-once type recording layer may be also formed on the side of the protective plate. If so, the optical information recording medium can be a two-sided medium capable of recording and reproducing information from both sides. Additionally, each layer may be a single layer or a multi-layer made up of a plurality of layers.

The optical information recording medium of mode (2) will be hereinafter described in detail, taking, as an example, one of the layer structures in which a write-once type recording layer, a light-reflecting layer, an adhesive layer, and a protective plate are formed on a substrate in this order from the substrate side.

### [Substrate of mode (2)]

The substrate of mode (2) is absolutely required to have a pre-groove (guide groove) having a track pitch, a groove width (half-value width), a groove depth, and a wobble amplitude each of which falls within the following range. The pre-groove is provided to achieve a higher recording density than that of CD-R or DVD-R. The optical information recording medium of the present invention is suitable, for example, when this is used as a medium compatible with a blue-violet laser.

The track pitch of the pre-groove is absolutely required to be 200 nm to 600 nm. Its upper limit value is preferably 450 nm or less, and more preferably 430 nm or less. Its lower limit value is preferably 300 nm or more, more preferably 330 nm or more, and even more preferably 370 nm or more. If the track pitch is less than 200 nm, it becomes difficult to accurately form the pre-groove, and the problem of crosstalk will occur in some cases. If the track pitch exceeds 600 nm, the recording density will disadvantageously decrease in some cases.

The groove width (half-value width) of the pre-groove is absolutely required to be 50 nm to 300 nm. Its upper limit value is preferably 290 nm or less, more preferably 280 nm or less, and even more preferably 250 nm or less. Its lower limit value is preferably 100 nm or more, more preferably 120 nm or more, and even more preferably 140 nm or more. If the groove width of the pre-groove is less than 50 nm, the groove will not be sufficiently transferred when molded, or the rate of an error in recording will rise in some cases. If the groove width thereof exceeds 300 nm, the expansion of a pit formed during recording will cause crosstalk, or a sufficient modulation degree cannot be obtained in some cases.

The groove depth of the pre-groove is absolutely required to be 30 nm to 150 nm. Its upper limit value is preferably 140 nm or less, more preferably 130 nm or less, and even more preferably 120 nm or less. Its lower limit value is preferably 40 nm or more, more preferably 50 nm or more, and even more preferably 60 nm or more. If the groove depth of the pre-groove is less than 30 nm, a sufficient record-modulation degree cannot be obtained in some cases. If the groove depth thereof exceeds 150 nm, the reflectance ratio will greatly decrease in some cases.

One of various materials used as substrate materials in conventional optical information recording mediums can be arbitrarily used for the substrate used in mode (2). Concrete examples and preferable examples of the material are the same as in the substrate of mode (1).

The thickness of the substrate is required to be 0.1 mm to 1.0 mm, preferably 0.2 mm to 0.8 mm, and more preferably 0.3 mm to 0.7 mm.

Preferably, an undercoating layer is formed on a surface of the substrate on the side on which a write-once type recording layer described later is provided, in order to improve flatness and to heighten an adhesive force. The material of the undercoating layer, the coating method, concrete examples and preferable examples of the thickness of the undercoating layer are the same as those of the undercoating layer of mode (1).

### [Write-once type recording layer of mode (2)]

Details concerning a write-once type recording layer of mode (2) are the same as those of the write-once type recording layer of mode (1).

### [Light-reflecting layer of mode (2)]

In mode (2), there is a case in which a light-reflecting layer is formed on the write-once type recording layer, in order to heighten the reflectance ratio with respect to a laser beam or to provide a function to improve recording and reproducing characteristics. Details concerning the light-reflecting layer of mode (2) are the same as those of the light-reflecting layer of mode (1).

### [Adhesive layer of mode (2)]

The adhesive layer of mode (2) is an arbitrary layer formed to improve adhesion between the light-reflecting layer and a protective plate described later.

Preferably, a light-curable resin is used as a material for the adhesive layer. In particular, preferably, a material having a small hardening shrinkage ratio is used to prevent a disk from being warped. A UV-curable resin (UV-curable adhesive), such as "SD-640" or "SD-661" manufactured by Dainippon Ink and Chemicals, Incorporated, can be mentioned as the light-curable resin.

Preferably, the thickness of the adhesive layer is 1 µm to 1000 µm, in order to allow the adhesive layer to have elasticity.

### [Protective plate of mode (2)]

The protective plate (dummy plate) of mode (2) is the same in material and shape as the substrate mentioned above. The thickness of the protective plate is required to be 0.1 mm to 1.0 mm, preferably 0.2 mm to 0.8 mm, and more preferably 0.3 mm to 0.7 mm.

### [Protective layer of mode (2)]

The optical information recording medium of mode (2) has a protective layer in order to physically and chemically protect the light-reflecting layer and the write-once type recording layer, depending on the layer structure of the medium.

Examples of materials used for the protective layer include inorganic materials, such as ZnS, ZnS-SiO₂, SiO, SiO₂, MgF₂, SnO₂, and Si₃N₄, and organic materials, such as thermoplastic resin, heat-curable resin, and UV-curable resin.

The protective layer can be formed by, for example, bonding a film obtained through a plastic extrusion process to the light-reflecting layer with an adhesive therebetween. Alternatively, the protective layer may be provided according to a vacuum deposition method, a sputtering method, or an application method.

If thermoplastic resin or heat-curable resin is used for such a protective layer, this resin is dissolved into a suitable solvent so as to prepare an application liquid, and the resulting application liquid is applied and dried, thus forming a protective layer. If UV-curable resin is used therefor, this resin is directly applied and hardened, or, alternatively, is dissolved into a suitable solvent so as to prepare an application liquid, and the resulting application liquid is applied and hardened by being irradiated with UV light, thus forming a protective layer. Various additives, such as an antistatic agent, an anti-oxidant, and a UV absorber, may be further added to these application liquids for any purpose.

The thickness of the protective layer is generally 0.1 µm to 1 mm.

### [Other layers of mode (2)]

The optical information recording medium of mode (2) may have other arbitrary layers in addition to the indispensable layers mentioned above, as long as the arbitrary layers do not impair effects of the present invention. Details concerning the arbitrary layers are the same as those concerning the other layers of mode (1).

Next, a description will be given of a method of recording electronic information on the optical information recording medium of the present invention (hereinafter, referred to also as an "optical information recording method").

Electronic information is recorded by using the optical information recording medium of preferable mode (1) or mode (2) mentioned above, for example, in the following way. First, a recording beam of light, such as a semiconductor laser beam, is projected from the substrate side or the protective layer side while rotating the optical information recording medium at a fixed linear velocity (0.5 to 10 m/second) or at a fixed angular velocity. The recording layer absorbs the projected beam, and locally undergoes a rise in temperature. As a result, a physical or chemical change (for example, generation of pits) occurs. Accordingly, presumably, information is recorded by changing its optical properties. In the present invention, preferably, a semiconductor laser beam that has oscillation wavelengths falling within the range of 440 nm or less is used as recording light. Preferable examples of the light source include a blue-violet semiconductor laser beam that has oscillation wavelengths falling within the range of 390 nm to 415 nm and a blue-violet SHG laser beam having a central oscillation wavelength of 425 nm, which is obtained by halving an infrared semiconductor laser beam having a central oscillation wavelength of 850 nm by use of an optical waveguide device. In particular, preferably, a blue-violet semiconductor laser beam that has an oscillation wavelength falling within the range of 390 nm to 415 nm is used from the viewpoint of the recording density. Information recorded in this way can be reproduced by projecting a semiconductor laser beam from the substrate side or the protective layer side and detecting its reflected light while rotating the optical information recording medium at the same fixed linear velocity as above.

### [EXAMPLES]

The present invention will be described in more detail with reference to examples. However, the present invention is not limited to the following examples, within the scope not departing from the essentials of the present invention. Herein, the term "part" is concerned with the mass standard as long as no specific explanation is made.

### Synthesis Example 1: Synthesis of Compound (5)

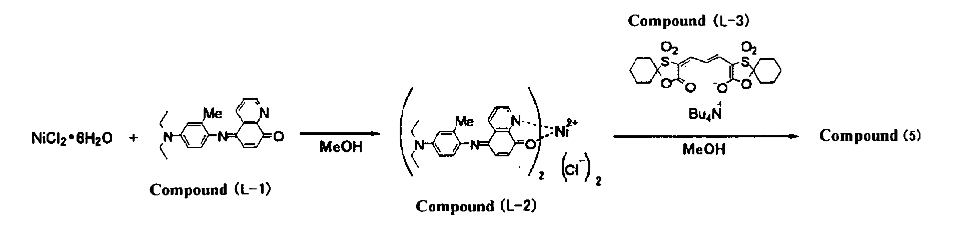

0.51 g of NiCl₂·6H₂O was dissolved into 10 ml of methanol, and 1.50 g of compound (L-1) was added thereto while being stirred. After being stirred for a while, compound (L-3) was added thereto, and was stirred for two hours at room temperature. Methanol was distilled away under depressure, thereafter water was added, thereafter precipitation, suction, and filtration were performed, and, as a result, compound (5) was obtained.

MALDI-TOF-MS: 443.2 (nega), 697.5 (posi)

### Synthesis Example 2: Synthesis of compound (12)

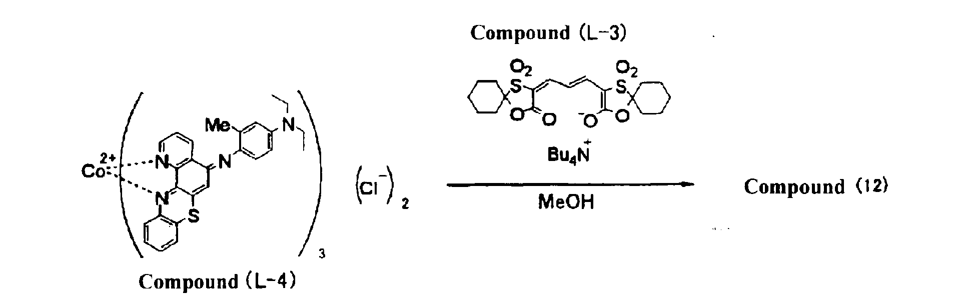

5 ml of methanol was added to 0.21 g of compound (L-4), and 5 ml of a methanol solution including 0.30 g of compound (L-3) was added while being stirred. The mixture was heated and refluxed for one hour, and was returned to room temperature. 40 ml of distilled water was added, and precipitates were obtained. The precipitates were suctioned and filtered, and, as a result, compound (12) was obtained. The yield was 0.37 grams.

Synthesis can be performed in the same way as in compound (5) by use of other oxonol-dye anionic parts or other metal complex cations if a reaction solvent or a reaction temperature is appropriately selected.

### -Absorption spectrum of dye-

2 g of a metal complex compound [compound (5)]according to the present invention was added to and dissolved in 100 ml of 2,2,3,3-tetrafluoro-1-propanol. The resulting dye-containing liquid was then applied and dried. Thereafter, the film absorption spectrum of a dried coating film was measured by UV-3100PC (manufactured by Shimadzu Corporation). The results are shown in Table 2.

### Example 1

### Production of optical information recording medium

### -Production of substrate-

An injection-molded substrate was produced which was made of polycarbonate resin having a spiral pre-groove (track pitch: 400 nm, groove width: 190 nm, groove depth: 90 nm, groove inclination angle: 65°, and wobble amplitude: 20 nm), having a thickness of 0.6 mm, an outer diameter of 120 mm, and an inner diameter of 15 mm. The mastering of a stamper used during injection molding was performed by use of laser cutting (351 nm).

### -Formation of write-once type recording layer-

2 g of the metal complex compound [compound (5)] synthesized above was added to and dissolved in 100 ml of 2,2,3,3-tetrafluoro-1-propanol, and eight kinds of dye-containing application liquids were prepared. The dye-containing application liquids prepared above were applied to the pre-groove side of each of mutually different substrates according to the spin coating method under the conditions of 23°C and 50% RH while changing the number of revolutions from 300 r.p.m. to 4000 r.p.m. Thereafter, the liquids were preserved for one hour under the conditions of 23°C and 50% RH, and a write-once type recording layer was formed.

The write-once type recording layer was formed in this way, and then an annealing process was performed with a clean oven. The annealing process was performed at 80°C for one hour such that the substrate was held on a vertical stack pole while being spaced by a spacer.

### -Formation of light-reflecting layer-

An ANC light-reflecting layer (Ag: 98.1 at%, Nd: 0.7 at%, Cu: 0.9 at%) that is a vacuum film formation layer having a thickness of 100 nm was formed on the write-once type recording layer in Ar atmosphere according to the DC sputtering method by use of "Cube" manufactured by Unaxis Co. Ltd. The thickness of the light-reflecting layer was adjusted by a sputtering time.

### -Bonding of protective plate-

An ultraviolet-curable resin (SD-640 manufactured by Dainippon Ink and Chemicals, Incorporated.) was further applied onto the light-reflecting layer by spin coating so as to form an adhesive layer. A polycarbonate-made protective plate (which has the same structure as the substrate except that the protective plate has no pre-groove) was bonded to the resulting adhesive layer, and was hardened by being irradiated with an ultraviolet ray, thus producing an optical information recording medium of Invention 3. At this time, the thickness of the adhesive layer made of the ultraviolet-curable resin was 25 µm.

### Example 2

An optical information recording medium of Invention 4 was produced in the same way as that of Invention 3 of Example 1 except that the metal complex compound used for "formation of write-once type recording layer" in Example 1 was replaced by compound (5) + compound (E) mentioned below [compound (5): compound (E)=1:1 [mass ratio]] as shown in Table 2 below. Further, optical information recording mediums of Inventions 5 and 6 were produced in the same way as that of Invention 3 of Example 1 except that the metal complex compound of Example 1 was replaced by compound (5) + compound (E) [compound (5):compound (E)=3:7 [mass ratio]] and by compound (5) + compound (E) [compound (5):compound (E) =7:3 [mass ratio]].

### (Comparative Examples 1 and 2)

An optical information recording medium for comparison was produced in the same way as that of Invention 3 of Example 1 except that the metal complex compound used for "formation of write-once type recording layer" in Example 1 was replaced by compound (A) + compound (B) mentioned below [compound (A):compound (B)=1:10 [mass ratio]] (Comparative Example 1) and by compound (C) + compound (D) mentioned below [compound (C):compound (D)=1:10 [mass ratio]] (Comparative Example 2) as shown in Table 2 below.

### <Evaluation of optical information recording medium>

### (Measurement and Evaluation)

The optical information recording mediums produced in Inventions 3 to 6 and Comparative Examples 1 and 2 were evaluated as follows. The measurement and evaluation results are shown in Table 2 below.

### 1. Recording and Reproducing Characteristics

Signal waveforms obtained after recording were observed with an oscilloscope (SS-7825 manufactured by IWATSU TEST INSTRUMENTS CORPORATION), and were set as a guide according to which recording and reproducing characteristics (light resistance) are evaluated.

In each optical information recording medium produced in Examples and Comparative Examples, a signal (11T) of 1.122 µm was recorded and reproduced at a linear velocity of 6.61 m/s at a clock frequency of 64.8 MHz by use of a 405 nm laser and a recording and reproducing evaluation apparatus ("DDU-1000" manufactured by Pulstec Industrial Co., Ltd.) having a NA0.65 pickup. After recording, waveforms were observed with an oscilloscope ("SS-7825" manufactured by IWATSU TEST INSTRUMENTS CORPORATION). The signal was recorded on the groove. The reproducing power was 0.5 mW. The optical information recording medium that had undergone recording was irradiated with xenon light for ten hours by use of a light resistance test instrument (FAL-25AX-HCBECL model, quartz + #275 filter use, manufactured by Suga Test Instruments Co., Ltd.). Thereafter, a reproducing operation was again performed, and a recording waveform obtained after light irradiation was observed in the same way as above. If a signal waveform is rectangular in a recording waveform observation, this denotes that the waveform is "R," which is desirable for practical use.

### 2. Reproduction Durability

In each optical information recording medium, recording was performed in the same way as in "1. Recording and Reproducing characteristics." Thereafter, reproducing was continuously performed for 30 minutes. Thereafter, recording waveforms were observed with an oscilloscope ("SS-7825" manufactured by IWATSU TEST INSTRUMENTS CORPORATION), and a comparison (reproduction endurance test) was made between the largeness and smallness of a variation in reflectance ratio of the recording portion.

**Table 2**

| | Compound | Absorption of anionic portion λmax (nm) | Absorption of cationic portion λmax (nm) | Recording and reproducing characteristics (before projection of light from Xe lamp) Waveform | Recording and reproducing characteristics (10 hours after projection of light from Xe lamp) Waveform | Recording and reproducing characteristics (30 minutes after reproducing) Variation in reflectance ratio of the recording portion of a recording pit |
|---|---|---|---|---|---|---|
| Invention 3 | Compound (5) | 453 | 785 | R | R | Small |
| Invention 4 | Compound (5) + Compound (E) (mass ratio 1:1) | - | - | R | R | Small |
| Comparative Example 1 | Compound (A) + Compound (B) (mass ratio 1:10) | - | - | R | R | Large |
| Comparative Example 2 | Compound (C) + Compound (D) (mass ratio 1:10) | - | - | R | R | Large |
| Invention 5 | Compound (5) + Compound (E) (mass ratio 3:7) | - | - | R | R | Intermediate |
| Invention 6 | Compound (5) + Compound (E) (mass ratio 7:3) | - | - | R | R | Small |

A recyclability test was made for Inventions 3 to 6. As a result, Inventions 4 to 6 were each regarded as having moderate recyclability, and Invention 3 was confirmed as excellent in recyclability.

### Comparative compound (A)

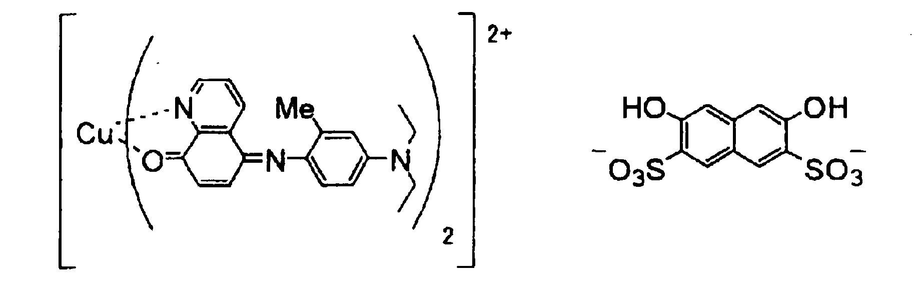

### Comparative compound (B)

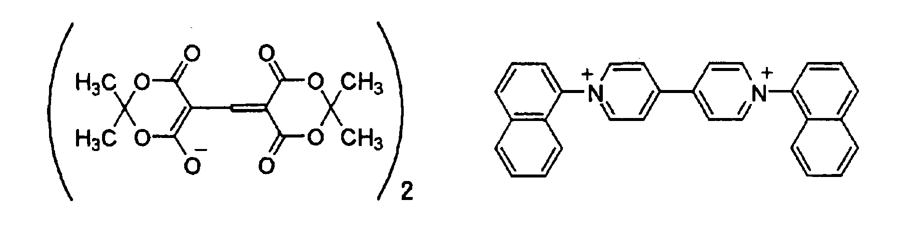

### Comparative compound (C)

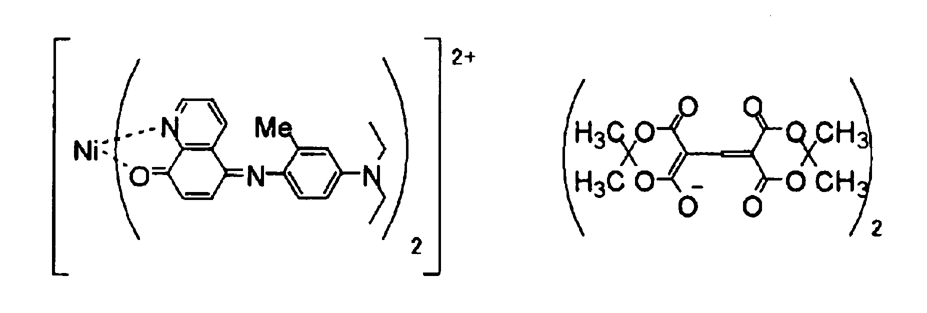

### Comparative compound (D)

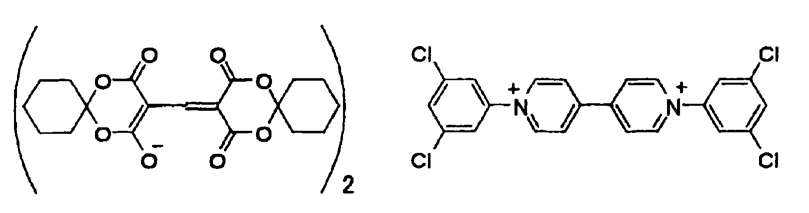

### Comparative compound (E)

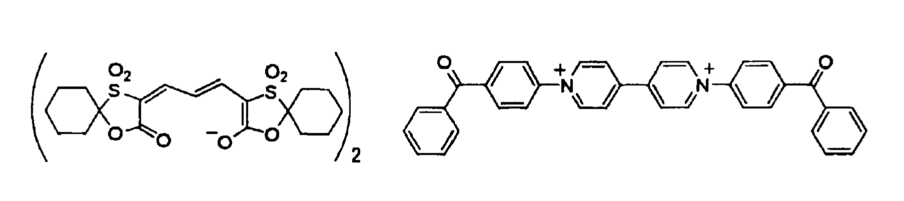

### [EXAMPLE 1]

Optical information recording mediums were produced in the same way as in Example 1 by using compounds (6), (7), (9), (12), (16), (17), and (21) instead of compound (5) of Invention 3. As a result, these optical information recording mediums were produced without any trouble, and exhibited excellent recording and reproducing characteristics, excellent light resistance, and excellent reproduction durability.

### [EXAMPLE 2]

Optical information recording mediums were produced in the same way as in Inventions 4 and 6 by using compounds (6), (7), (9), (12), (16), (17), and (21) instead of compound (5) of Inventions 4 and 6. As a result, likewise, these optical information recording mediums were produced without any trouble, and exhibited excellent recording and reproducing characteristics, excellent light resistance, and excellent reproduction durability.

### [EXAMPLE 3]

The optical information recording medium of Example 1 was produced by use of a production line. Recyclability thereof was evaluated together with Comparative Examples 1 and 2. As a result, a change in the mixture ratio of the compound occurred in Comparative Examples 1 and 2. On the other hand, Invention 3 of Example 1 was a single component, and hence was excellent in recyclability.

Further, optical information recording mediums were produced without any trouble in the same way as in Example 1 by using compounds obtained by adding (C-25), (C-28), and (C-32) to compound (5) in a ratio of 10% by mass. Likewise, these optical information recording mediums exhibited excellent recording and reproducing characteristics, excellent light resistance, and excellent reproduction durability.

As shown in Table 2 above, the compounds of the present invention were all superior in recording and reproducing characteristics and in light resistance. From the test results of reproduction durability, pits were able to be read in each of the optical information recording mediums of the present invention, whereas the optical information recording mediums of Comparative Examples had trouble in reading pits.

From the results of Table 2, it is understood that the optical information recording mediums of the present invention are all excellent in recording and reproducing characteristics, in light resistance, and in reproduction durability, and are, in practice, preferable to the compounds embodied in Japanese Published Unexamined Patent Application No. 2002-52825.

### INDUSTRIAL APPLICABILITY

The present invention is used for optical information recording mediums compatible with blue laser beams, and is used for a method of recording information obtained by using these optical information recording mediums.

The present invention has been described in detail with reference to the specific examples. However, it is apparent to those skilled in the art that the present invention can be variously modified or altered without departing from the gist and scope of the present invention.

This application is based on Japanese Patent Application No. 2005-086593, filed in Japan Patent Office on March 24, 2005, the entire contents of which are hereby incorporated by reference.

## Claims

1. An optical information recording medium having a recording layer capable of recording information by irradiating the recording layer disposed on a substrate with a laser beam of 440 nm or less,
wherein the recording layer comprises an oxonol dye represented by the following formula (1) and a dye other than the oxonol dye represented by formula (1), and a content of the oxonol dye represented by formula (1) is 30% or more by mass based on the total mass of the recording layer: 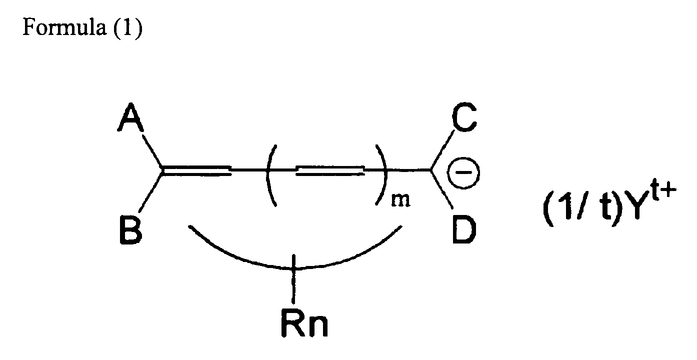 wherein Y^{t+} represents a t-valent cationic dye having an absorption maximum in a range of longer wavelengths than an absorption maximum of an anionic part of the oxonol dye;
t represents an integer of 1 to 4;
A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
R represents a substituent group on a methine carbon;
m represents an integer of 0 to 1; and
n represents an integer of 0 to 2m+1, when n is 2 or greater, a plurality of R's may be the same or different from each other, and the plurality of R's may be combined together to form a ring.

2. The optical information recording medium according to claim 1,
wherein the content of the oxonol dye represented by formula (1) is 70% or more by mass based on the total mass of the recording layer.

3. The optical information recording medium according to claim 1 or 2,
wherein the dye other than the oxonol dye represented by formula (1) is an oxonol dye.

4. An optical information recording medium having a recording layer capable of recording information by irradiating the recording layer disposed on a substrate with a laser beam of 440 nm or less,
wherein the recording layer is substantially made of an oxonol dye represented by formula (1'): 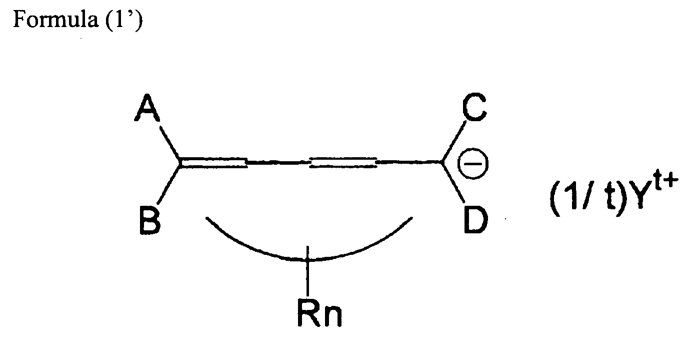 wherein Y^{t+} represents a t-valent cationic dye having an absorption maximum in a range of longer wavelengths than an absorption maximum of an anionic part of the oxonol dye;
t represents an integer of 1 to 4;
A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
R represents a substituent group on a methine carbon; and
n represents an integer of 0 to 3, when n is 2 or greater, a plurality of R's may be the same or different from each other, and the plurality of R's may be combined together to form a ring.

5. An optical information recording medium having a recording layer capable of recording information by irradiating the recording layer disposed on a substrate with a laser beam of 440 nm or less,
wherein the recording layer comprises an oxonol dye represented by formula (1): 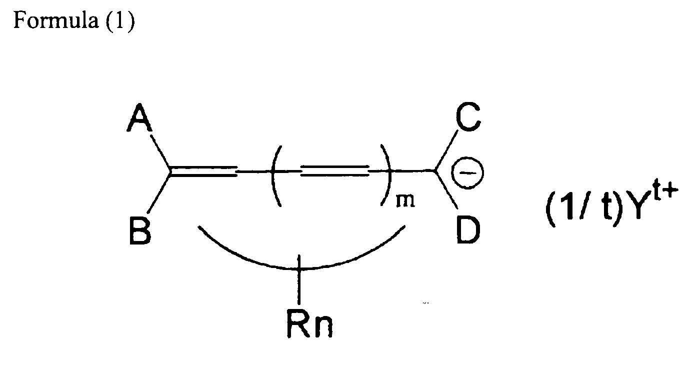 wherein Y^{t+} represents a t-valent cationic dye having an absorption maximum in a range of longer wavelengths than an absorption maximum of an anionic part of the oxonol dye;
t represents an integer of 1 to 4;
A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
R represents a substituent group on a methine carbon;
m represents an integer of 0 to 1; and
n represents an integer of 0 to 2m+1, when n is 2 or greater, a plurality of R's may be the same or different from each other, and the plurality of R's may be combined together to form a ring.

6. An optical information recording medium having a recording layer capable of recording information by irradiating the recording layer disposed on a substrate with a laser beam of 440 nm or less,
wherein the recording layer comprises an oxonol dye represented by formula (1), provided that an oxonol dye outside the scope of formula (1) does not coexist in the recording layer: 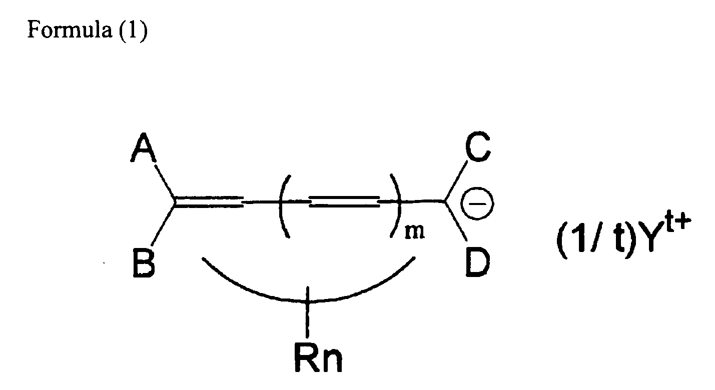 wherein Y^{t+} represents a t-valent cationic dye having an absorption maximum in a range of longer wavelengths than an absorption maximum of an anionic part of the oxonol dye;
t represents an integer of 1 to 4;
A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
R represents a substituent group on a methine carbon;
m represents an integer of 0 to 1; and
n represents an integer of 0 to 2m+1, when n is 2 or greater, a plurality of R's may be the same or different from each other, and the plurality of R's may be combined together to form a ring.

7. The optical information recording medium according to any of claims 1 to 6,
wherein at least one ring is formed by A and B and by C and D in formula (1) or (1'), and the ring formed by combining A and B together and the ring formed by combining C and D together do not simultaneously have the following partial structures (Z-1) and (Z-2).

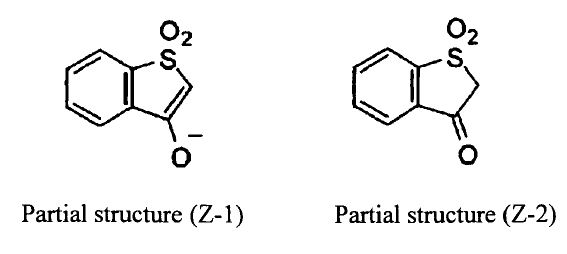

8. The optical information recording medium according to any of claims 1 to 7,
wherein in formula (1) or (1'), a ring formed by combining A and B together is represented by any of the following partial structures (Z-3) to (Z-8), or a ring formed by combining C and D together is represented by any of the following partial structures (Z-9) to (Z-14): 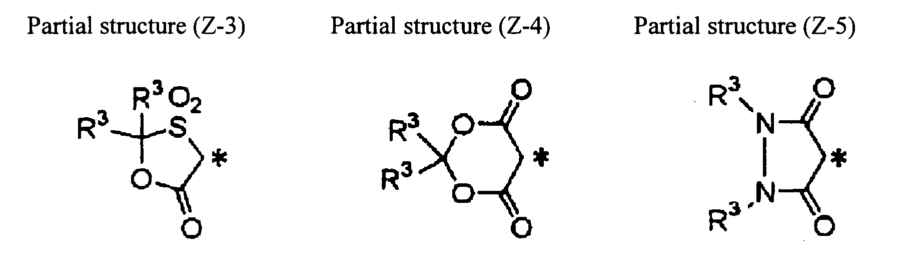 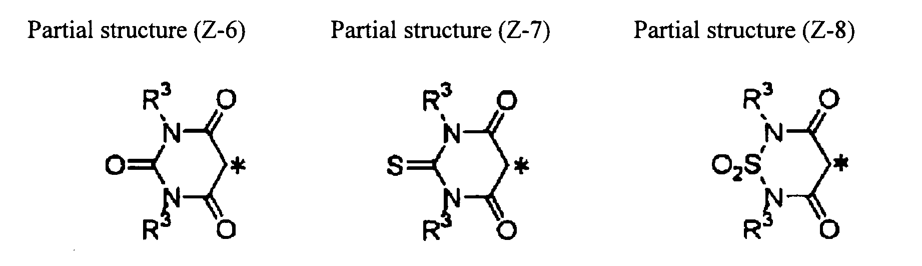 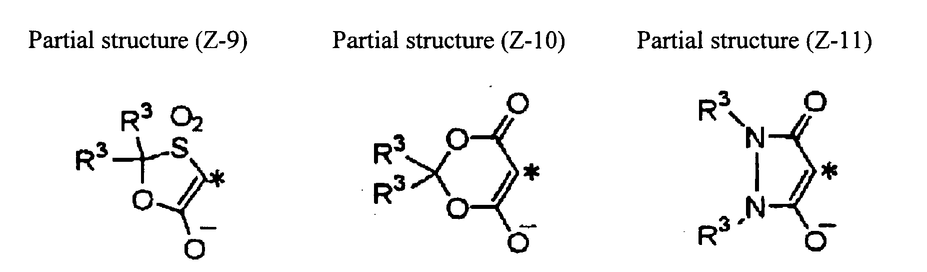 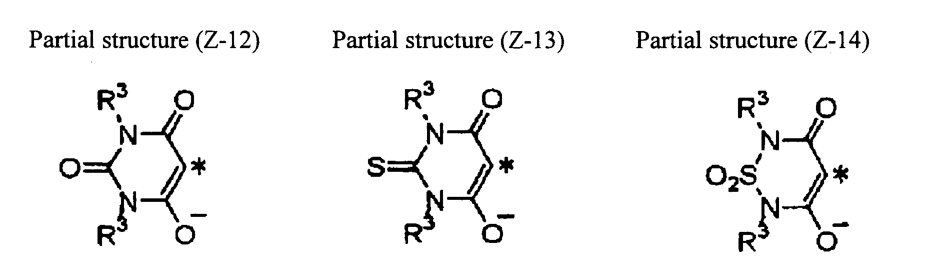 wherein in the partial structures, * represents a combined position; and
R³ represents a hydrogen atom or a substituent group, and a plurality of R³'s may be the same or different from each other, and the plurality of R³'s may be linked together through a linking group.

9. The optical information recording medium according to any of claims 1 to 3 and 5 to 8,
wherein m of the oxonol dye is 1.

10. The optical information recording medium according to any of claims 1 to 9,
wherein the absorption maximum of the anionic part of the oxonol dye is longer in wavelength than a laser beam used for recording.

11. The optical information recording medium according to any of claims 1 to 10,
wherein the absorption maximum of the anionic part of the oxonol dye ranges from 415 nm to 500 nm.

12. The optical information recording medium according to any of claims 1 to 11,
wherein the counter cation Y^{t+} is a metal complex cation.

13. The optical information recording medium according to any of claims 1 to 12,
wherein the counter cation Y^{t+} is a cation of a metal complex represented by any of formula (2) to formula (5): 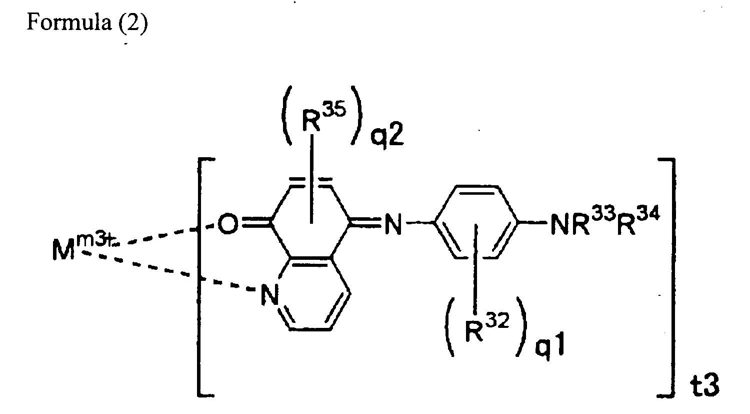 wherein M^{m3+} represents an m3-valent metal cation that is combined with a nitrogen atom and an oxygen atom;
R³² and R³⁵ each independently represents a substituent group;
R³³ and R³⁴ each independently represents a hydrogen atom, a substituted or unsubstituted alkyl group, a substituted or unsubstituted aryl group, or a substituted or unsubstituted heterocyclic group;
m3 represents an integer of 1 to 3;
q1 represents an integer of 0 to 4;
q2 represents an integer of 0 to 2; and
t3 represents an integer of 1 to 3,
when q1 is 2 or greater, two or more R³²'s may be the same or different from each other, and R³² and R³², or R³³ and R³⁴, or R³² and R³³, or R3z and R³⁴ may be combined with each other to form a ring, and
when q2 is 2, R³⁵ and R³⁵ may be the same or different from each other, and may be combined with each other to form a ring: 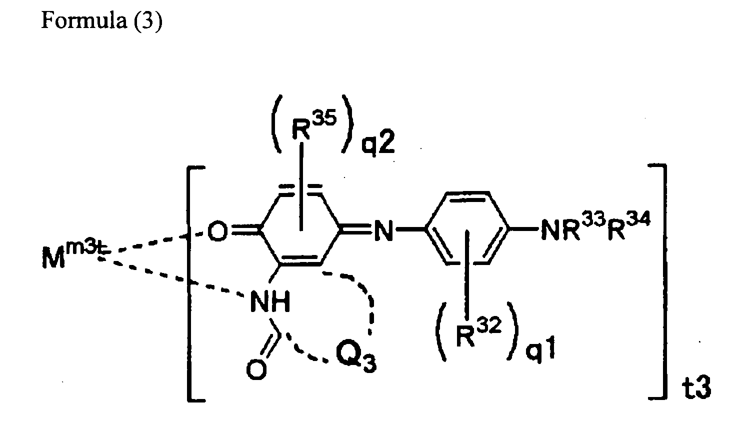
wherein M^{m3+} represents an m3-valent metal cation that is combined with a nitrogen atom and/or an oxygen atom;
R³² and R³⁵ each independently represents a substituent group;
R³³ and R³⁴ each independently represents a hydrogen atom, a substituted or unsubstituted alkyl group, a substituted or unsubstituted aryl group, or a substituted or unsubstituted heterocyclic group;
Q₃ represents a group that forms a nitrogen-containing heterocyclic ring;
m3 represents an integer of 1 to 3;
q1 represents an integer of 0 to 4;
q2 represents an integer of 0 to 2; and
t3 represents an integer of 1 to 3,
when q1 is 2 or greater, two or more R³²'s may be the same or different from each other, and R³² and R³², or R³³ and R³⁴, or R³² and R³³, or R³² and R³⁴ may be combined with each other to form a ring, and
when q2 is 2, R³⁵ and R³⁵ may be the same or different from each other, and may be combined with each other to form a ring: 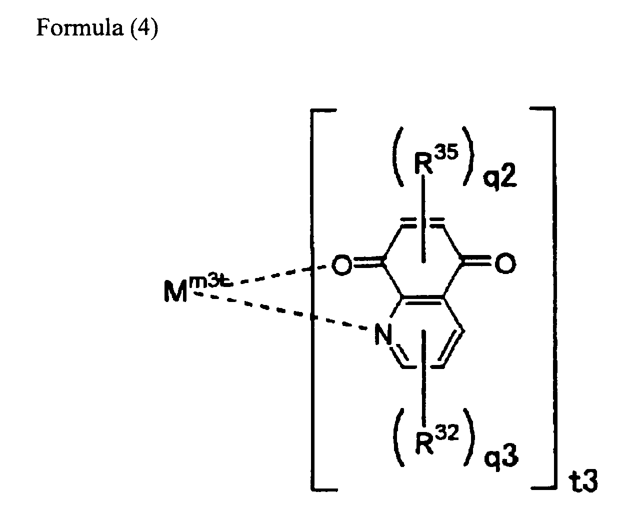
wherein M^{m3+} represents an m3-valent metal cation that is combined with a nitrogen atom and an oxygen atom;
R³² and R³⁵ each independently represents a substituent group;
m3 represents an integer of 1 to 3;
q2 represents an integer of 0 to 2;
q3 represents an integer of 0 to 3; and
t3 represents an integer of 1 to 3,
when q2 is 2, R³⁵ and R³⁵ may be the same or different from each other, and may be combined with each other to form a ring, and
when q3 is 2 or greater, two or more R³²'s may be the same or different from each other, and R³² and R³² may be combined together to form a ring: 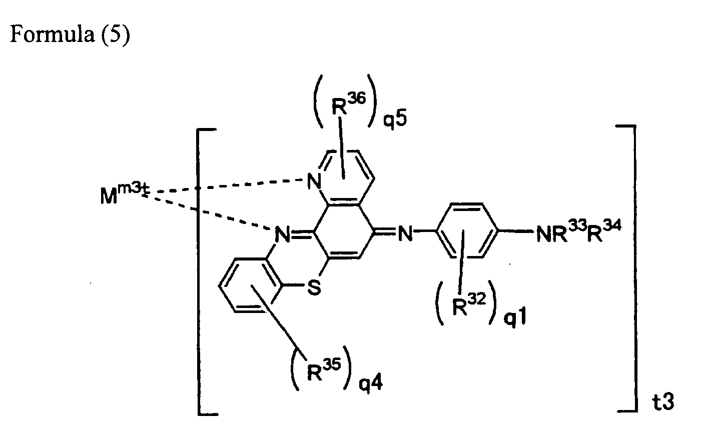
wherein M^{m3+} represents an m3-valent metal cation that is combined with a nitrogen atom;
R³², R³⁵, and R³⁶ each independently represents a substituent group;
m3 represents an integer of 1 to 3;
q1 represents an integer of 0 to 4;
q4 represents an integer of 0 to 4;
q5 represents an integer of 0 to 3; and
t3 represents an integer of 1 to 3,
when q1 is 2 or greater, two or more R³²'s may be the same or different from each other, and R³² and R³² may be combined together to form a ring,
when q4 is 2 or greater, two or more R³²'s may be the same or different from each other, and R³⁵ and R³⁵ may be combined together to form a ring, and
when q5 is 2 or greater, two or more R³⁶'s may be the same or different from each other, and R³⁶ and R³⁶ may be combined together to form a ring.

14. The optical information recording medium according to claim 13,
wherein the counter cation Y^{t+} is a metal complex cation represented by formula (2) of claim 13.

15. The optical information recording medium according to claim 13,
wherein the counter cation Y^{t+} is a metal complex cation represented by formula (3) of claim 13.

16. The optical information recording medium according to claim 13,
wherein the counter cation Y^{t+} is a metal complex cation represented by either formula (4) or formula (5) of claim 13.

17. The optical information recording medium according to claim 13,
wherein the counter cation Y^{t+} is a metal complex cation represented by formula (4) of claim 13.

18. The optical information recording medium according to claim 13,
wherein the counter cation Y^{t+} is a metal complex cation represented by formula (5) of claim 13.

19. The optical information recording medium according to any of claims 12 to 18,
wherein the counter cation Y^{t+} is a metal complex cation, and the metal in the metal complex cation is any of Cu, Ni, Fe, Co and Mn.

20. The optical information recording medium according to any of claims 1 to 19,
wherein a maximum absorption peak λmax of the cationic dye having a film absorption maximum wavelength in a range of longer wavelengths than a film absorption maximum wavelength of the anionic part of the oxonol dye is expressed as 500nm ≤ λmax.

21. An optical information recording medium having a recording layer capable of recording information by irradiating the recording layer disposed on a substrate with a laser beam of 440 nm or less,
wherein the recording layer comprises an oxonol dye represented by the following formula (8), provided that an oxonol dye outside the scope of formula (8) does not coexist in the recording layer: 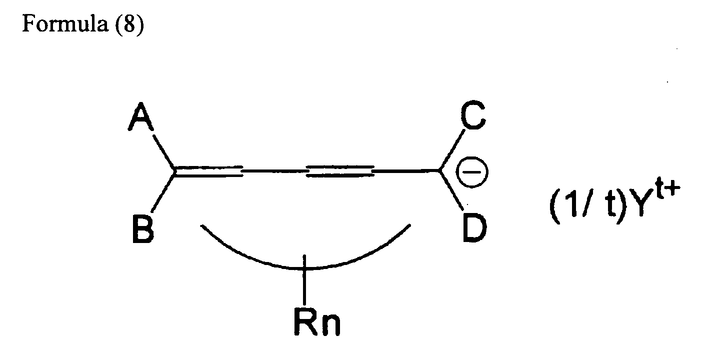 wherein an absorption maximum of an anionic part ranges from 415 nm to 500 nm;
Y^{t+} is a t-valent metal complex cation of any of metals Cu, Ni, Fe, Co and Mn, and a maximum absorption peak λmax of Y^{t+} is expressed as 500nm ≤ λmax;
t represents an integer of 1 to 4;
A, B, C and D each represents an electron-withdrawing group, provided that A and B and/or C and D may be combined with each other to form a ring, and when A and B and C and D are not combined with each other, A and B and C and D are electron-withdrawing groups in which the sum of Hammett's σp values of A and B and the sum of Hammett's σp values of C and D are each greater than 0.6;
R represents a substituent group on a methine carbon;
n represents an integer of 0 to 2m+1, when n is 2 or greater, a plurality of R's may be the same or different from each other, and the plurality of R's may be combined together to form a ring; and
t is an integer of 1 to 4.

22. An optical information recording medium having a recording layer capable of recording information by irradiating the recording layer disposed on a substrate with a laser beam of 440 nm or less,
wherein the recording layer comprises an oxonol dye represented by the following formula (9), provided that an oxonol dye outside the scope of formula (9) does not coexist in the recording layer: 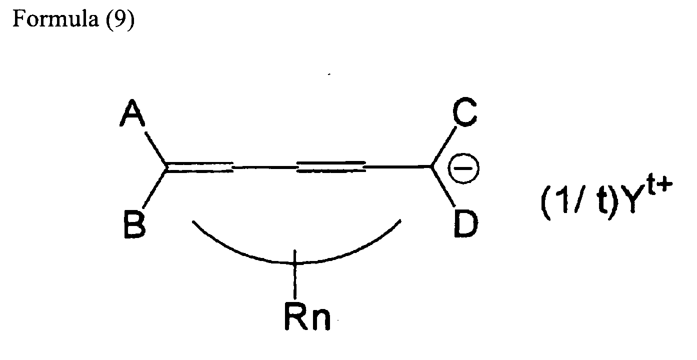 wherein an absorption maximum of an anionic part ranges from 415 nm to 500 nm;
Y^{t+} is a t-valent metal complex cation of any of metals Cu, Ni, Fe, Co and Mn, and a maximum absorption peak λmax of Y^{t+} is expressed as 500nm≤λmax;
t represents an integer of 1 to 4;
A, B, C and D each represents an electron-withdrawing group, provided that A and B and/or C and D may be combined with each other to form a ring, and have at least one ring, and when A and B and C and D are not combined with each other, A and B and C and D are electron-withdrawing groups in which the sum of Hammett's σp values of A and B and the sum of Hammett's σp values of C and D are each greater than 0.6, and the ring formed by combining A and B together is represented by any of the following partial structures (Z-3) to (Z-8), or the ring formed by combining C and D together is represented by any of the following partial structures (Z-9) to (Z-14);
R represents a substituent group on a methine carbon;
n represents an integer of 0 to 3, when n is 2 or greater, a plurality of R's may be the same or different from each other, and the plurality of R's may be combined with each other to form a ring; and
t is an integer of 1 to 4: 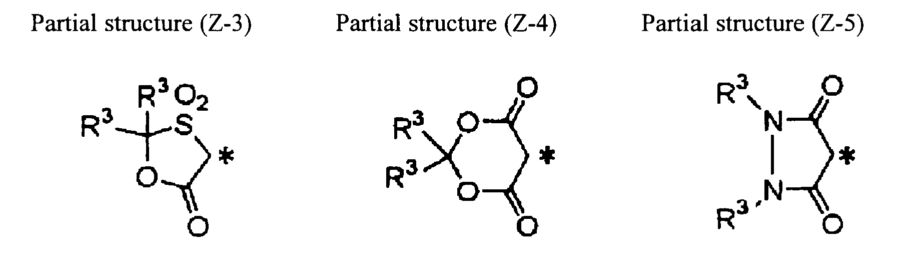 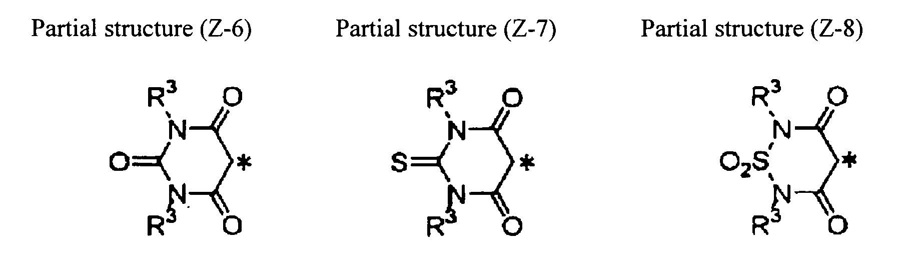 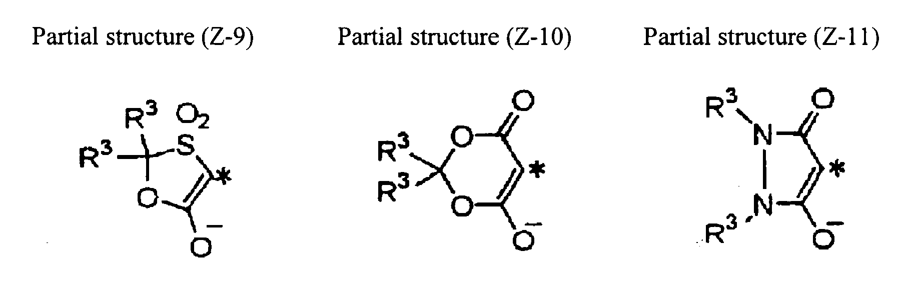 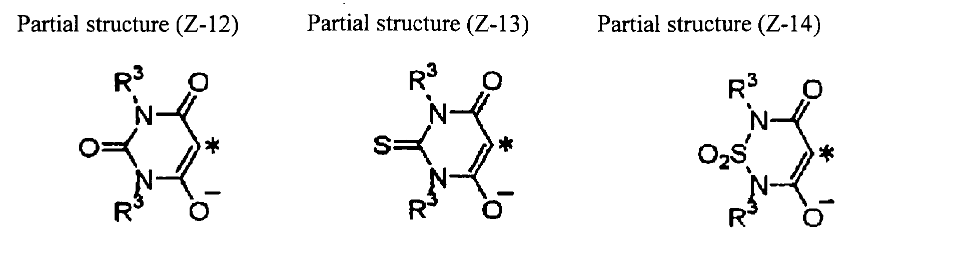
wherein R³ represents a hydrogen atom or a substituent group, and a plurality of R³'s may be the same or different from each other, and the plurality of R³'s may be linked together through a linking group.

23. An optical information recording medium having a recording layer capable of recording information by irradiating the recording layer disposed on a substrate with a laser beam of 440 nm or less,
wherein the recording layer comprises a metal complex comprising a metal complex cation represented by either formula (10) or formula (11), provided that an anion serving as a pair to the metal complex is not necessarily required to be an oxonol dye anion: 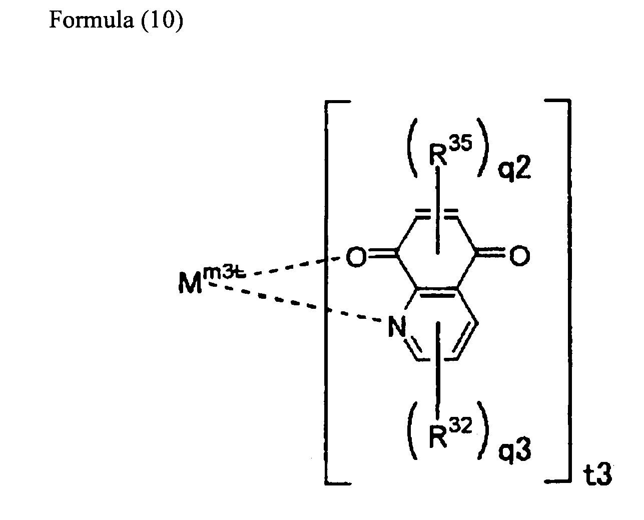 wherein M^{m3+} represents an m3-valent metal cation that is combined with a nitrogen atom and an oxygen atom;
R³² and R³⁵ each independently represents a substituent group;
m3 represents an integer of 1 to 3;
q2 represents an integer of 0 to 2;
q3 represents an integer of 0 to 3; and
t3 represents an integer of 1 to 3,
when q2 is 2, two or more R³⁵'s may be the same or different from each other, and R³⁵ and R³⁵ may be combined together to form a ring, and
when q3 is 2 or greater, two or more R³²'s may be the same or different from each other, and R³² and R³² may be combined together to form a ring: 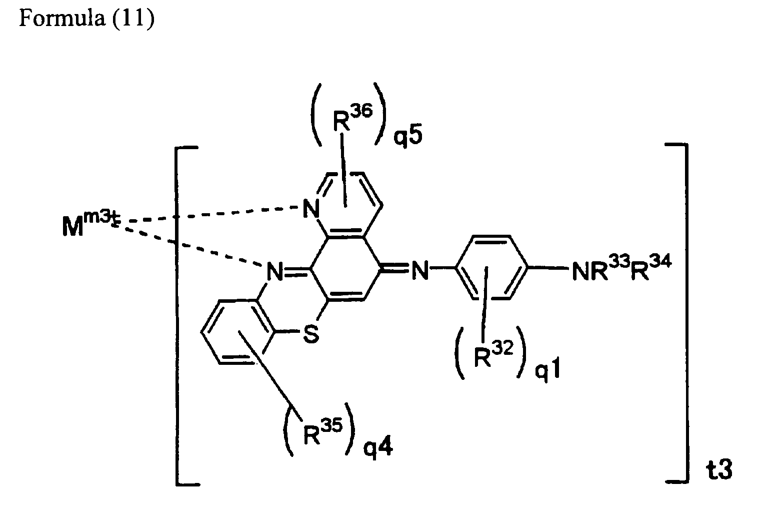
wherein M^{m3+} represents an m3-valent metal cation that is combined with a nitrogen atom;
R³², R³⁵, and R³⁶ each independently represents a substituent group;
m3 represents an integer of 1 to 3;
q1 represents an integer of 0 to 4;
q4 represents an integer of 0 to 4;
q5 represents an integer of 0 to 3; and
t3 represents an integer of 1 to 3,
when q1 is 2 or greater, two or more R³²'s may be the same or different from each other, and R³² and R³² may be combined together to form a ring,
when q4 is 2 or greater, two or more R³⁵'s may be the same or different from each other, and R³⁵ and R³⁵ may be combined together to form a ring, and
when q5 is 2 or greater, two or more R³⁶'s may be the same or different from each other, and R³⁶ and R³⁶ may be combined together to form a ring.

24. The optical information recording medium according to any of claims 1 to 20, which has a light-reflecting layer made of metal, besides the recording layer.

25. The optical information recording medium according to any of claim 1 to 21, which has a protective layer, besides the recording layer.

26. The optical information recording medium according to any of claims 1 to 22,
wherein the substrate is a transparent, disk-like substrate having a surface provided with a pre-groove having a track pitch of 0.2 µm to 0.5 µm, and the recording layer is provided on the surface of a side on which the pre-groove is formed.
